# EUROPEAN PATENT APPLICATION

(11) **EP 0 927 992 A1**
(43) Date of publication of application: **07.07.1999**
(21) Application number: 98932583.2
(22) Date of filing: 17.07.1998
(51) Int. Cl.: G11B 5/71, C10M 105/00, G11B 5/72, C10N 40/18

(54) **MAGNETIC RECORDING MEDIUM AND MAGNETIC RECORDER/REPRODUCER COMPRISING THE SAME**

(30) Priority: 17.07.1997 JP 19970192841; 17.07.1997 JP 19970192842; 17.07.1997 JP 19970192843; 17.07.1997 JP 19970192844
(71) Applicant: Sony Corporation, Tokyo 141-0001 (JP)
(72) Inventor: KISHII, Noriyuki, Sony Corporation, Tokyo 141-0001 (JP); KAMEI, Takahiro, Sony Corporation, Tokyo 141-0001 (JP); KURIHARA, Kenichi, Sony Corporation, Tokyo 141-0001 (JP); KOBAYASHI, Ken, Sony Corporation, Tokyo 141-0001 (JP); IWAMOTO, Yutaka, Sony Corporation, Tokyo 141-0001 (JP); MATSUZAWA, Nobuyuki, Sony Corporation, Tokyo 141-0001 (JP)
(74) Representative: Ayers, Martyn Lewis Stanley
(86) International application number: PCT/JP1998/003238
(87) International publication number: WO 1999/004390

(57) **Abstract**

A magnetic recording medium has a structure that specific monocyclic liquid crystal molecules, bicyclic liquid crystal molecules or tricyclic liquid crystal molecules are held on the outermost layer of the magnetic recording medium as a lubricant. A magnetic recording/reproducing apparatus incorporates a magnetic recording medium on which information is recorded and a magnetic head for recording and/or reproducing information to and from the magnetic recording medium and having a structure that a minimum distance between a geometric average surface of the surface of the magnetic recording medium and that of the magnetic head is 50 nm or smaller, wherein the magnetic recording medium holds the specific liquid crystal molecules on the outermost layer thereof. The lubricant contains liquid crystal molecules having characteristics between liquid and solid when e phase of the liquid crystal molecules has been changed from solid to liquid. Therefore, the lubricant is able to relieve kinetic energy imparted from sliding by dint of phase change. Thus, the magnetic recording medium and the magnetic recording/reproducing apparatus incorporating the magnetic recording medium are able to simultaneously satisfy continuous sliding resistance, low viscosity and large meniscus force.

## Description

### Technical Field

The present invention relates to a magnetic recording medium and a magnetic recording/reproducing apparatus using the magnetic recording medium, and more particularly to an improvement in a lubricant.

### Background Art

Magnetic recording mediums have widely been used as audio tapes, video tapes, backup data cartridges, floppy discs, hard discs and so forth. The magnetic recording mediums include so-called coating-type magnetic recording mediums each of which incorporates a magnetic layer formed by applying fine ferromagnetic powder and a binder to the surface of a non-magnetic support member and by drying the non-magnetic support member. Moreover, the magnetic recording mediums include so-called thin metal type magnetic recording mediums each of which incorporates a magnetic layer formed by coating a non-magnetic support member with a ferromagnetic metal material by evaporation or the like.

The magnetic recording medium has been required to have a flat and smooth magnetic layer in order to minimize a spacing loss. When a dense recording operation is performed, a short recording wavelength must be employed. In this case, an influence of the roughness of the surface is easily exerted on the recording operation. Therefore, control of the roughness of the surface is an important factor.

If the magnetic layer has improved smoothness, actual contact areas with sliding members including magnetic heads and guide rollers are enlarged. Therefore, magnetic recording mediums incorporating magnetic layers having excellent smoothness encounter enlargement of coefficients of friction. Thus, agglutination (so-called adhesion) with a sliding member easily occur during transportation. Therefore, there arises a problem of an unsatisfactory transportation characteristic and insufficient durability.

If the surface of a magnetic layer of a magnetic tape and a guide pin of an 8-mm video deck have a great coefficient of friction, the magnetic tape encounters a stick slip. Thus, a so-called tape noise is produced, causing a scar of a reproduced image to occur. If the magnetic head quickly slides on the same position on the tape as m a pause state, a large coefficient of friction between the surface of the magnetic layer of the magnetic tape and the magnetic head raises problems of wear of the magnetic layer and reduction in a reproduction output level caused from the wear of the magnetic layer.

A magnetic recording/reproducing apparatus of a type typified by a hard disc has a structure that the magnetic head is in contact with the disc when the disc is stopped. When the disc is rotated at high speed when the apparatus has been turned on, the magnetic head floats on the surface of the disc. In the above-mentioned state, recording/reproduction is performed, that is, a floating type operation is performed. In the floating type structure, the magnetic head slides on the surface of the disc from start of disc rotation when the apparatus has been turned on to floating of the magnetic head and from contact of the magnetic head with the disc to interruption of the rotation of the disc when the operation is completed. Therefore, friction between the magnetic head and the disc raises a critical problem, causing wear and size reduction of the magnetic recording medium and the magnetic head to occur. If damage caused from wear reaches the magnetic layer, so-called head crash occurs with which information recorded on the magnetic layer is crashed.

To overcome the above-mentioned problems, an attempt has been made to cause a lubricant to be included in the magnetic layer of the magnetic recording medium or to coat the surface of the magnetic layer so as to form a lubricant layer for the purpose of reducing the coefficient of friction. Another attempt has been made to coat the magnetic layer with a protective layer made of oxide, carbide, nitride or the like. Moreover, the surface of the protective layer is coated with a lubricant so as to form a lubricant film so as to improve wear resistance of the magnetic recording medium in order to prevent head crash.

The lubricant for use in the magnetic recording medium must have rigorous characteristics because of the purpose of using the lubricant. Therefore, the following characteristics are required.
(1) Excellent heat resistance and chemical stability.
(2) Excellent low temperature characteristic with which a predetermined lubricating effect can be obtained even if the lubricant is used in a cold region.
(3) Considerably reduced thickness because a spacing from the magnetic head raises a problem and a satisfactory lubricating characteristic even if the thickness is reduced.
(4) Long-term durability and continuation of the lubricating effect for long time.

A variety of lubricants have been investigated to realize the above-mentioned characteristics. A main portion of lubricants which have been used at present includes higher fatty acid, such as stearic acid, its ester, perfluoroalkyl polyether compounds and fluorine lubricants, such as perfluoroalkyl compounds.

Since the density of magnetic recording/reproducing apparatus have rapidly been raised in recent years, the amount of floating of the magnetic head has been reduced considerably. As a limit of the amount of floating, a method in which the magnetic head is always brought into contact with the surface of a magnetic recording medium, that is, a so-called contact method has been suggested.

When the amount of floating is reduced, time for which the magnetic head and the surface of the magnetic recording medium are brought into contact with each other and slide relatively is inevitably elongated. Therefore, continuous sliding resistance of the lubricating film must be improved to reduce the dynamic coefficient of friction and prevent wear.

Since reduction in the amount of floating causes the surface roughness and waviness of the disc to be reduced, a great maximum static frictional force (hereinafter called "adhesion") is easily produced between the magnetic head and the disc. The adhesion causes inoperative disc and damage of the head to take place. Therefore, the viscosity of the lubricating film must be reduced.

The contact method causes the head slider and the magnetic disc to always be in contact with each other. If vibrations of some kind (in particular, external vibrations) cause the head slider to float from the surface of the magnetic disc, the head slider again collides with the magnetic disc. In this case, head crash sometimes occurs. To prevent the above-mentioned phenomenon, meniscus force which is exerted between the lubricating film and the head slider must be used to adsorb the head slider to the surface of the magnetic disc.

Therefore, when the short float method or the contact method is employed, the lubricating film must be constituted by a lubricant enabling continuous sliding resistance of the lubricating film, low viscosity and high meniscus force to be realized simultaneously.

However, the continuous sliding resistance, low viscosity and high meniscus force are mutually contradictory in general. Therefore, the conventional lubricant cannot simultaneously realize the foregoing requirements.

If the thickness of the lubricating layer is reduced to realize the continuos sliding resistance, the low viscosity cannot easily be realized. If the thickness of the lubricating film is reduced to prevent adhesion, the continuous sliding resistance is reduced and the coating ratio is lowered.

Perfluoropolyether polymer which has been considered to be employed because of excellent low surface energy, low viscosity, heat resistance and chemical stability has the following problems.

The magnetic recording/reproducing apparatus adapted to the short float method or the contact method encounters abrasion of the surface of the head slider when the head slider (mainly made of an oxide type material such as Al₂O₃/TiC) and the surface of the magnetic disc. In this case, a fact is known that a very active new surface is exposed. Since the perfluoropolyether polymer can considerably easily be decomposed by the active new surface, the continuous sliding resistance is reduced. Thus, there arises a problem in that products of the decomposition adhere to the surfaces of the magnetic head and the head slider.

Since the perfluoropolyether polymer is a fluorine compound, its surface has low surface energy and water repellency when the perfluoropolyether polymer is applied to the surface of the magnetic recording medium. That is, the meniscus force which is exerted between the surface of the lubricating film and the surface of the head slider is reduced. In this case, the very short floating type or contact type magnetic recording/reproducing apparatus cannot cause the head slider to stably be disposed on the magnetic recording medium. As a result, vibrations of the magnetic head or the like are easily produced. Thus, there arises a problem of head crash or the like.

As described above, the conventional lubricants have limits for the continuous sliding resistance, low viscosity and large meniscus force which must simultaneously be realized.

### Disclosure of the Invention

An object of the present invention is to provide a magnetic recording medium having a lubricant simultaneously realizing continuous sliding resistance, low viscosity and large meniscus force and a magnetic recording/reproducing apparatus incorporating the magnetic recording medium.

Inventors of the present invention have energetically performed investigations. A lubricant which is held in the outermost layer of a magnetic recording medium is made of any one of a specific monocyclic liquid crystal molecules, bicyclic liquid crystal molecules and tricyclic liquid crystal molecules. In the foregoing case, an excellent lubricating effect can be obtained because continuous sliding resistance, low viscosity and large meniscus force can simultaneously be realized. Thus, the present invention has been achieved.

That is, a magnetic recording medium according to the present invention comprises a lubricant containing any one of monocyclic liquid crystal molecules expressed by general formula (A) or (A'), bicyclic liquid crystal molecules expressed by general formula (B) or (B') or bicyclic liquid crystal molecules expressed by general formula (C) or (C") and tricyclic liquid crystal molecules expressed by general formula (D) or (D'), wherein the lubricant is held in an outermost layer thereof.

L-X¹-R general formula (A)

where X¹ is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group and a hydroxyimino group, or an aryl group, an alkyl group, an oxycarboxyl group, a carboxyl group, a carbonyl group, an ether group, an amide group or an amino group replaced by any one of the foregoing groups.

L-X² general formula (A')

where X² is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups.

L-X-Y¹ general formula (B)

where each of X and Y¹ is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups.

-L-X-Y²-R general formula (B')

where each of X and Y² is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups. 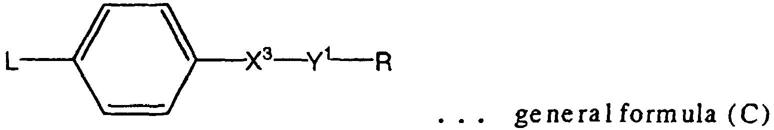 where X³ is an atomic group having a cyclic structure, Y¹ is an atomic group having a cyclic structure, and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups. 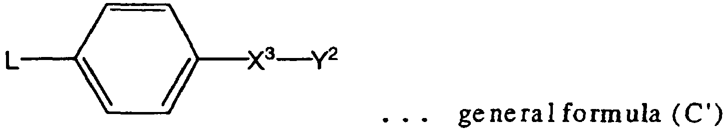 where X³ is an atomic group having a cyclic structure, Y² is an atomic group having a cyclic structure, and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the fore going groups.

Y³-X³-Y⁴ general formula (C")

where X³ is an atomic group having a cyclic structure and each of Y³ and Y⁴ is an atomic group having a cyclic structure.

L-W-X⁴-Y⁵ general formula (D)

where each of W, X⁴ and Y⁵ is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups.

L-W-X⁴-Y⁶-R general formula (D')

where each of W, X⁴ and Y⁶ is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups.

The above-mentioned lubricant may be applied to the surface of the magnetic layer or contained in the magnetic layer.

If the magnetic layer is a thin metal-magnetic-film and the protective film is formed on the thin metal-magnetic-film, the lubricant may be applied to the surface of the protective film.

If a back coat layer is formed on the surface of the non-magnetic support member opposite to the surface on which the magnetic layer is formed, the lubricant may be applied to the surface of the backcoat layer or contained in the backcoat layer. If a non-magnetic layer is formed between the non-magnetic support member and the magnetic layer, the lubricant may be contained in the non-magnetic layer.

The magnetic recording/reproducing apparatus according to the present invention comprises a magnetic recording medium for recording information and a magnetic head for recording and/or reproducing information on the magnetic recording medium, wherein a minimum distance between a geometric average surface of the magnetic recording medium and that of the magnetic head is 50 nm or smaller the magnetic recording medium comprises a lubricant containing any one of monocyclic liquid crystal molecules expressed by general formula (A) or (A'), bicyclic liquid crystal molecules expressed by general formula (B) or (B') or bicyclic liquid crystal molecules expressed by general formula (C) or (C") and tricyclic liquid crystal molecules expressed by general formula (D) or (D'), wherein the lubricant is held in an outermost layer thereof.

The lubricant for use in the present invention contains liquid crystal molecules having a characteristic between liquid and solid when phase transition from solid to liquid occurs. Therefore, the lubricant according to the present invention is able to relieve kinetic energy imparted from sliding by phase transition.

The lubricant containing the liquid crystal molecules is a low viscous material because the lubricant having the characteristic of solid exists when sliding energy is small (or no friction occurs). If sliding energy is imparted because of collision, transition of the phase of the lubricant takes place. Thus, the lubricant has the characteristics of liquid so that the lubricant is moved to the magnetic head and generates meniscus force. As described above, the phase of the lubricant containing liquid crystal molecules according to the present invention is changed by friction energy obtained from sliding so as to be liquid. Therefore, both of the low viscosity and large meniscus force can be realized.

Each of liquid crystal molecules has nematic phase or smectic phase when its temperature is not lower than room temperature (20°C). The major axes of liquid crystal molecules in the nematic phase/smectic phase are easily aligned perpendicularly to the surface of the substrate. Therefore, a thick film is formed on the substrate. Hence, excellent durability can be realized even if sliding is repeated and the molecules of the lubricant are gradually worn. On the other hand, the major axes of liquid crystal molecules in the cholesteric phase are easily aligned in parallel to the surface of the substrate. Therefore, when sliding is repeated and thus the molecules of the lubricant are gradually worn, the molecules of the lubricant are easily worn (separated). Thus, it can be considered that satisfactory durability cannot be obtained.

Since liquid crystal molecules in the nematic phase/smectic phase are oriented in a predetermined direction, high local viscosity is expected. On the other hand, liquid crystal in the cholesteric phase forms a layer such that its oriented surface is twisted. Therefore, forces among molecules are averaged. Thus, high local viscosity obtainable from orientation cannot be obtained. As a result, the foregoing liquid crystal is disadvantageous to relieve friction energy caused from sliding.

As described above, the lubricant for use in the present invention is able to relieve kinetic energy imparted from sliding by phase transition thereof. Since the phase is changed to liquid, all of lubricating characteristics including continuous sliding resistance, low viscosity and large meniscus force can simultaneously be satisfied.

The magnetic recording medium and the magnetic recording/reproducing apparatus according to the present invention incorporates the above-mentioned lubricating layer in the outermost layer thereof. Excellent lubricating performance can be maintained in a variety of conditions for use. Moreover, the lubricating effect can be continued for long time, thus causing excellent transportation characteristic, wear resistance and durability to be obtained.

Moreover, the lubricant for use in the present invention can be applied with hydrocarbon solvent, such as toluene or acetone, as compared with the conventional fluorine lubricant which can be applied only with fluorine solvent. Load which is exerted to the environment can be reduced.

### Best Mode for Carrying Out the Invention

A magnetic recording medium according to the present invention will now be described.

The magnetic recording medium according to the present invention is characterized in that at least a magnetic layer is formed on a non-magnetic support member thereof and a lubricant containing liquid crystal molecules is held in the outermost layer thereof.

A liquid crystal molecule which can be used as the lubricant is exemplified by a monocyclic liquid crystal molecule expressed by general formula (A) or (A').

L-X¹-R general formula (A)

where X¹ is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group and a hydroxyimino group, or an aryl group, an alkyl group, an oxycarboxyl group, a carboxyl group, a carbonyl group, an ether group, an amide group or an amino group replaced by any one of the foregoing groups.

L-X² general formula (A')

where X² is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkylgroup, an aryl group, a hydroxyimino group, or an aryl group, an alkyl group, an oxycarboxyl group, a carboxyl group, a carbonyl group, an ether group, an amide group or an amino group replaced by any one of the foregoing groups.

In general formula (A), it is preferable that the atomic group indicated by X¹ is selected from cyclic structures expressed by general formulas (X¹-1) to (X¹-18). 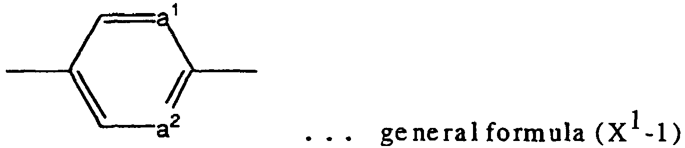 where each of a¹ and a² is a carbon atom or a nitrogen atom and the bond constituting the ring is a single bond or a double bond. 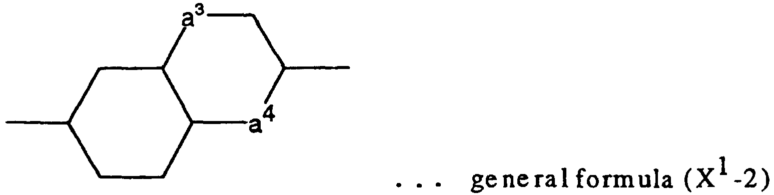 where each of a³ and a⁴ is a carbon atom, a nitrogen atom or an oxygen atom and the bond constituting the ring is a single bond or a double bond. 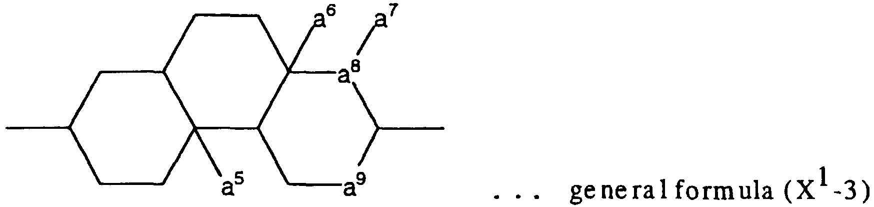 where a⁵ is hydrogen or a methyl group, a⁶ is hydrogen, a methyl group or a cyano group, each of a⁸ and a⁹ is an oxygen atom or a carbon atom, a⁷ is an oxygen atom or the same may be omitted and a bond constituting the ring is a single bond or a double bond. 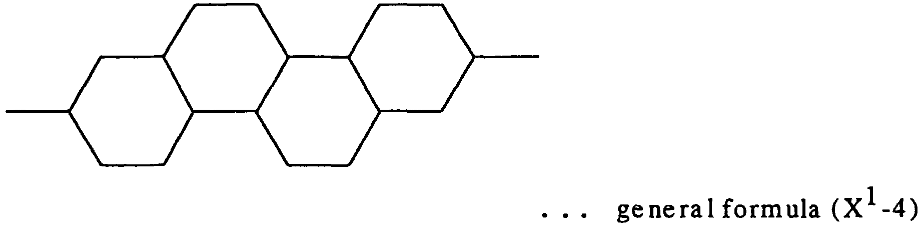 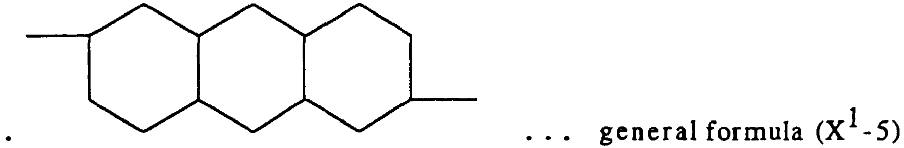 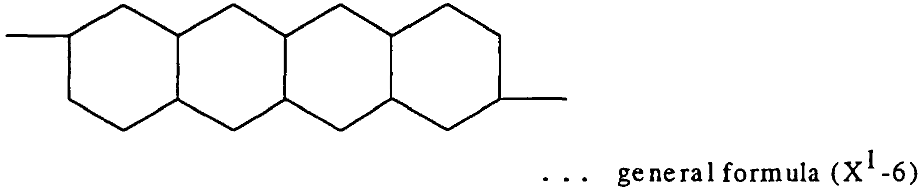 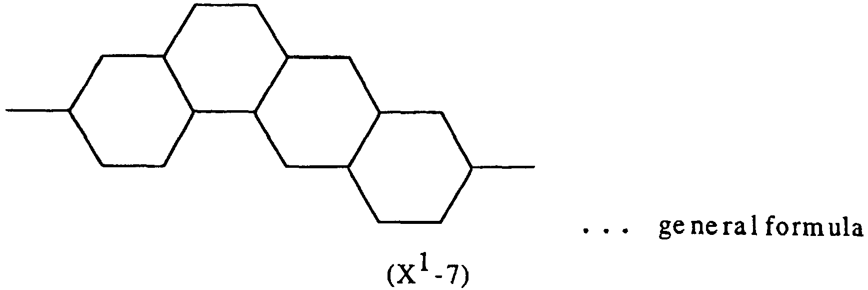 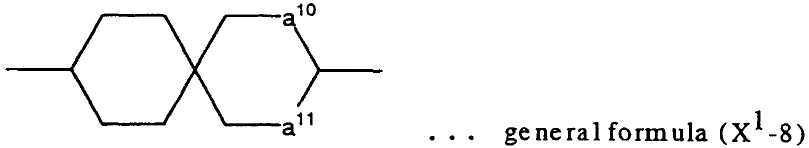 where each of a¹⁰ and a¹¹ is an oxygen atom or a sulfur atom. 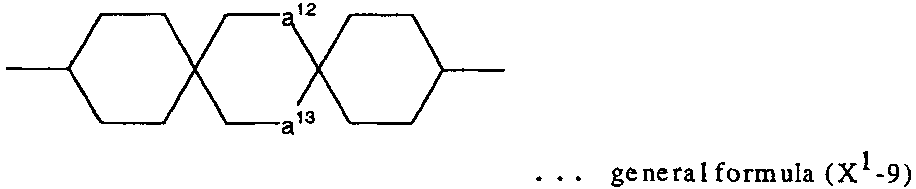 where each of a¹² and a¹³ is an oxygen atom or a sulfur atom. 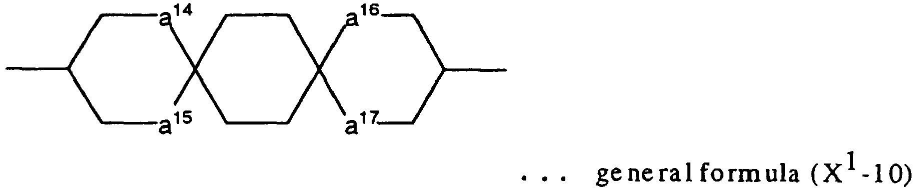 where each of a¹⁴, a¹⁵, a¹⁶ and a¹⁷ is an oxygen atom or a sulfur atom. 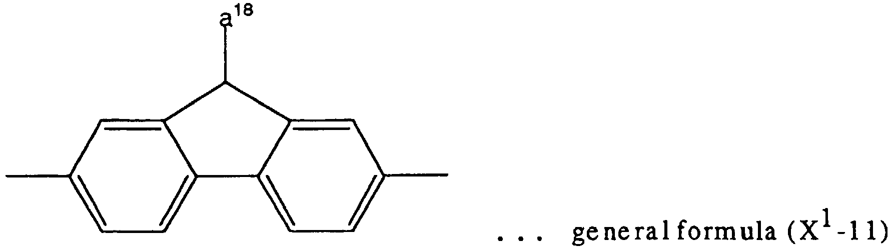 where a¹⁸ is any one of a hydrogen group, a bromine group, a methyl group, an amino group and an alkylamino group.

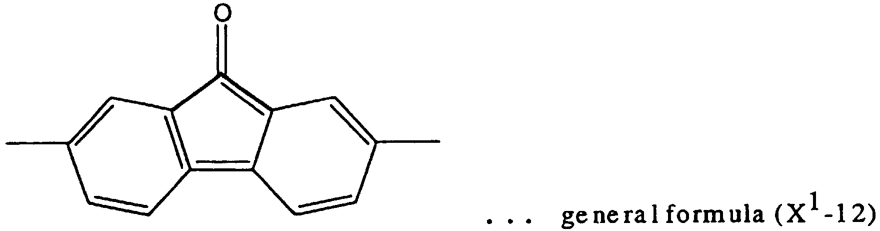

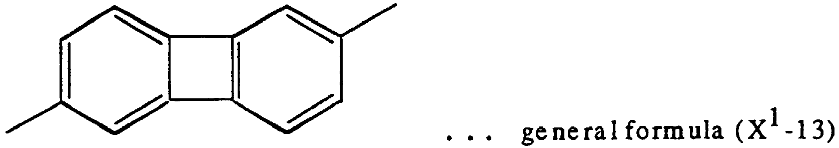

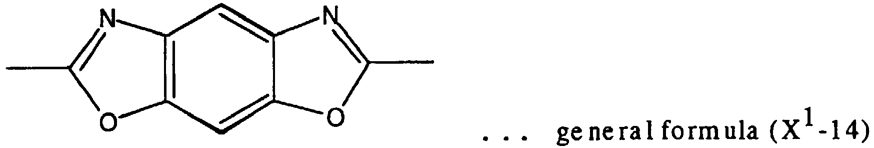

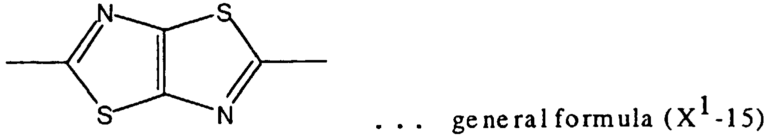

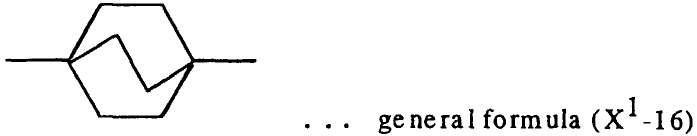

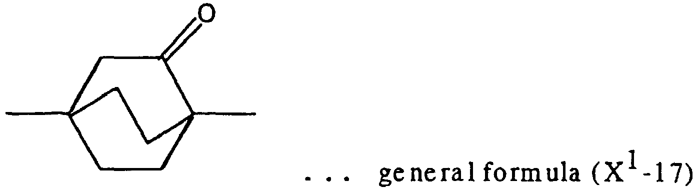

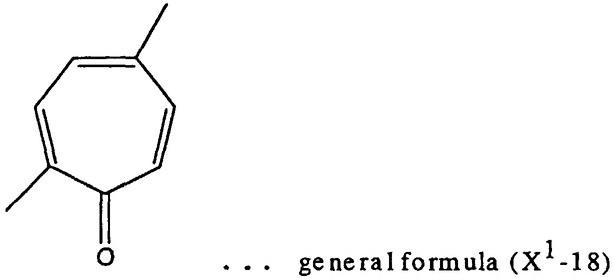

It is preferable that the atomic group included in general formula (A') and expressed by X² is selected from cyclic structures expressed by general formulas (X²-1) or (X²-2).

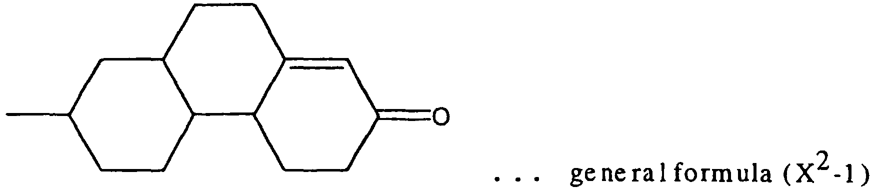

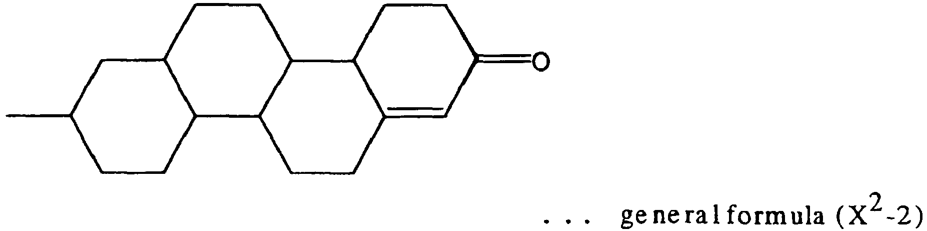

The liquid crystal molecule which can be employed as the lubricant may be a bicyclic liquid crystal molecule expressed by general formula (B) or (B').

L-X-Y¹ general formula (B)

where each of X and Y¹ is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups.

-L-X-Y²-R general formula (B')

where each of X and Y² is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups.

It is preferable that the atomic group included in the liquid crystal molecule expressed by general formula (B) or (B') and represented by X is a six-membered ring structure expressed by the following general formula (X-1) or a condensed ring structure expressed by the following general formula (X-2). 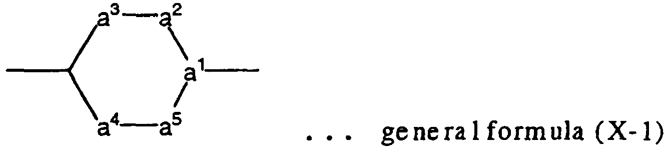 where a¹ is a carbon atom or a nitrogen atom, each of a², a³, a⁴ and a⁵ is a carbon atom or an oxygen atom and the bond constituting the ring is a single bond or a double bond. 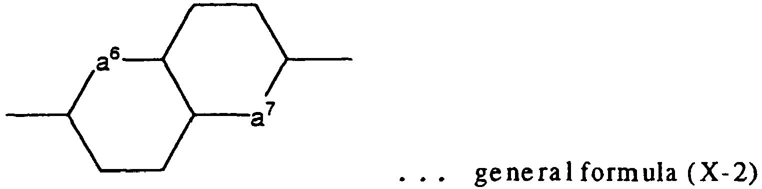 where a⁶ is a carbon atom or an oxygen atom and a⁴ is a carbon atom or a nitrogen atom.

It is preferable that the atomic group included in the liquid crystal molecule expressed by general formula (B) and expressed by Y¹ is selected from cyclic structures expressed by the following general formulas (Y-1) to (Y-6). 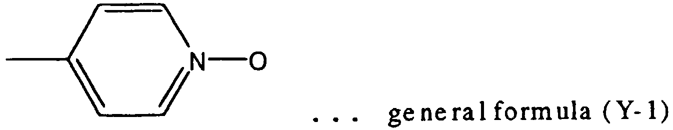 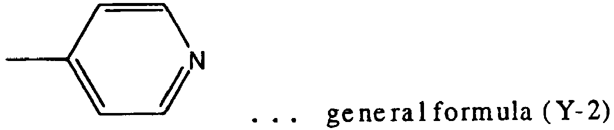 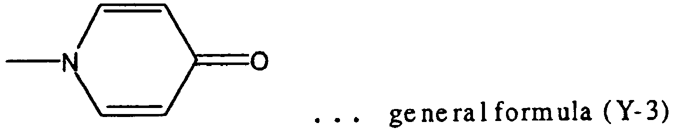 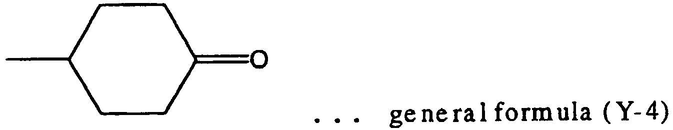 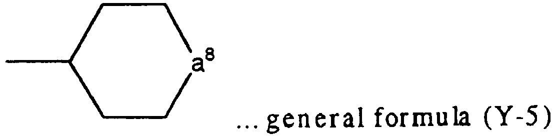 where a⁸ is any one of O, S, SO and SO₂.

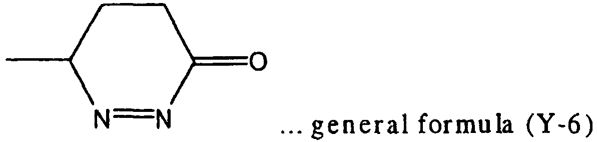

It is preferable that the atomic group included in the liquid crystal molecule expressed by general formula (B') and expressed by Y² is selected from cyclic structures expressed by general formulas (Y-7) to (Y-31). 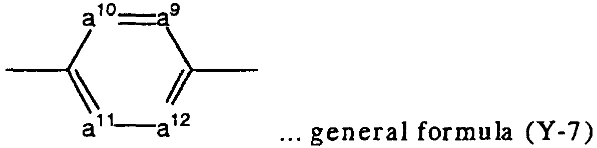 where each of a⁹, a¹⁰, a¹¹ and a¹² is a carbon atom or a nitrogen atom and N oxide may be formed in a case of the nitrogen atom. 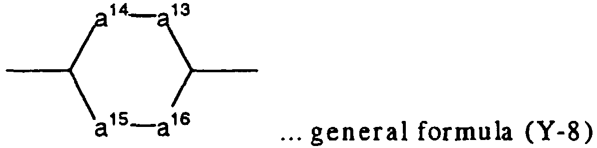 where arbitrary two atoms which are included in a¹³, a¹⁴, a¹⁵ and a¹⁶ and which are not adjacent to each other may be replaced by oxygen or sulfur atoms. 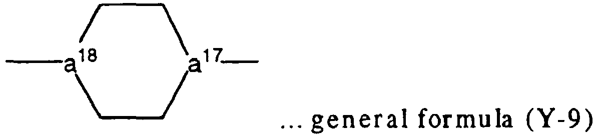 where at least either of a¹⁷ or a¹⁸ is replaced by a nitrogen atom. 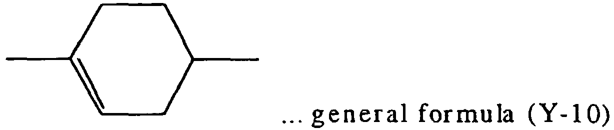 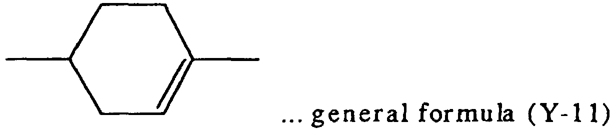 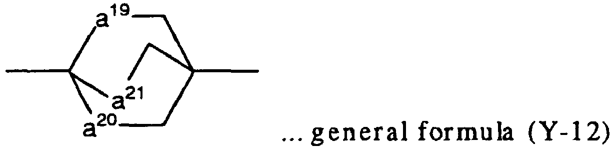 where each of a¹⁹, a²⁰ and a²¹ is a carbon atom or an oxygen atom. 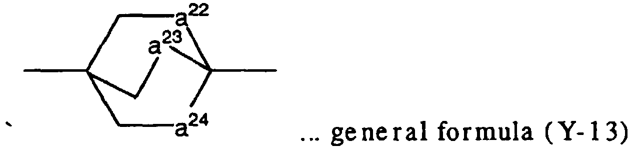 where each of a²², a²³ and a²⁴ is a carbon atom or an oxygen atom. 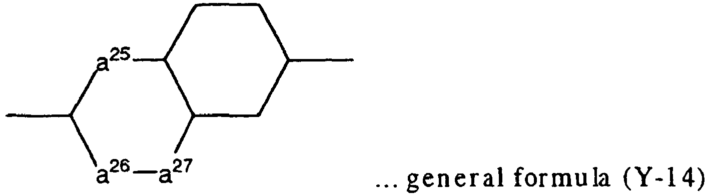 where each of a25, a26 and a27 is a carbon atom, a nitrogen atom or an oxygen atom and the bond constituting the ring is a single bond or a double bond. 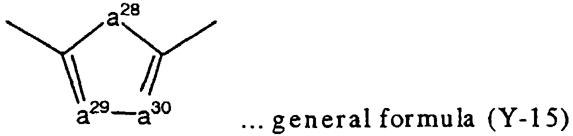 where a²⁸ is any one of a carbon atom, a nitrogen atom and a sulfur atom and each of a²⁹ and a³⁰ is a carbon atom or a nitrogen atom. 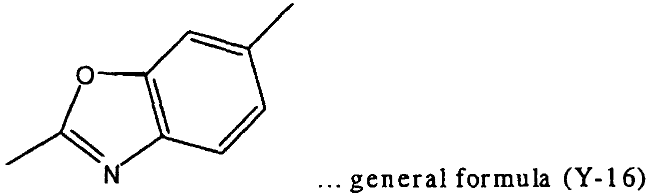 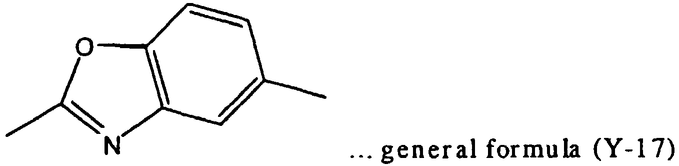 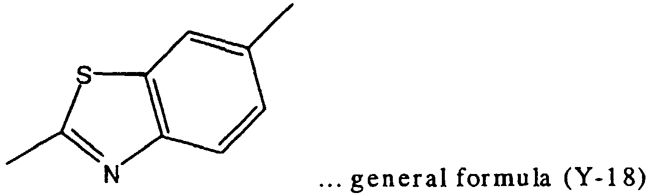 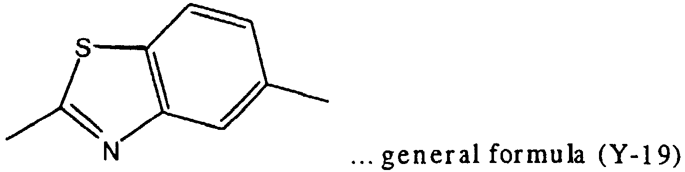 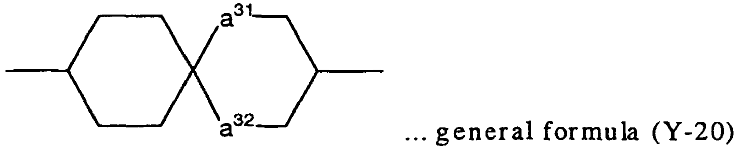 where each of a³¹ and a³² is an oxygen atom or a sulfur atom. 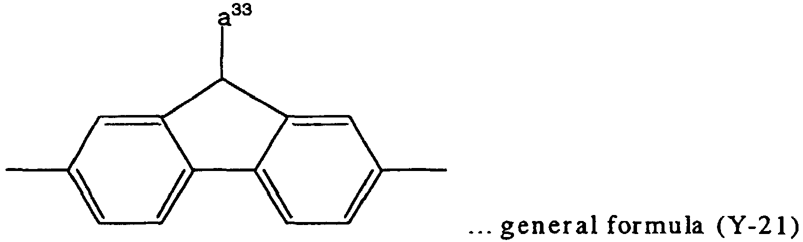 where a³³ is any one of a hydrogen atom, a methyl group, a bromine atom or an alkylamino group.

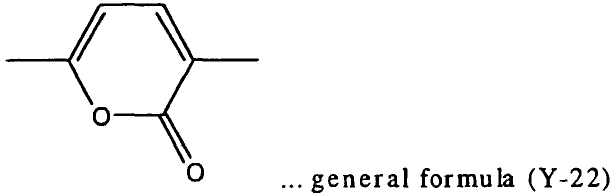

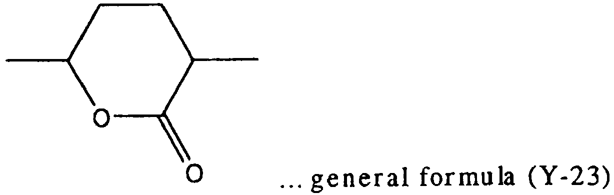

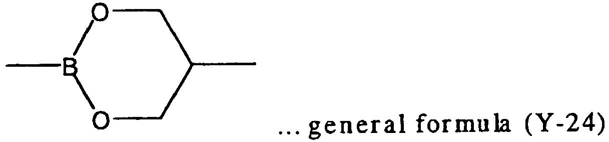

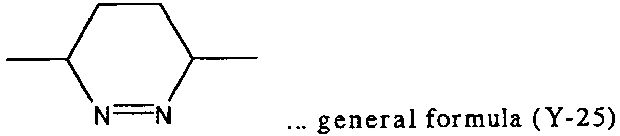

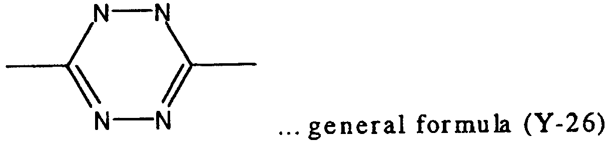

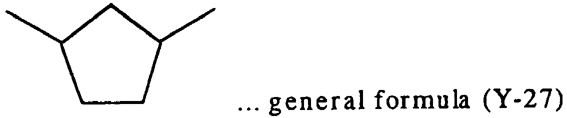

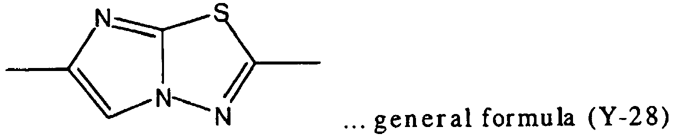

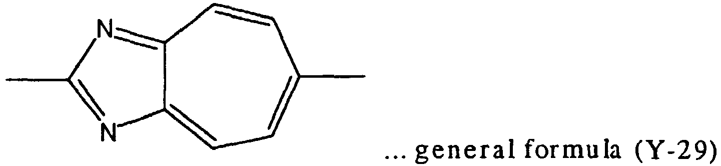

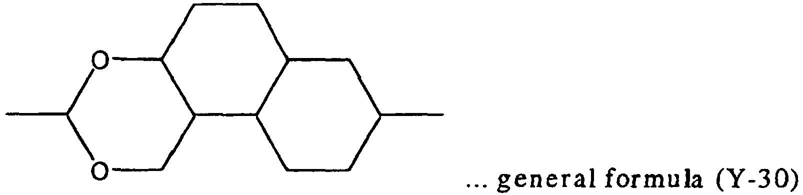

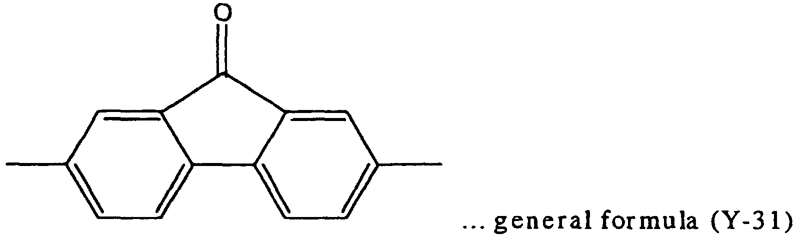

The liquid crystal molecule which can be used as the lubricant may be a bicyclic liquid crystal molecule expressed by any one of general formulas (C) to (C") 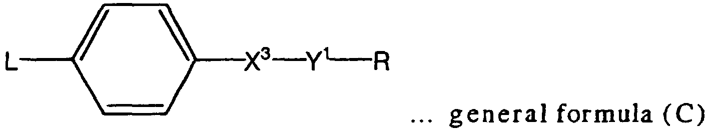 where X³ is an atomic group having a chain structure, Y¹ is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group and a hydroxyimino group, or an aryl group, an alkyl group, an oxycarboxyl group, a carboxyl group, a carbonyl group, an ether group, an amide group or an amino group replaced by any one of the foregoing groups. 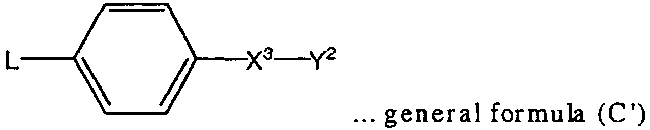 where X³ is an atomic group having a chain structure, Y² is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group and a hydroxyimino group, or an aryl group, an alkyl group, an oxycarboxyl group, a carboxyl group, a carbonyl group, an ether group, an amide group or an amino group replaced by any one of the foregoing groups.

Y³-X³-Y⁴ general formula (C")

where X³ is an atomic group having a chain structure and each of Y³ and Y⁴ is an atomic group having a cyclic structure.

The atomic group included in the liquid crystal molecule expressed by any one of general formulas (C) to (C") and expressed by X³ crosslinks cyclic structures disposed on the two sides thereof and it is preferable that it is selected from chain structures expressed by any one of the following general formulas (X³-1) to (X³-23). 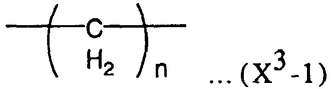 where n is 1 or 2. 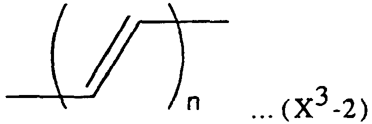 where n is 1 or 2. 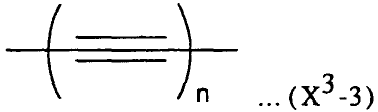 where n is 1 or 2. 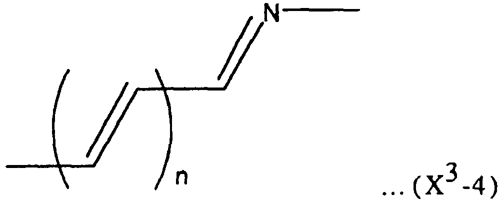 where n is 0, 1, 2 or 3. 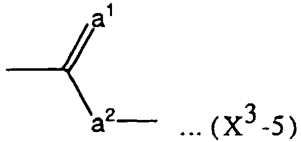 where a¹ is O or S and a² is any one of O, S, CH₂, Se, Te and NH. 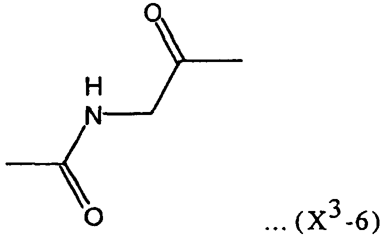 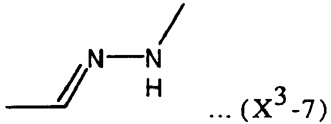 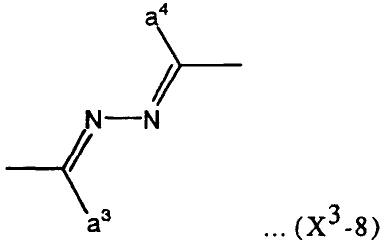 where a³ is H or CH₃ and a⁴ is H or CH₃. 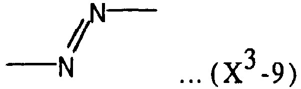 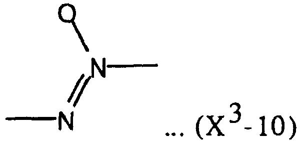 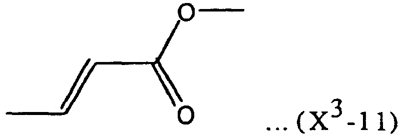 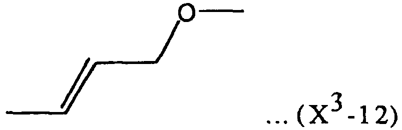 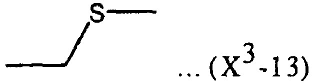 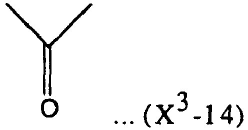 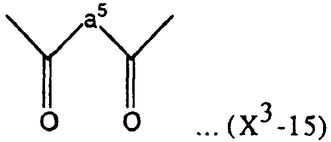 where a⁵ is any one of CH₂, O, O-O, S-S and NH-NH. 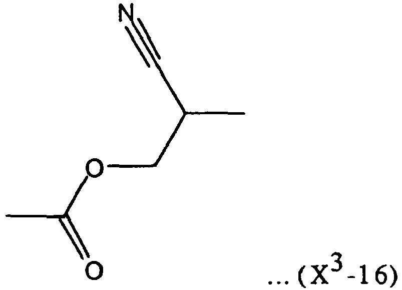 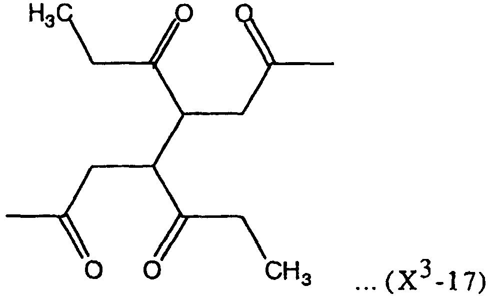 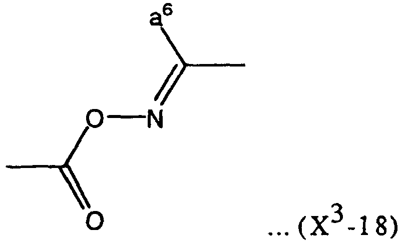 where a⁶ is any one of H, a methyl group, an ethyl group and CN. 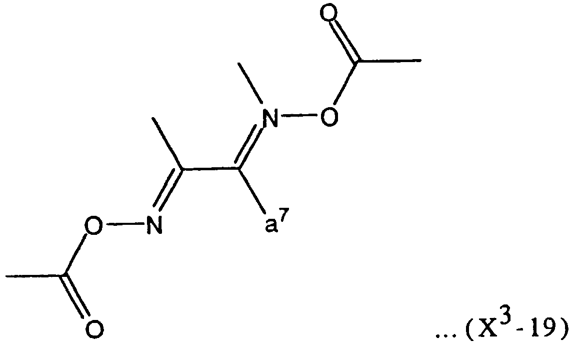 where a⁷ is an alkyl group.

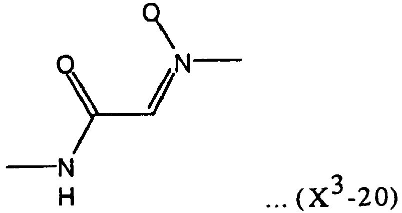

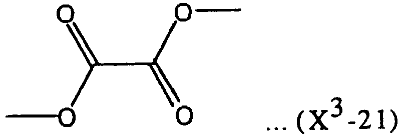

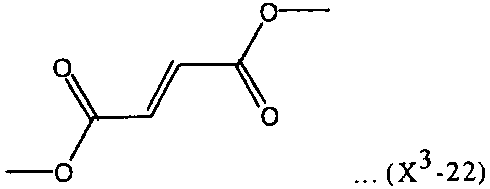

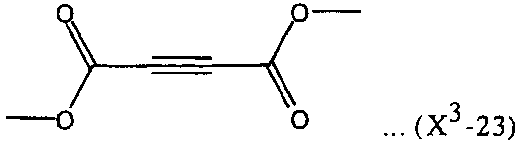

It is preferable that the atomic group included in general formula (C) and expressed by Y¹ is selected from cyclic structures expressed by the following general formulas (Y¹-1) to (Y¹-32). 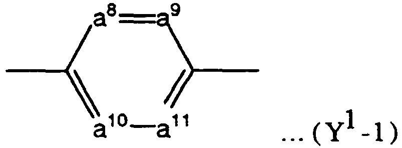 where each of a⁸, a⁹, a¹⁰ and a¹¹ is a carbon atom or a nitrogen atom. 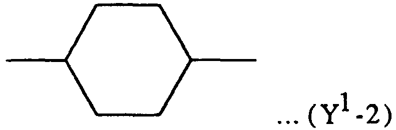 where either of bonds constituting the ring may be a double bond. 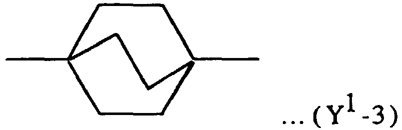 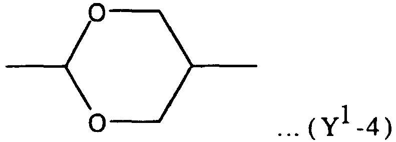 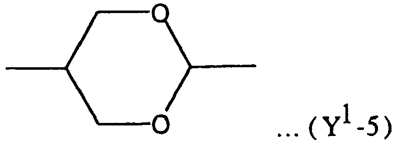 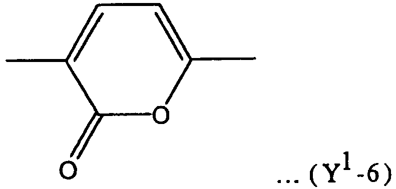 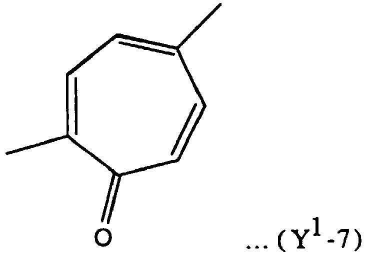 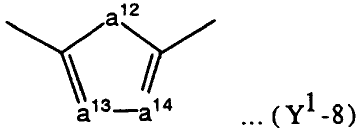 where a¹² is an oxygen atom or a sulfur atom and a¹³ and a¹⁴ are a carbon atom and a nitrogen atom, respectively. 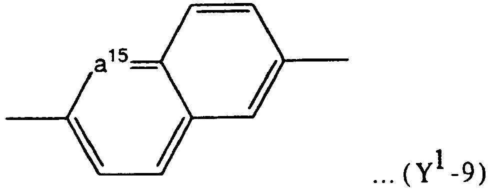 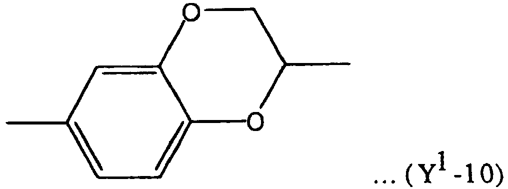 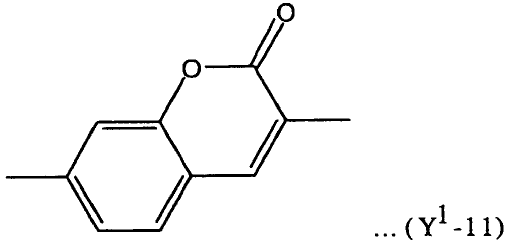 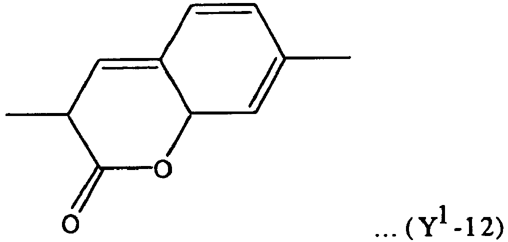 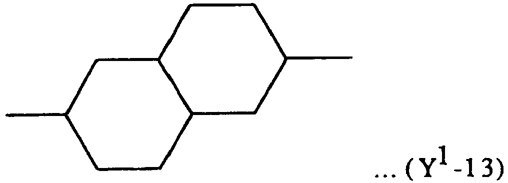 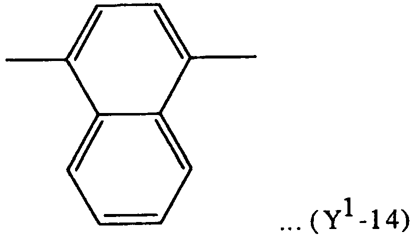 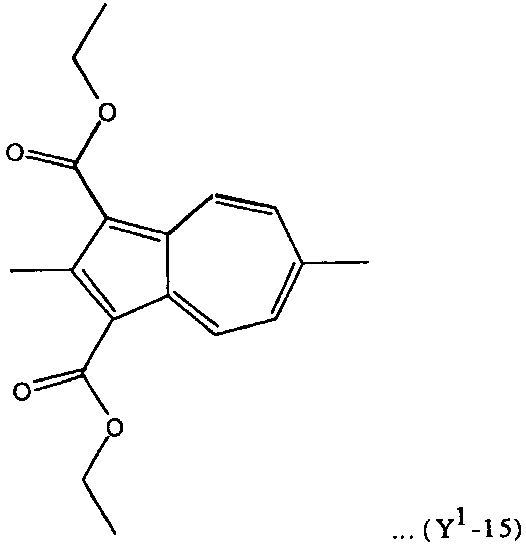 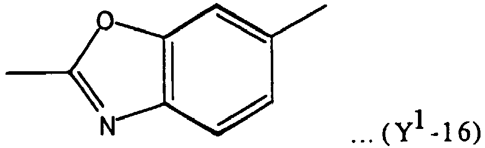 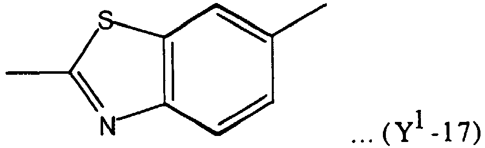 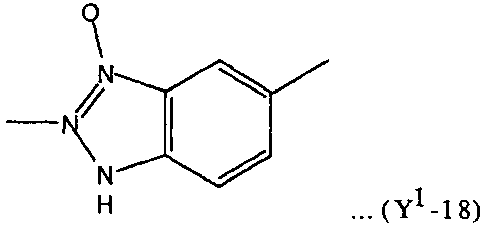 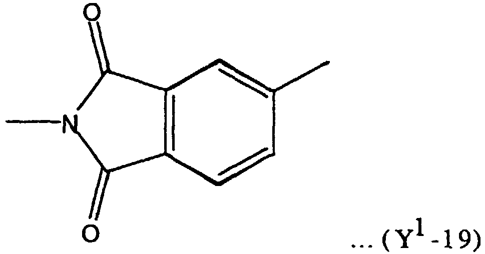 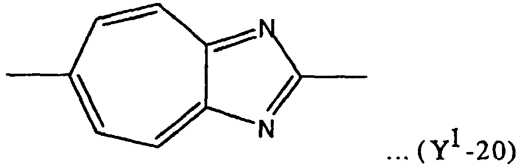 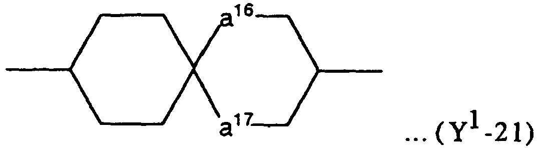 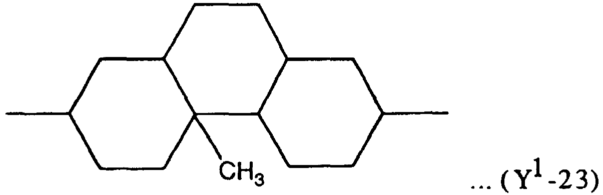 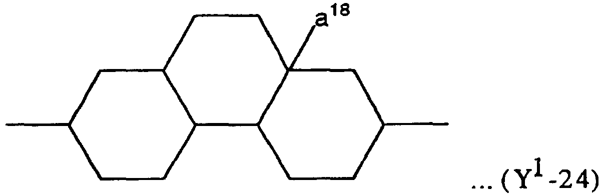 where a¹⁸ is a methyl group or a cyano group. 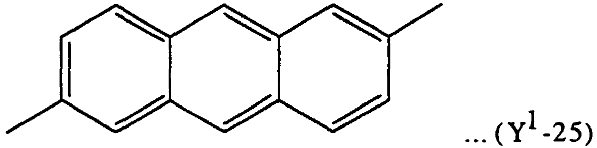 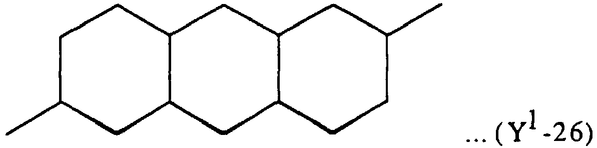 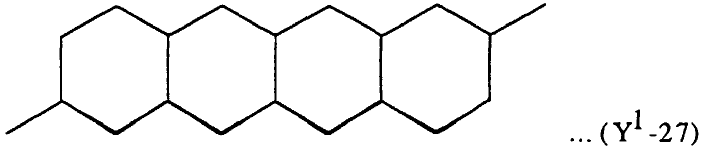 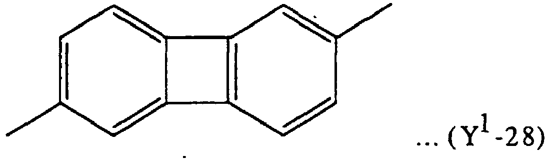 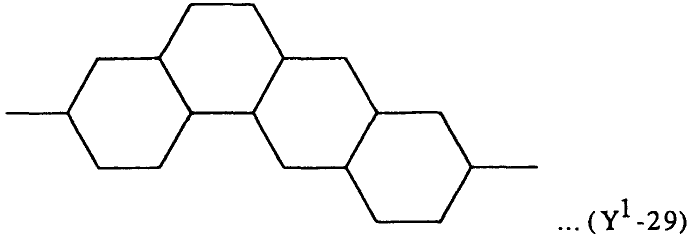 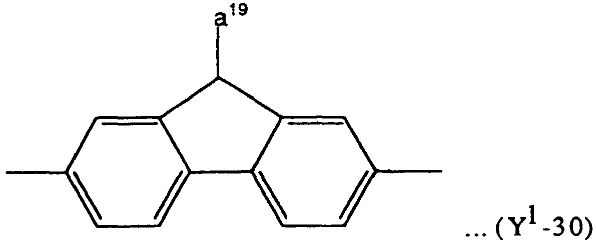 where a¹⁹ is any one of H, Br, CH₃, NH₂, NHR and NRR' and each of R and R' is an organic functional group. 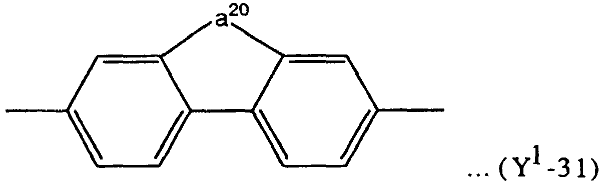 where a²⁰ is an oxygen atom or a sulfur atom.

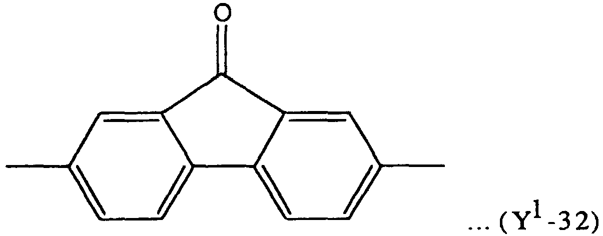

It is preferable that the atomic group included in general formula (C') and expressed by Y² is selected from cyclic structures expressed by any one of the following general formulas (Y²-1) to (Y²-3).

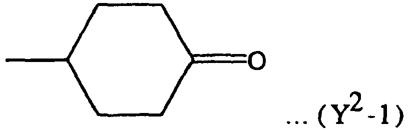

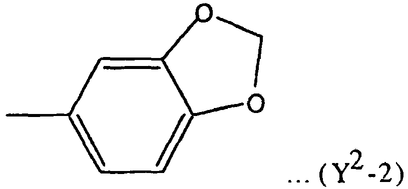

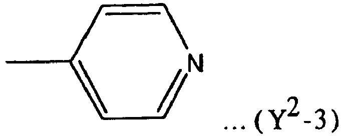

The atomic group included in general formula (C") and expressed by Y³ or Y⁴ is selected from cyclic structures expressed by any one of the following general formulas (Y³⁴-1) to (Y³⁴-3).

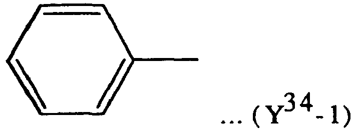

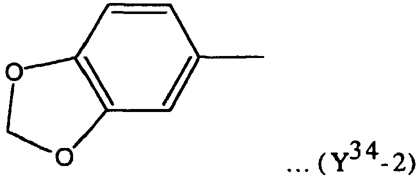

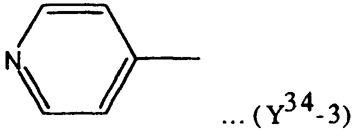

The liquid crystal molecule which can be used as the lubricant may be a bicyclic liquid crystal molecule expressed by general formula (D) or (D').

L-W-X⁴-Y⁵ general formula (D)

where each of W, X⁴ and Y⁵ is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group and a hydroxyimino group, or an aryl group, an alkyl group, an oxycarboxyl group, a carboxyl group, a carbonyl group, an ether group, an amide group or an amino group replaced by any one of the foregoing groups.

L-W-X⁴-Y⁶-R general formula (D')

where each of W, X⁴ and Y⁶ is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group and a hydroxyimino group, or an aryl group, an alkyl group, an oxycarboxyl group, a carboxyl group, a carbonyl group, an ether group, an amide group or an amino group replaced by any one of the foregoing groups.

It is preferable that the atomic group included in general formula (D) or (D') and expressed by W is selected from cyclic structures expressed by the following general formulas (W-1) to (W-7). 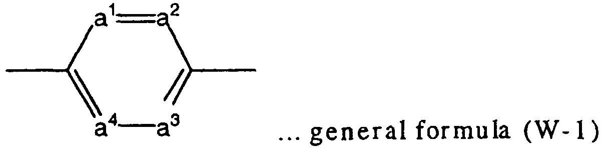 where each of a¹, a², a³ and a⁴ is a carbon atom or a nitrogen atom and the bond constituting the ring is a single bond or a double bond. 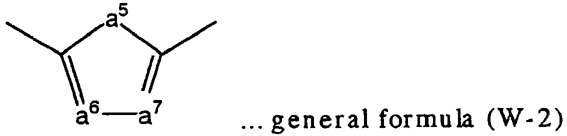 where a⁵ is an oxygen atom or a sulfur atom and each of a⁶ and a⁷ is a carbon atom or a nitrogen atom.

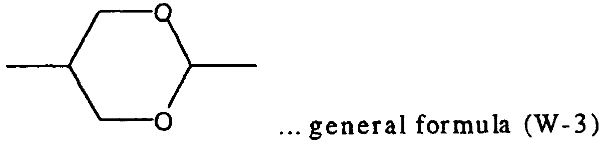

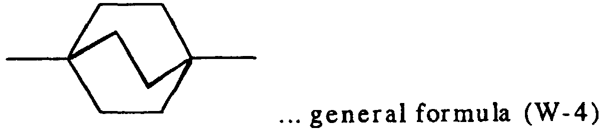

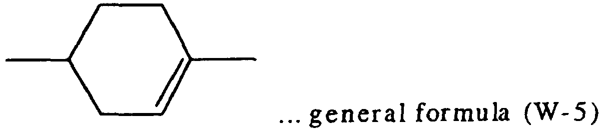

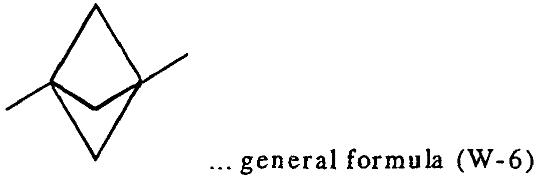

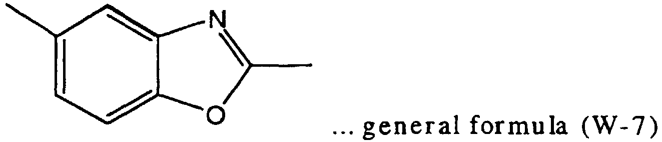

It is preferable that the atomic group included in general formula (D) or (D') and expressed by X⁴ is selected from cyclic structures expressed by the following general formulas (X⁴-1) to (X⁴-23). 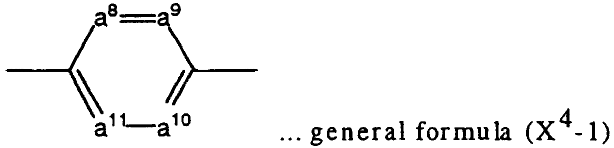 where each of a⁸, a⁹, a¹⁰ and a¹¹ is a carbon atom or a nitrogen atom. 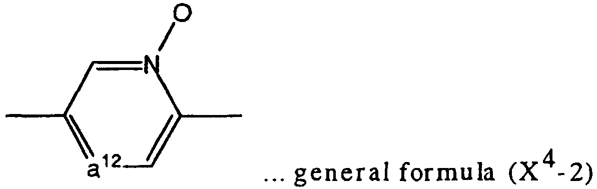 where a¹² is a carbon atom or a nitrogen atom. 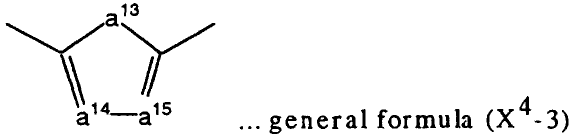 where a¹³ is any one of O, S, Se, Te or NH and each of a¹⁴ and a¹⁵ is a carbon atom or a nitrogen atom. 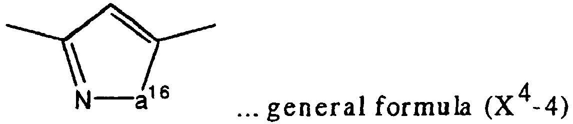 where a¹⁶ is O or NH. 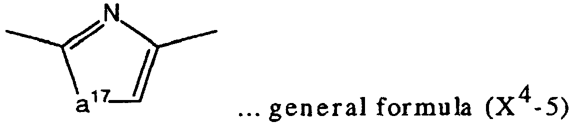 where a¹⁷ is an oxygen atom or a sulfur atom. 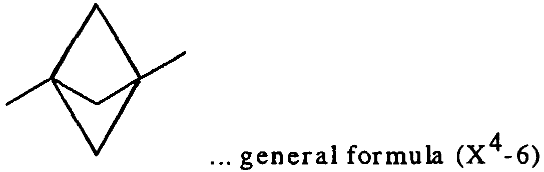 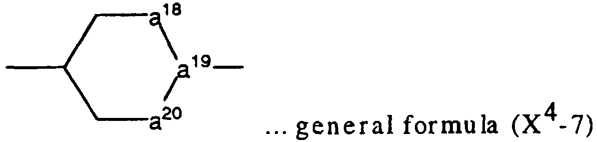 where each of a¹⁸ and a²⁰ is an oxygen atom or a sulfur atom and a¹⁹ is a carbon atom or a boron atom. 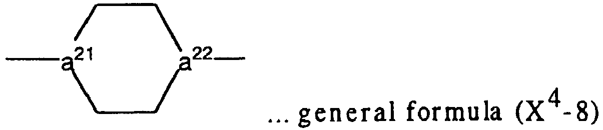 where each of a²¹ and a²² is a carbon atom or a nitrogen atom. 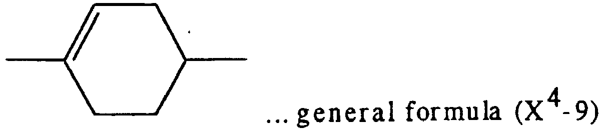 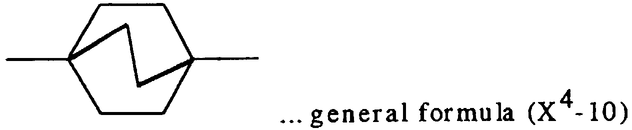 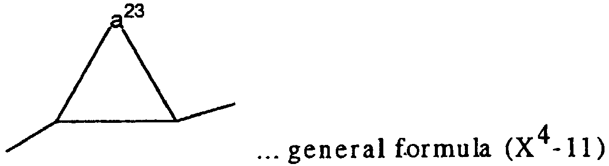 where a²³ is CH₂ or O. 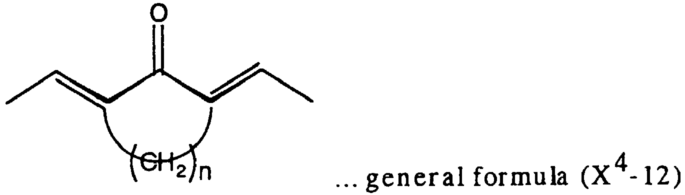 where n is any one of 2, 3 and 4. 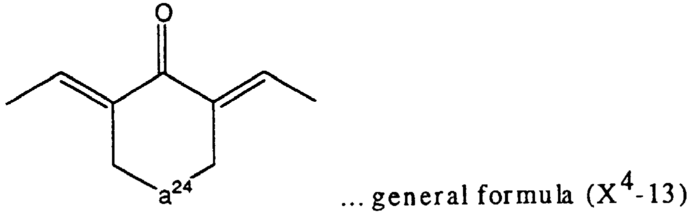 where a²⁴ is any one of O, S, NR and CHR (where R is an alkyl group).

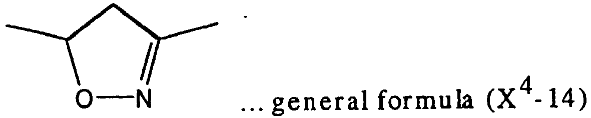

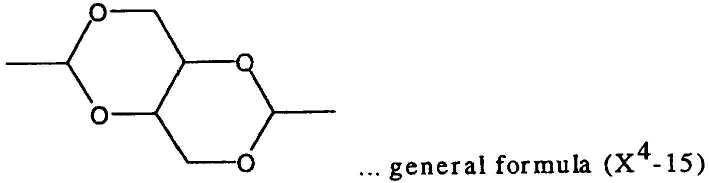

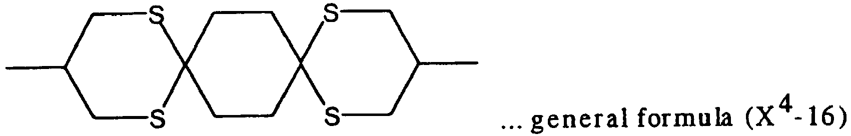

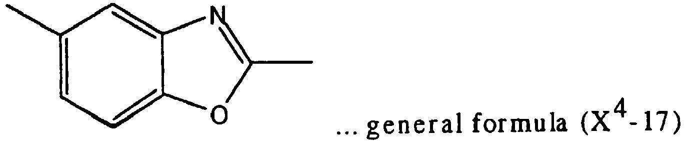

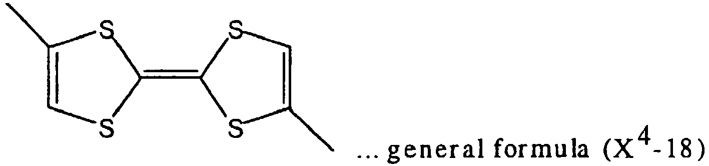

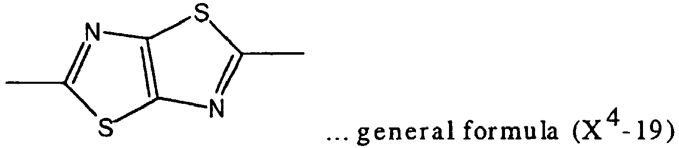

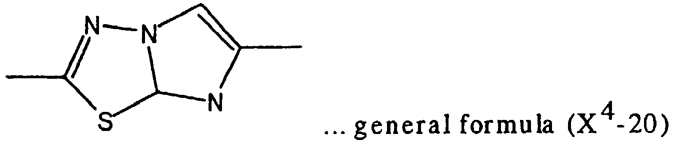

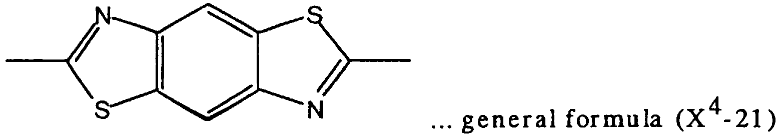

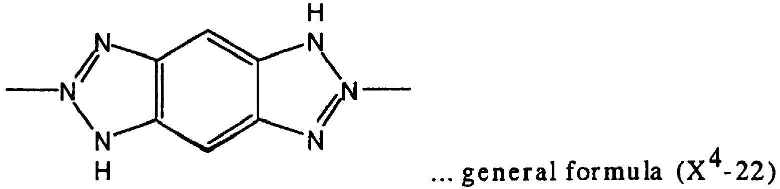

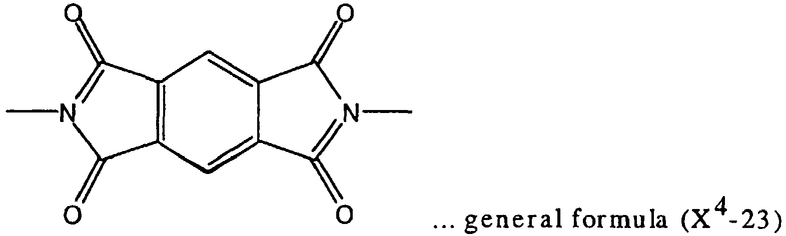

It is preferable that the atomic group included in general formula (D) and expressed by Y⁵ is selected from cyclic structures expressed by the following general formulas (Y⁵-1) to (Y⁵-5). 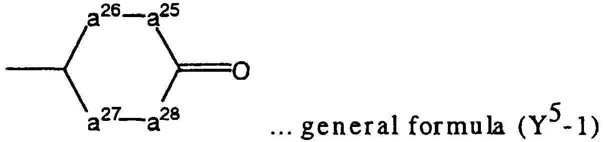 where each of a²⁵, a²⁶, a²⁷ and a²⁸ is a carbon atom or a nitrogen atom the bond constituting the ring is a single bond or a double bond.

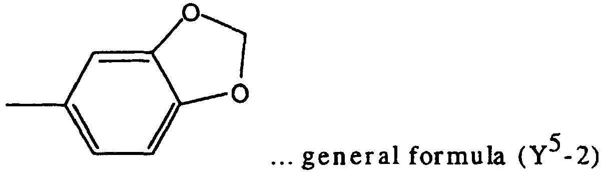

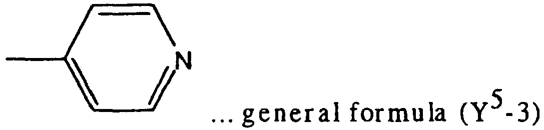

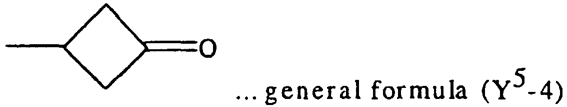

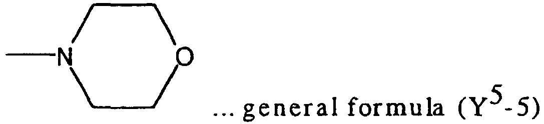

It is preferable that the atomic group included in general formula (D') and expressed by Y⁶ is selected from cyclic structures expressed by the following general formulas (Y⁶-1) to (Y⁶-32). 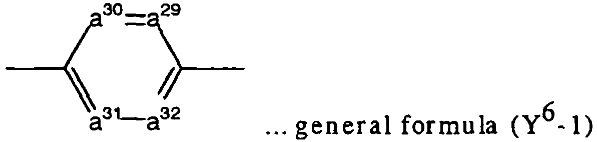 where each of a²⁹, a³⁰, a³¹ and a³² is a carbon atom or a nitrogen atom. 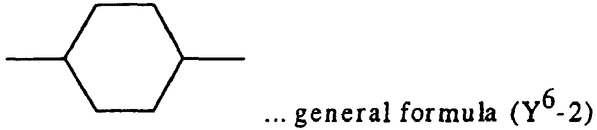 where an arbitrary one of the bonds constituting the ring may be a double bond. 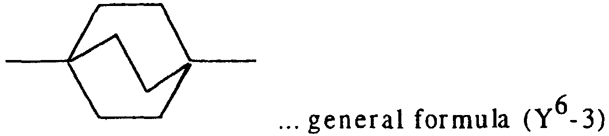 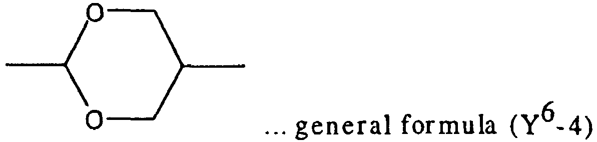 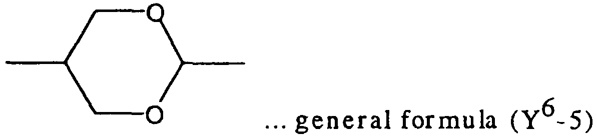 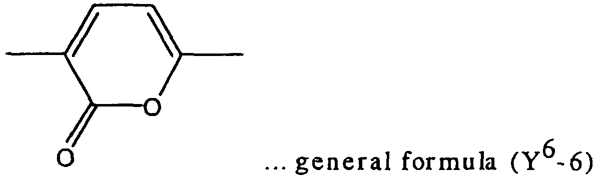 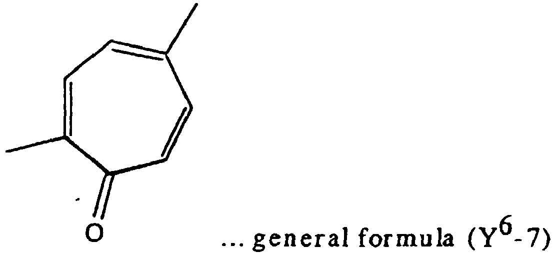 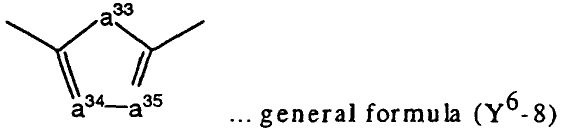 where a³³ is an oxygen atom or a sulfur atom and each of a³⁴ and a³⁵ is a carbon atom or a nitrogen atom. 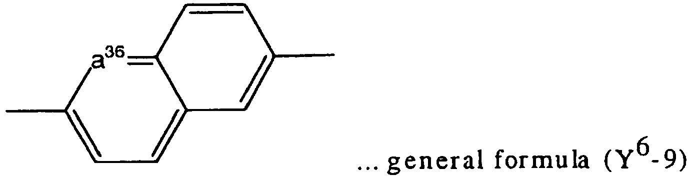 where a³⁶ is a carbon atom or a nitrogen atom. 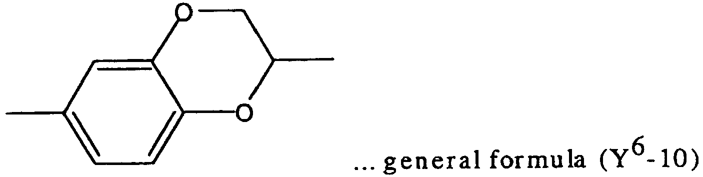 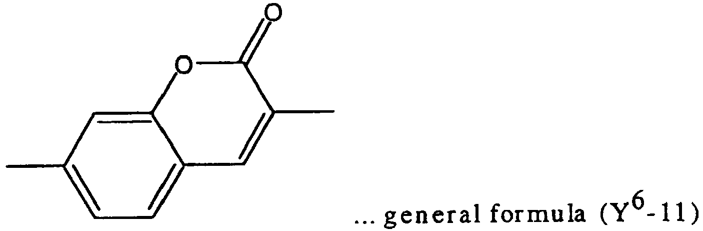 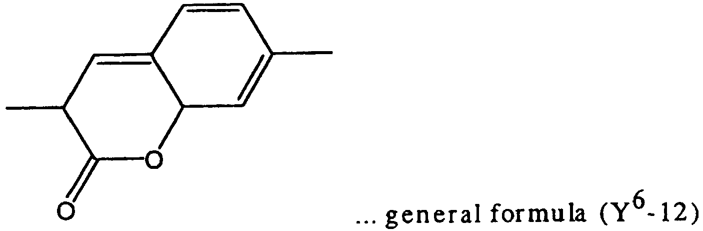 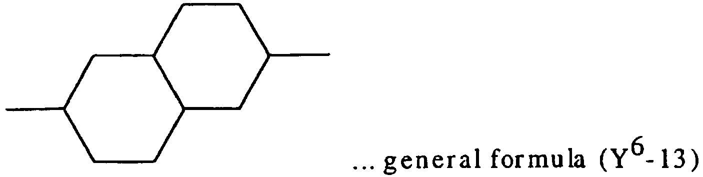 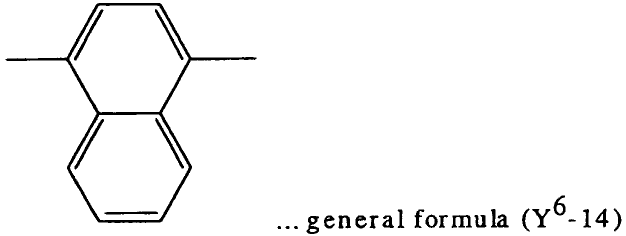 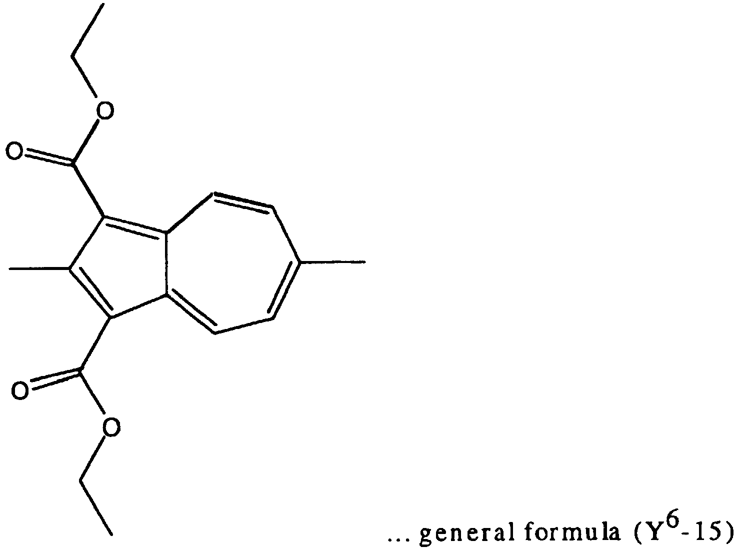 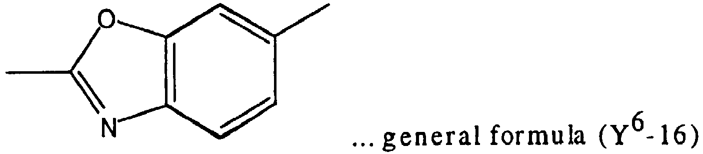 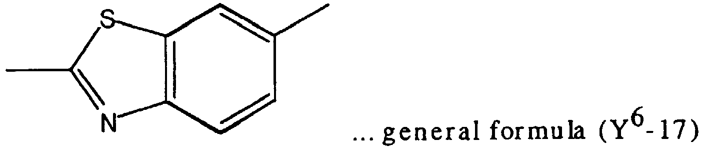 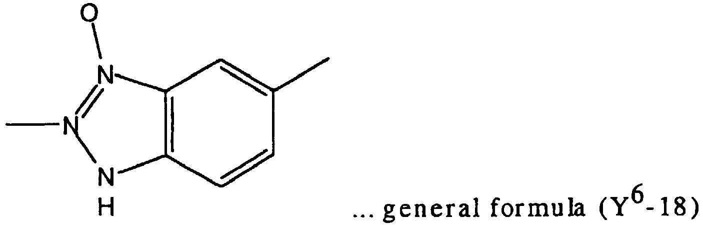 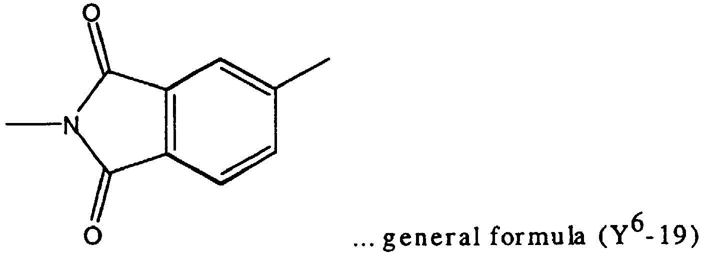 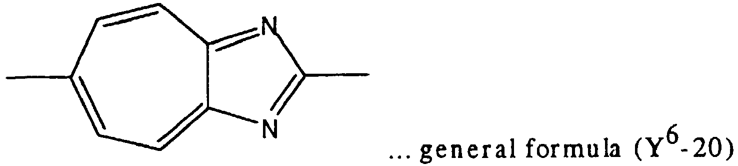 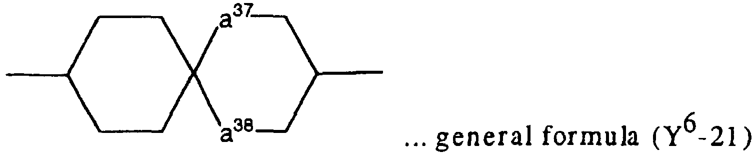 where each of a³⁷ and a³⁸ is any one of CH₂, O and S. 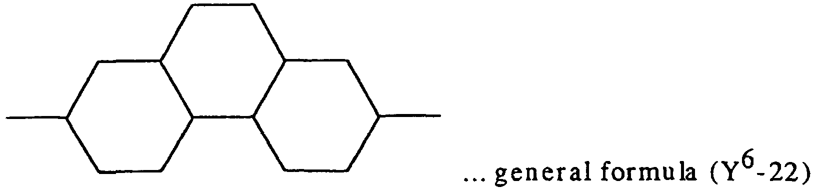 where the bond is a single bond or a double bond. 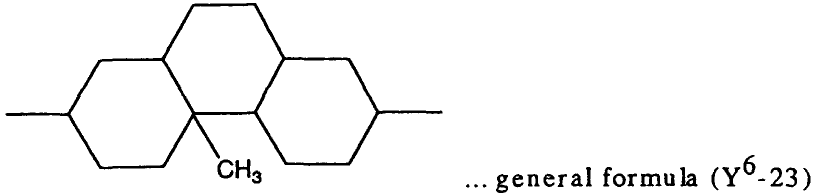 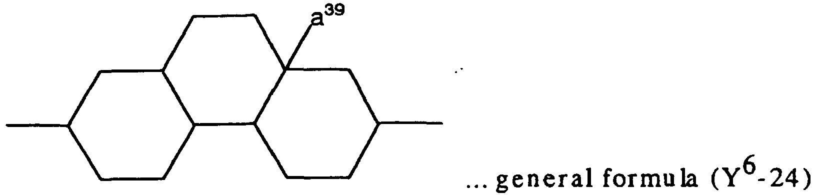 where a³⁹ is a methyl group or a cyano group. 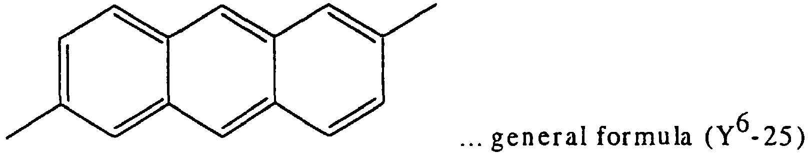 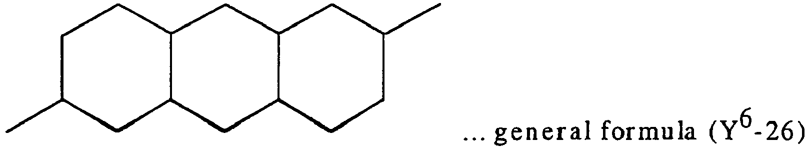 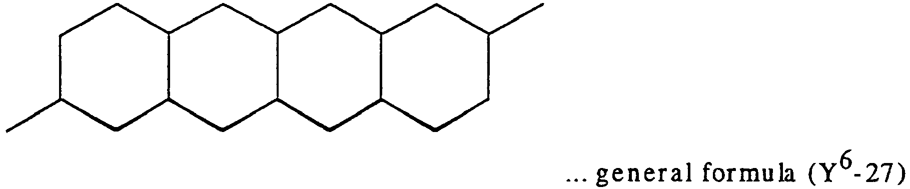 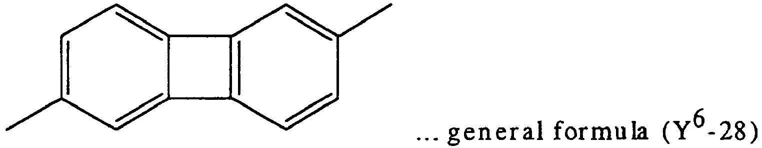 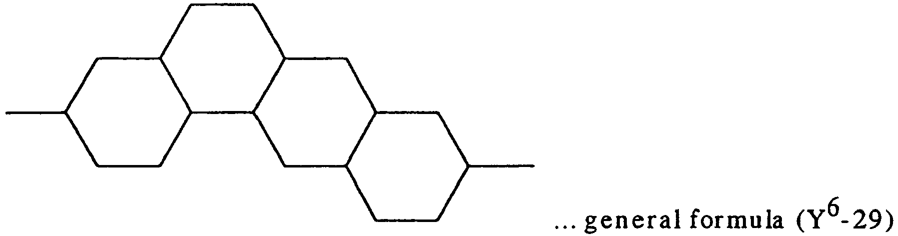 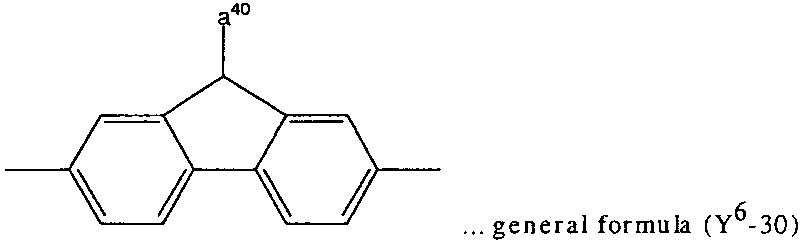 where a⁴⁰ is any one of H, Br, CH₃, NH₂, NHR and NRR'. 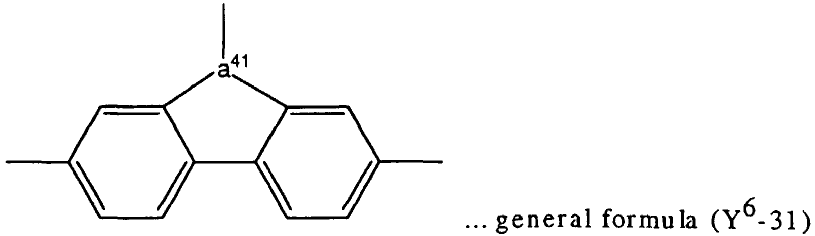 where a⁴¹ is an oxygen atom or a sulfur atom.

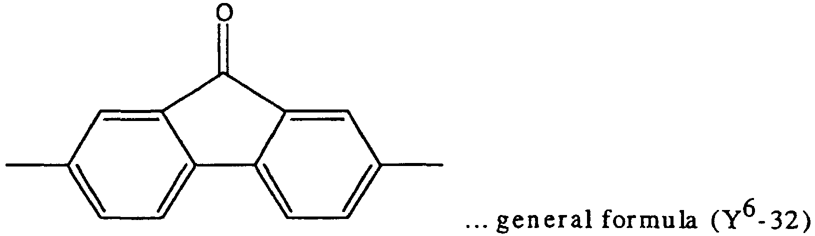

The lubricant for use in the present invention contains liquid crystal molecules having characteristics between liquid and solid when its phase is changed from solid to liquid. Therefore, the lubricant according to the present invention is able to relieve kinetic energy imparted from sliding by the phase change.

The lubricant containing the liquid crystal molecules has the characteristics of the solid when the sliding energy is small (or when no friction occurs). Therefore, the lubricant has low viscosity. If sliding energy is imparted because of a collision, the phase is changed and thus the lubricant has the characteristic of liquid. Therefore, the lubricant reaches the magnetic head so as to produce meniscus force. As described above, the phase of the lubricant containing the liquid crystal molecules according to the present invention is changed by friction energy imparted from sliding so as to be liquid. Therefore, both of low viscosity and large meniscus force can be satisfied.

In a case of a solid lubricant, the kinetic energy imparted from sliding acts to splash molecules. As a result, decomposition of the lubricant occurs. The products of the decomposition adhere to the magnetic recording medium so that the sliding characteristic deteriorates. On the other hand, the lubricant containing liquid crystal molecules is able to relieve frictional energy imparted from sliding because its state is changed from semi-solid to liquid. Therefore, the decomposition of the lubricant can be prevented and thus deterioration in the sliding characteristic can be prevented.

Since the liquid lubricant has great fluidity, the frictional energy imparted from sliding can be relieved without decomposition of the lubricant. However, the liquid lubricant having great fluidity leaks from the surface owning to sliding. Thus, the coating ratio of the substrate is reduced and the lubricating characteristic is instantaneously lost. On the other hand, the Lubricant containing the liquid crystal molecules exists on the surface in a semi-solid/semi-liquid state. Therefore, the coating ratio of the surface of the substrate is not reduced by sliding as is experienced with the liquid lubricant. As a result, the sliding characteristic does not deteriorate.

In general, the liquid crystal molecules include three types depending on the molecule arrangement, the three types being nematic phase, smectic phase and cholesteric phase.

The liquid crystal molecules for use in the present invention has the

The liquid crystal molecule for use in the present invention has nematic phase or smectic phase when its temperature is not lower than room temperature (20°C). The major axes of liquid crystal molecules in the nematic phase/smectic phase are easily aligned perpendicularly to the surface of the substrate. Therefore, a thick film is formed on the substrate. Hence, excellent durability can be realized even if sliding is repeated and the molecules of the lubricant are gradually worn. On the other hand, the major axes of liquid crystal molecules in the cholesteric phase are easily aligned in parallel to the surface of the substrate. Therefore, when sliding is repeated and thus the molecules of the lubricant are gradually worn, the molecules of the lubricant are easily worn (separated). Thus, it can be considered that satisfactory durability cannot be obtained.

Since liquid crystal molecules in the nematic phase/smectic phase are oriented in a predetermined direction, high local viscosity is expected. On the other hand, liquid crystal in the cholesteric phase forms a layer such that its oriented surface is twisted. Therefore, forces among molecules are averaged. Thus, high local viscosity obtainable from orientation cannot be obtained. As a result, the foregoing liquid crystal is disadvantageous to relieve frictional energy caused from sliding.

As described above, the lubricant according to the present invention is able to relieve kinetic energy imparted from sliding by phase transition. Since phase is changed to liquid, all of required lubricating characteristics including the continuous sliding resistance, low viscosity and the large meniscus force can be satisfied.

The magnetic recording medium according to the present invention may be a so-called coating-type magnetic recording medium having a magnetic layer which is formed by applying, to the surface of a non-magnetic support member, a magnetic coating material containing fine ferromagnetic powder and a binder and by drying the magnetic coating material. As an alternative to this, the magnetic recording medium may be a so-called thin metal-film magnetic recording medium having a magnetic layer formed by coating the non-magnetic support member by evaporation of a ferromagnetic metal material.

In the case of the coating-type magnetic recording medium, a lubricant containing the monocyclic liquid crystal molecules, bicyclic liquid crystal molecules or tricyclic liquid crystal molecules is, as a magnetic coating material, caused to be included in the magnetic layer. As an alternative to this, the lubricant is applied by a dipping method or a spin coating method after the magnetic layer has been formed so that the lubricating film is formed.

In the former case, it is preferable that the quantity of coating is 0.1 part by weight to 20 parts by weight with respect to 100 parts by weight of ferromagnetic powder, more preferably 0.5 part by weight to 10 parts by weight. In the latter case, it is preferable that the quantity of coating is 0.5 mg/m² to 100 mg/m², more preferably 1 mg/m² to 50 mg/m². In either case, if the quantity of the lubricant existing in the outermost layer (on the surface of the magnetic layer) of the magnetic recording medium is too small, only a poor lubricating effect can be obtained. If the quantity is too large, sticking of the magnetic recording medium takes place. Therefore, the foregoing optimum quantity is inevitably determined. In a case of a micro-particle high packing medium developed recently, the latter method enables the lubricant to effectively be held on the surface of the magnetic layer.

In the case of the thin metal magnetic recording medium, the lubricant containing the liquid crystal molecules may be applied to the surface of the magnetic layer after the magnetic layer has been formed by coating, such as evaporation. In order to obtain the continuous sliding resistance, a protective film may be formed on the magnetic layer in the form of a thin metal-magnetic-film, after which the surface of the protective film is coated with the lubricant.

The lubricant may be applied by, for example, a dipping method, a Langmuir project (LB) method, a spraying method, a spraying method, a cast method, a vacuum evaporation method or a molecular beam evaporation method. Also in this case, it is preferable that the quantity of coating of the lubricant is 0.5 mg/m² to 100 mg/m², more preferably 1 mg/m² to 50 mg/m². A cleaning process using solvent may be performed after the lubricating film has been formed so as to adjust the quantity of coating. Whether or not the cleaning process is performed after the lubricating film has been formed is determined from a view point of adjusting the thickness of the film.

If necessary, a heating process or a process for applying an ultraviolet ray may be performed after the lubricating film has been formed. It is preferable that the heating process is performed in a temperature range from 70°C to 200°C, more preferably in a range from 90°C to 170°C.

In the present invention, a backcoat layer may be formed on the surface of the non-magnetic support member opposite to the surface on which the magnetic layer is formed so as to apply the lubricant containing the liquid crystal molecules. The lubricant may be included in the backcoat layer.

In the present invention, a non-magnetic layer (a base layer) may be formed between the non-magnetic support member and the magnetic layer in order to smooth and flatten the magnetic layer. The foregoing medium is generally called a multilayered-coating-type magnetic recording medium. Also in this case, it is preferable that the lubricant containing the liquid crystal molecules is included in the nonmagnetic layer. The lubricant included in the non-magnetic layer seeps to the magnetic layer, and then allowed to finally exist in the outermost layer of the magnetic recording medium. It is preferable that the quantity of addition of the lubricant is 0.1 part by weight to 20 parts by weight with respect to 100 parts by weight of non-magnetic powder, more preferably 0.5 part by weight to 10 parts by weight.

As described above, the magnetic recording medium according to the present invention has the lubricant containing the liquid crystal molecules in the outermost layer thereof. Therefore, excellent lubricating performance can be maintained under a variety of conditions for use. As a result, the lubricating effect can be maintained for long time. As a result, excellent running performance, wear resistance and durability can be realized.

The non-magnetic support member and the magnetic layer of the magnetic recording medium according to the parts by weight may be made of known materials. Therefore, the materials are not limited particularly.

For example, the non-magnetic support member may be a support member made of polyester, such as of polyethylene phthalate, polyethylene-2,6-naphthalate; polyolefine, such as polypropylene; cellulose, such as cellulose triacetate or cellulose diacetate; a polymer material represented by vinyl resin, polyimide and polycarbonate; metal; glass; and ceramics.

When the magnetic recording medium has the coating type magnetic layer, the magnetic layer is formed by coating a magnetic coating material mainly composed of magnetic powder and a binder. The ferromagnetic powder is made of a material exemplified by metal, such as Fe, Co or Ni; an alloy such as Fe-Co, Fe-Ni, Fe-Al, Fe-Ni-Al, Fe-Al-P, Fe-Ni-Si-Al, Fe-Ni-Si-Al-Mn, Fe-Mn-Zn, Fe-Ni-Zn, Co-Ni, Co-P, Fe-Co-Ni, Fe-Co-Ni-Cr, Fe-Co-Ni-P, Fe-Co-B, Fe-Co-Cr-B, Mn-Bi, Mn-Al or Fe-Co-V; iron nitride; and iron carbide. As a matter of course, light metal elements, such as Al, Si, P or B may be contained in an adequate quantity in order to prevent sintering occurring when reduction is performed or to maintain the shape. Also in this case, the effect of the present invention can be obtained.

The ferromagnetic powder may be γ-Fe₂O₃; Fe₃O₄; a berthollide compound of γ-Fe₂O₃ and Fe₃O₄; γ-Fe₂O₃ containing Co; Fe₃O₄ containing Co; a berthollide compound of γ-Fe₂O₃ containing Co and Fe₃O₄; or an oxide in the form in which CrO₂ contains one or more types of metal elements, such as Te, Sb, Fe or B.

Also hexagonal system ferrite may be employed. M-type, W-type, Y-type, Z-type barium ferrite, strontium ferrite, calcium ferrite, lead ferrite or a material obtained by adding Co-Ti, Co-Ti-Zn, Co-Ti-Nb, Co-Ti-Zn-Nb, Cu-Zr or Ni-Ti to any one of the foregoing materials may be employed. One type of the ferromagnetic powder may be employed or two or more types may be employed.

It is preferable that the specific surface area of the ferromagnetic powder for use in the present invention is 30 m²/g to 80 m²/g, more preferably 40 m²/g to 70 m²/g. If the specific surface area satisfies the foregoing range, the ferromagnetic powder can be fined. Thus, density recording is permitted so that a magnetic recording medium having excellent noise prevention is obtained.

It is preferable that the major axis length of the ferromagnetic powder according to the present invention is 0.05 µm to 0.50 µm and the axial ratio of the same is 2 to 15. If the major axis length is shorter than 0.05 µm, dispersion in the magnetic coating material cannot easily be performed If the major axis length is longer than 0.50 µm, the noise characteristic undesirably deteriorates. If the axial ratio is smaller than 5, the orienting characteristic of the ferromagnetic powder deteriorates, causing the output to be reduced. If the axial ratio is larger than 15, there is apprehension that the output of a short-wavelength signal is reduced. In the case of plate ferrite, it is preferable that the plate diameter is 0.01 µm to 0.5 µm and the thickness is 0.001 µm to 0.2 µm. The major axis length, the axial ratio, the plate diameter and the thickness are average values of 100 or more samples randomly selected by using photographs obtained by a transmission electron microscope.

The binder which is contained in the magnetic layer according to the present invention may be a conventional thermoplastic resin, thermosetting resin or reaction-type resin which has been employed as the binder for the magnetic recording medium. It is preferable that the number average molecular weight is 5000 to 100000.

The thermoplastic resin is exemplified by vinyl chloride, vinyl acetate, vinyl chloride-vinyl acetate copolymer, vinyl chloride-vinylidene chloride copolymer, vinyl chloride-acrylonitrile copolymer, acrylic ester-acrylonitrile copolymer, acrylic ester-vinyl chloride-vinylidene chloride copolymer, vinyl chloride-acrylonitrile copolymer, acrylic ester-acrylonitrile copolymer, acrylic ester-vinylidene chloride copolymer, methacrylate-vinylidene chloride copolymer, methacrylatevinyl chloride copolymer, methacrylate-ethylene copolymer, polyvinyl fluoride, vinylidene chloride-acrylonitrile copolymer, acrylonitrile-butadiene copolymer, polyamide resin, polyvinyl butyral, cellulose derivative (cellulose acetate butylate, cellulose diacetate, cellulose triacetate, cellulose propionate or nitrocellulose), styrene-butadiene copolymer, polyurethane resin, polyester resin, amino resin and synthetic rubber. The thermosetting resin or the reaction-type resin are exemplified by phenol resin, epoxy resin, polyurethane setting resin, urea resin, melamine resin, alkyd resin, silicone resin, polyamine resin and urea formaldehyde resin.

Any one of the foregoing binders may contain a polar functional group, such as -SO₃M, -OSO₃M, -COOM or P=O (OM)₂ in order to improve the dispersion characteristic of the pigment. In the formula, M is a hydrogen atom or alkali metal, such as lithium, potassium or sodium. Moreover, the polar functional group includes a side-chain type material having an end group exemplified by -NR¹R² or -NR¹R²R³⁺X⁻ and a main chain type material exemplified by > NR¹R²⁺X⁻, where each of R¹, R² and R³ is a hydrogen atom or a hydrocarbon group and X- is a halogen element ion of fluorine, chlorine, bromine or iodine or inorganic or organic ion. Moreover, a polar functional group, such as -OH, - SH, -CN or epoxy group, may be employed. It is preferable that the quantity of the polar functional group is 10⁻¹ mol/g to 10⁻⁸ mol/g, more preferably 10⁻² mol/g to 10⁻⁶ mol/g. One of the above-mentioned binders may be employed, and two or more types may be employed.

It is preferable that the binder is contained in the magnetic layer by 1 part by weight to 200 parts by weight with respect to 100 parts by weight of the ferromagnetic powder or the non-magnetic powder, more preferably 10 parts by weight to 50 parts by weight. If the quantity of the binder is too large, the ratio of the ferromagnetic magnetic powder in the magnetic layer is relatively reduced. Thus, the output is reduced. What is worse, plastic flow easily occurs because of repetitive sliding in the drive. As a result, the transport durability of the magnetic recording medium deteriorates. If the quantity of the binder is too small, the magnetic layer becomes brittle. Thus, the transport durability of the magnetic recording medium deteriorates.

In the present invention, polyisocyanate for crosslinking and hardening the binder may additionally be employed. The polyisocyanate may be tolylenediisocyanate, its abduct, alkylene diisocyanate or its abduct. It is preferable that the quantity of blending of polyisocyanate to the binder is 5 parts by weight to 80 parts by weight with respect to 100 parts by weight of the binder, more preferably 10 parts by weight to 50 parts by weight.

The ferromagnetic powder and the binder are dispersed in the solvent so that the magnetic coating material is prepared. The solvent for use in the process for preparing the coating material may be ketone solvent, such as acetone, methylethylketone, methylisobutylketone or cyclohexanone, alcohol solvent, such as methanol, ethanol or propanol, ester solvent, such as methyl acetate, ethyl acetate, butyl acetate, propyl acetate, ethyl lactate or ethyleneglycol, ether solvent, such as diethylene glycol dimethylether, 2-ethoxyethanol, tetrahydrofuran or dioxane, aromatic hydrocarbon solvent, such as benzene, toluene or xylene or halogenated hydrocarbon solvent, such as methylene chloride, ethylene chloride, carbon tetrachloride, chloroform or chlorobenzene.

If necessary, particles of an abrasive material may be contained in the magnetic coating material. The abrasive material may be aluminum oxide (α, β or γ), chrome oxide, silicon carbide, diamond, garnet, emery, boron nitride, titanium carbide, silicon carbide or titanium oxide (rutile or anatase). It is preferable that the foregoing particles is contained by 20 parts by weight or smaller with respect to 100 parts by weight of the ferromagnetic powder, preferably 10 parts by weight or smaller. It is preferable that the Moh's hardness of the particles is 4 or higher, preferably 5 or higher. It is preferable that the specific gravity is 2 to 6, preferably in a range from 3 to 5. The average particle size is 0.5 µm or smaller, preferably 0.3 µm or smaller. Also the average particle size of the non-magnetic reinforcing particles is measured from photographs obtained by the transmission electron microscope so as to be statistically processed, similarly to the process for processing the ferromagnetic powder.

The magnetic coating material is prepared by subjecting the foregoing materials to a kneading process, a mixing process and a dispersing process. The dispersing and kneading processes are performed by using a roll mill, a ball mill, a sand mill, an agitaor, a kneader, an extruder, a homogenizer or a supersonic dispersing machine.

After the magnetic coating material has been prepared, the magnetic coating material is applied by an arbitrary method, such as spraying or roll coating, after which a drying process is performed. Thus, the magnetic layer is formed. If necessary, the product is introduced into a calender apparatus and wound around a winding roll. Moreover, a backcoat layer is applied to the surface of the non-magnetic support member opposite to the surface on which the magnetic layer is formed.

When the foregoing coating type magnetic layer is provided, a non-magnetic layer (a base layer) containing non-magnetic powder dispersed in the binder thereof may be formed between the magnetic layer and the non-magnetic support member in order to flatten and smooth the magnetic layer.

When the foregoing multilayered coating process is performed, the binder to be contained in the base layer may be the binder for use in the magnetic layer may be employed.

Non-magnetic powder which must be contained in the base layer may be non-magnetic iron oxide, such as α-Fe₂O₃, goethite, rutile type titanium dioxide, anatase-type titanium dioxide, tin oxide, tungsten oxide, silicon oxide, zinc oxide, chrome oxide, cerium oxide, titanium carbide, BH, α-alumina, β-alumina, γ-alumina, calcium sulfate, barium sulfate, molybdenum disulfide, magnesium carbonate, calcium carbonate, barium carbonate, strontium carbonate or barium titanate. The non-magnetic powder may be employed solely or a mixture may be employed.

Impurities may be doped in the non-magnetic powder in an adequate quantity to meet purposes. To improve dispersion characteristic, impart electric conductivity and improve color tone, surface treatment may be performed with a compound of Al, Si, Ti, Sn, Sb or Zr. It is preferable that the specific surface area of the non-magnetic powder is 30 m²/g 80 m²/g, preferably 40 m²/g to 70 m²/g.

If necessary, the non-magnetic layer may contain carbon black, such as furnace for rubber, pyrocarbon, black for color or acetylene black, in addition to the non-magnetic powder. It is preferable that the specific surface area of carbon black is 100 m²/g to 400 m²/g and the DBP oil absorption is 20 ml/100 g to 200 ml/100 g.

By determining the specific surface area of non-magnetic powder and carbon black to satisfy the above-mentioned ranges, the non-magnetic layer (the base layer) can be flattened and smoothed. As a result, the magnetic layer (the upper layer) can be flattened and smoothed. Thus, a magnetic recording medium having an excellent modulation noise characteristic and free from considerable influence of the spacing loss can be obtained.

When the magnetic recording medium according to the present invention incorporates the magnetic layer in the form of a thin magnetic metal film, the thin magnetic metal film is formed by continuously coating the surface of the non-magnetic support member with ferromagnetic metal powder by sputtering or vacuum evaporation.

The non-magnetic support member may be the above-mentioned non-magnetic support member. When a substrate, such as an aluminum alloy plate or a glass plate, having rigidity is employed, an oxide film obtainable by an alumite process or a Ni-P coating may be formed on the surface of the substrate so that the surface is hardened.

The thin magnetic metal film may be a metal film made of Fe, Co or Ni, an inplane magnetized recording metal magnetic film made of Co-Ni alloy, Co-Pt alloy, Co-Pt-Ni alloy, Fe-Co alloy, Fe-Ni alloy, Fe-Co-Ni alloy, Fe-Ni-B alloy, Fe-Co-B alloy or Fe-Co-Ni-B alloy or thin alloy film made of Co-Cr.

When the inplane magnetized recording metal magnetic film is employed, a ground layer made of a low-melting-point non-magnetic material, such as Bi, Sb, Pb, Sn, Ga, In, Ge, Si or Tl may previously be formed on the non-magnetic support member, and then the metal magnetic material is evaporated or sputtered in the vertical direction so as to form the thin metal-magnetic-film. When the ground layer is coated with the metal magnetic material, the low-melting-point non-magnetic material is diffused in the thin metal-magnetic-film. Thus, the orientation can be canceled, inplane isotropy can be maintained and the antimagnetic characteristic can be improved.

A protective film made of carbon or the like may be formed on the surface of the magnetic recording medium prior to forming of the lubricating film in order to strengthen the coating film or improve rust-prevention. The protective film is usually formed by sputtering or chemical vapor deposition (CVD). The method is not limited particularly and thus either method may be employed. It is preferable that the thickness of the protective film is 2 nm to 100 nm, more preferably 5 nm to 30 nm.

The above-mentioned lubricant may contain a rust preventive material, if necessary. The rust preventive material may be any one of conventional rust preventive materials for the magnetic recording medium of the foregoing type. For example, phenol, naphthol, quinone, a heterocyclic compound containing a nitrogen atom, a heterocyclic compound containing an oxygen atom or a heterocyclic compound containing a sulfur atom may be employed.

Although the rust preventive material may be combined with the lubricant, the effect can be improved when two or more layered structure is employed in which the rust preventive layer is applied to the surface of the magnetic layer or the protective film made of carbon or the like after which the lubricant layer is applied.

If the magnetic recording medium according to the present invention has the magnetic layer formed on the non-magnetic support member, the shape is not limited particularly. For example, a magnetic tape obtained by slitting to have a width of 8 mm, a magnetic disc in the form of a disc having a size of 3.5 inches obtained by punching or a magnetic disc (a so-called hard disc) comprising a disc-shape hard substrate may be employed.

The magnetic recording/reproducing apparatus according to the present invention will now be described.

The magnetic recording/reproducing apparatus according to the present invention incorporates a magnetic disc and a magnetic head for scanning the surface of the magnetic disc to record and/or reproduce information to and from the magnetic disc. The magnetic head may be a floating type magnetic head which performs scanning while it floats for a small distance from the surface of the magnetic disc by the wind force obtainable from rotation of the magnetic disc. The magnetic head may be a contact-recording-type magnetic head which performs scanning while making contact with the surface of the magnetic disc. When the magnetic head is the floating type magnetic head, the minimum distance from the geometric average surface of the surface of the magnetic disc must be 50 nm or smaller.

The magnetic recording/reproducing apparatus according to the present invention employs the magnetic recording medium as the magnetic disc, the magnetic recording medium having an outermost layer which includes the lubricant containing liquid crystal molecule expressed by general formula (A) or (A'), general formula (B) or (B'), general formula (C) or (C") or general formula (D) or (D').

The magnetic recording/reproducing apparatus employs the magnetic recording medium having the outermost layer which contains the above-mentioned liquid crystal molecules. Since the liquid crystal molecules has low viscosity and large meniscus force, excellent durability against sliding can be obtained when the disc is slid when the floating type magnetic head is turned on or off or when the disc is slid when the recording or reproducing operation is performed by the contact-record-type magnetic head. As a result, an excellent transport characteristic, wear resistance and durability can be realized.

Specific examples and comparative examples of the present invention will now be described. As a matter of course, the present invention is not limited to the following examples.

### (Manufacturing of Coating Type Magnetic Tape)

### Example 1

Initially, ferromagnetic powder, a binder, additives, a lubricant and solvent having the following compositions were kneaded by an extruder, and then dispersed for 6 hours by a sand mill. Thus, a magnetic coating material was prepared.

### (Composition of Magnetic Coating Material)

| | |
|---|---|
| Fe Metal Ferromagnetic Powder (coercive force = 160 kA/m, amount of saturation magnetization = 145 Am²/kg, specific surface area = 51 m²/g, length of major axis = 0.08 µm and needle ratio = 3) | 100 parts by weight |
| Polyvinyl Chloride Resin (MR-110 manufactured by Japanese Geon) | 14 parts by weight |
| Polyester Polyurethane (MG-130 manufactured by Toyo Spinning) | 3 parts by weight |
| Additive (Al₂O₃) | 5 parts by weight |
| Lubricant (the following liquid crystal molecule 1) | 3 parts by weight |
| Methylethylketone | 150 parts by weight |
| Cyclohexanone | 150 parts by weight |

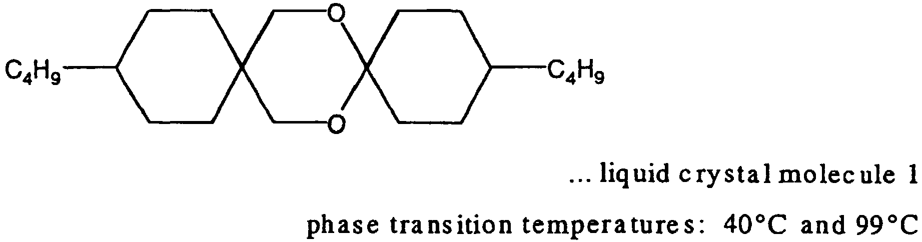

Then, 3 parts by weight of polyisocyanate were added to the obtained magnetic coating material. The coating material for making a magnetic layer was applied to the surface of polyethylene terephthalate (hereinafter called "PET") having a thickness of 7 µm so as to have a thickness of 6.5 µm. A solenoid coil was operated to perform an orienting process, and then a drying process, a calender process and a hardening process were performed. Thus, a magnetic layer was formed. Then, a back coating material having the following composition was applied to the surface of the PET film opposite to the surface on which the magnetic layer was formed. The PET film was cut to have a width of 8 mm so as to be tape shape. As a result, a coating type magnetic tape was manufactured.

### (Composition of Back Coating Material)

| | |
|---|---|
| Carbon Black (#50 manufactured by Asahi Carbon) | 100 parts by weight |
| Polyester Polyurethane (trade name: Nipporan N-2304) | 100 parts by weight |
| Methylethylketone | 500 parts by weight |
| Toluene | 500 parts by weight |

### Examples 2 to 8

A similar process to that according to Example 1 was performed except for the following liquid crystal molecules 2 to 8 employed as the lubricant in place of the liquid crystal molecule 1 so that coating type magnetic tapes were manufactured.

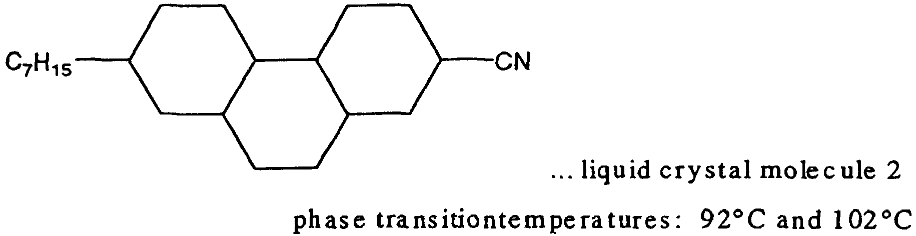

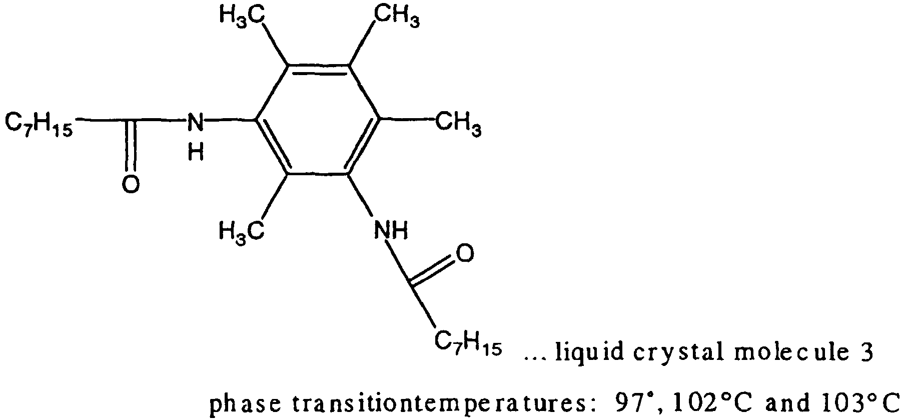

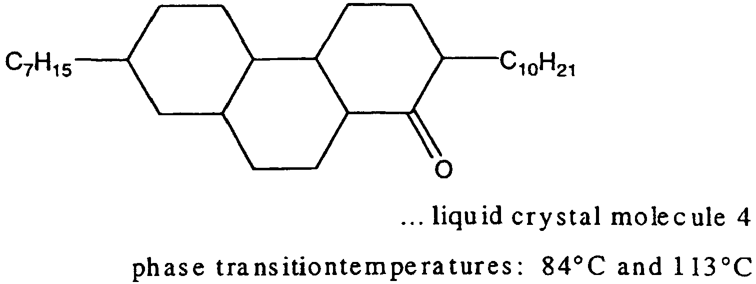

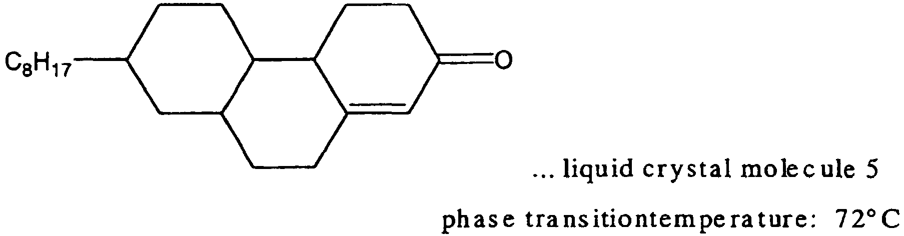

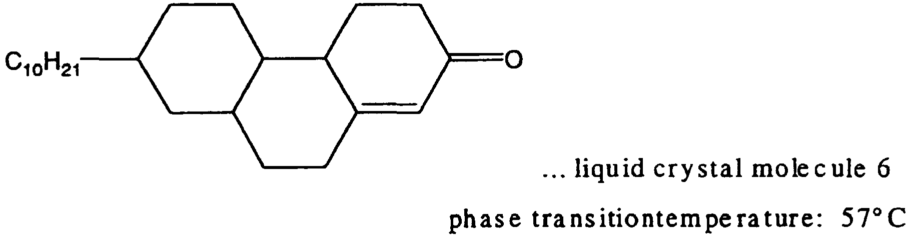

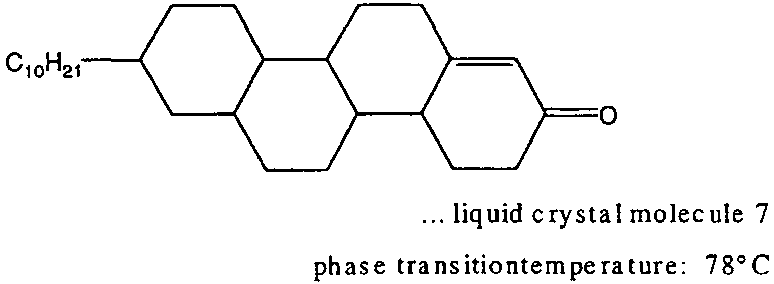

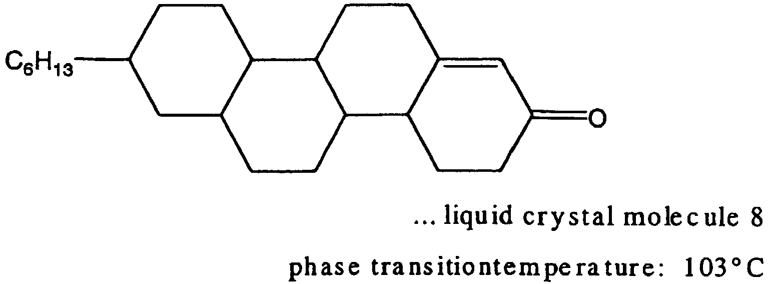

### Comparative Example 1

A process similar to that according to Example 1 was performed except for the lubricant which was stearic acid which was a usual lubricant employed in place of liquid crystal molecule 1 so that a coating type magnetic tape was manufactured.

### Comparative Example 2

A process similar to that according to Example 1 was performed except for the lubricant which was methyl stearate which was a usual lubricant employed in place of liquid crystal molecule 1 so that a coating type magnetic tape was manufactured.

### Evaluation of Characteristics

The magnetic tapes according to Examples 1 to 8 and Comparative Examples 1 and 2 were measured. The coefficient of friction and still durability were measured when the temperature was 25°C and the relative humidity was 60 %, the temperature was 40°C and the relative humidity was 80 % and the temperature was - 5°C. Results were shown in Tables 1 and 2.

The coefficient of friction was measured by using a usual shuttle under a load of 20 g at a tape speed of 5 mm/second. The value of the coefficient of friction was a value obtained after transporting the tape 100 times. In accordance with change in the tension, calculations were performed by using an Euler's formula.

The still durability was evaluated by measuring time taken to attenuation of an output in a pause state to - 3 dB. The longest measuring time was 150 minutes.

**[Table 1]**

| | Lubricant | Environmental Temperature | Coefficient of Friction | Still Durability (Minutes) |
|---|---|---|---|---|
| Example 1 | Liquid Crystal Molecule 1 | 25°C 60% | 0.20 | > 150 |
| | | -5°C | 0.22 | > 150 |
| | | 40°C 80% | 0.21 | > 150 |
| Example 2 | Liquid Crystal Molecule 2 | 25°C 60% | 0.17 | > 150 |
| | | -5°C | 0.19 | > 150 |
| | | 40°C 80% | 0.18 | > 150 |
| Example 3 | Liquid Crystal Molecule 3 | 25°C 60% | 0.17 | > 150 |
| | | -5°C | 0.19 | > 150 |
| | | 40°C 80% | 0.18 | > 150 |
| | Lubricant | Environmental Temperature | Coefficient of Friction | Still Durability (Minutes) |
| Example 4 | Liquid Crystal Molecule 4 | 25°C 60% | 0.19 | > 150 |
| | | -5°C | 0.21 | > 150 |
| | | 40°C 80% | 0.20 | > 150 |

**[Table 2]**

| | Lubricant | Environmental Temperature | Coefficient of Friction | Still Durability (Minutes) |
|---|---|---|---|---|
| Example 5 | Liquid Crystal Molecule 5 | 25°C 60% | 0.20 | > 150 |
| | | -5°C | 0.22 | > 150 |
| | | 40°C 80% | 0.21 | > 150 |
| Example 6 | Liquid Crystal Molecule 6 | 25°C 60% | 0.19 | > 150 |
| | | -5°C | 0.21 | > 150 |
| | | 40°C 80% | 0.20 | > 150 |
| Example 7 | Liquid Crystal Molecule 7 | 25°C 60% | 0.17 | > 150 |
| | | -5°C | 0.19 | > 150 |
| | | 40°C 80% | 0.18 | > 150 |
| Example 8 | Liquid Crystal Molecule 8 | 25°C 60% | 0.17 | > 150 |
| | | -5°C | 0.19 | > 150 |
| | | 40°C 80% | 0.18 | > 150 |
| Comparative Example 1 | Stearic Acid | 25°C 60% | 0.22 | 90 |
| | | -5°C | 0.24 | 10 |
| | | 40°C 80% | 0.22 | 30 |
| Comparative Example 2 | Methyl Stearate | 25°C 60% | 0.28 | 120 |
| | | -5°C | 0.33 | 60 |
| | | 40°C 80% | 0.36 | 90 |

As can be understood from Tables 1 and 2, the coefficient of friction of each of the magnetic tapes containing liquid crystal molecules 1 to 8 each serving as the lubricant was reduced and the still characteristic of the same was excellent as compared with the comparative examples containing the stearic acid or methyl stearate which was the conventional lubricant. Thus, employment of the liquid crystal molecules as the lubricant enables excellent continuous sliding resistance and low viscosity to be obtained.

### (Manufacturing of Thin Metal Magnetic Tape)

### Example 9

Initially, the surface of the PET film having a thickness of 10 µm was coated with Co-Ni alloy by a diagonal evaporation method so that a ferromagnetic thin metal film having a thickness of 100 nm was formed. Then, sputtering was performed so that a carbon protective film having a thickness of 10 nm was formed on the surface of the ferromagnetic thin metal film. Then, liquid crystal molecule 1 which was the lubricant similar to Example 1 was applied. The quantity of applied liquid crystal molecule 1 was 10 mg/m². The PET films were cut to have the width of 8 mm so that tapes were manufactured. Thus, thin metal magnetic tapes were manufactured.

### Examples 10 to 16

A process similar to that according to Example 9 was performed except for liquid crystal molecules 2 to 8 employed as the lubricants in place of liquid crystal molecule 1 so that thin metal magnetic tapes were manufactured.

### Comparative Example 3

A process similar to that according to Example 9 was performed except for stearic acid which was a usual lubricant and which was employed in place of liquid crystal molecule 1 so that thin metal magnetic tapes were manufactured.

### Comparative Example 4

A process similar to that according to Example 9 was performed except for methyl stearate which was a usual lubricant and which was employed in place of liquid crystal molecule 1 so that thin metal magnetic tapes were manufactured.

### valuation of Characteristics

The magnetic tapes according to Examples 9 to 16 and Comparative Examples 3 and 4 were measured. The coefficient of friction and still durability were measured similar to Example 1 when the temperature was 25°C and the relative humidity was 60 %, the temperature was 40°C and the relative humidity was 80 % and the temperature was-5°C. Results were shown in Tables 3 and 4.

**[Table 3]**

| | Lubricant | Environmental Temperature | Coefficient of Friction | Still Durability (Minutes) |
|---|---|---|---|---|
| Example 9 | Liquid Crystal Molecule 1 | 25°C 60% | 0.21 | > 150 |
| | | -5°C | 0.23 | > 150 |
| | | 40°C 80% | 0.23 | > 150 |
| Example 10 | Liquid Crystal Molecule 2 | 25°C 60% | 0.22 | > 150 |
| | | -5°C | 0.24 | > 150 |
| | | 40°C 80% | 0.23 | > 150 |
| Example 11 | Liquid Crystal Molecule 3 | 25°C 60% | 0.18 | > 150 |
| | | -5°C | 0.20 | > 150 |
| | | 40°C 80% | 0.19 | > 150 |
| Example 12 | Liquid Crystal Molecule 4 | 25°C 60% | 0.21 | > 150 |
| | | -5°C | 0.23 | > 150 |
| | | 40°C 80% | 0.23 | > 150 |

**[Table 4]**

| | Lubricant | Environmental Temperature | Coefficient of Friction | Still Durability (Minutes) |
|---|---|---|---|---|
| Example 13 | Liquid Crystal Molecule 5 | 25°C 60% | 0.22 | > 150 |
| | | -5°C | 0.24 | > 150 |
| | | 40°C 80% | 0.23 | > 150 |
| Example 14 | Liquid Crystal Molecule 6 | 25°C 60% | 0.21 | > 150 |
| | | -5°C | 0.23 | > 150 |
| | | 40°C 80% | 0.23 | > 150 |
| Example 15 | Liquid Crystal Molecule 7 | 25°C 60% | 0.18 | > 150 |
| | | -5°C | 0.20 | > 150 |
| | | 40°C 80% | 0.19 | > 150 |
| Example 16 | Liquid Crystal Molecule 8 | 25°C 60% | 0.21 | > 150 |
| | | -5°C | 0.23 | > 150 |
| | | 40°C 80% | 0.23 | > 150 |
| Comparative Example 3 | Stearic Acid | 25°C 60% | 0.22 | 60 |
| | | -5 °C | 0.25 | 5 |
| | | 40°C 80% | 0.23 | 10 |
| Comparative Example 4 | Methyl Stearate | 25°C 60% | 0.29 | 100 |
| | | -5°C | 0.35 | 40 |
| | | 40°C 80% | 0.38 | 60 |

As can be understood from Tables 3 and 4, the coefficient of friction of each of the magnetic tapes containing liquid crystal molecules 1 to 8 each serving as the lubricant was reduced and the still characteristic of the same was excellent as compared with the comparative examples containing the stearic acid or methyl stearate which was the conventional lubricant. Thus, employment of the liquid crystal molecules as the lubricant enables excellent continuous sliding resistance and low viscosity to be obtained.

As can be understood from the results, an excellent lubricating effect can be obtained with the coating type magnetic tape and the thin metal magnetic tape. The lubricating film may be formed by the containing method employed for the coating type magnetic tape or the top coating method employed for the thin metal magnetic tape to obtain excellent characteristics.

### (Manufacturing of Thin Metal Film Magnetic Disc)

### Example 17

Initially, sputtering was performed so that a NIP base film having a thickness of 10 µm, a Cr intermediate layer having a thickness of 0.5 µm, a Co-Cr-Pt magnetic layer having a thickness of 60 nm and a carbon protective film having a thickness of 20 nm were sequentially formed on a mirror-polished surface of an aluminum alloy substrate and having a diameter of 3.5 inches. The roughness of the surface of the magnetic disc was 1.2 nm as average roughness (Ra) along the center line.

Then, lubricant was prepared in which liquid crystal molecule 1 was dissolved in chloroform at a concentration of 0.01 wt%. The foregoing magnetic disc was dipped in the lubricant so that liquid crystal molecule 1 was applied to the surface of the magnetic disc. The application was performed such that the duration in the lubricant was 180 seconds and raising speed from the lubricant was 0.25 mm/second. Then, the magnetic disc was dipped in pure chloroform so as to remove liquid crystal molecule 1 adhered excessively from the magnetic disc. Thus, a lubricating film having a total thickness of 2.5 nm (measured by an ellipsometer) and a quantity of application was 10 mg/m² was formed. As a result, a thin metal-magnetic film type magnetic disc was manufactured.

### Examples 18 to 24

A process similar to that according Example 17 was performed except for liquid crystal molecules 2 to 8 which were employed as the lubricants in place of liquid crystal molecule 1 so that thin metal-magnetic-film type magnetic discs were manufactured.

### Comparative Example 5

A process similar to that according Example 17 was performed except for the following fluorine lubricant (having a molecular weight of 4000) which was employed as the lubricant in place of liquid crystal molecule 1 so that thin metal-magnetic-film type magnetic disc was manufactured.

HO-CH₂CF₂(OCF₂CF₂)ₘ(OCF₂)ₙCF₂CH₂OH

### Evaluation of Characteristics

Each of the magnetic discs obtained as described above and according to Examples 17 to 24 and Comparative Example 5 was mounted on a magnetic recording/reproducing apparatus to measure a maximum coefficient of static friction, a dynamic coefficient of friction and number of rounds at which a head crash took place. Results were shown in Table 5.

The maximum coefficient of static friction was measured such that the magnetic disc was rotated at low speed in a state in which the head slider and the magnetic disc were in contact with each other to measure frictional force produced immediately after the rotation. The measurement conditions were such that the pressing load of the head was 5 g and the number of revolutions of the disc was 1 rpm.

The dynamic coefficient of friction was measured such that the he ad slider was continuously slid 200,000 times in a state in which the head slider was in contact with the magnetic disc so as to measure generated maximum frictional force. Measurement conditions were such that the pressing load of the head was 5 g and the number of revolutions was 150 rpm. If head crash occurs after the disc was rotated 200,000 times or less, the maximum frictional force produced until the head crash took place was measured.

The head crash of the magnetic disc is a state in which the carbon protective film which is the base of the lubricating film is completely worn and the magnetic film is exploded outside. If the head crash occurs, visible slide scars are formed. At this time, the experiment was interrupted and the number of rotations was recorded. Note that the maximum number of rotations was 200,000 times.

**[Table 5]**

| | Lubricant | Maximum Coefficient of Static Friction | Dynamic Coefficient of Friction | Number of Rotations when Crash Took Places |
|---|---|---|---|---|
| Example 17 | Liquid Crystal Molecule 1 | 0.20 | 0.21 | >200k |
| Example 18 | Liquid Crystal Molecule 2 | 0.19 | 0.20 | >200k |
| Example 19 | Liquid Crystal Molecule 3 | 0.19 | 0.21 | >200k |
| Example 20 | Liquid Crystal Molecule 4 | 0.20 | 0.21 | >200k |
| Example 21 | Liquid Crystal Molecule 5 | 0.20 | 0.21 | >200k |
| Example 22 | Liquid Crystal Molecule 6 | 0.21 | 0.22 | >200k |
| Example 23 | Liquid Crystal Molecule 7 | 0.21 | 0.21 | >200k |
| Example 24 | Liquid Crystal Molecule 8 | 0.20 | 0.21 | >200k |
| Comparative Example 5 | Fluorine Lubricant | 0.21 | 0.21 | 100k |

As can be understood from Table 5, the magnetic discs each incorporating the liquid crystal molecules as the lubricant resulted in the maximum coefficient of static friction and dynamic coefficient of friction similar to those of the magnetic discs according to the comparative examples. Moreover, the number of rotations performed until the head crash took place was enlarged. Thus, a fact can be understood that use of the liquid crystal molecules as the lubricant enables excellent continuous sliding resistance, low viscosity and large meniscus force to be obtained.

### (Manufacturing of Coating-Type Magnetic Tape)

### Example 25

Initially, ferromagnetic powder, a binder, additives, a lubricant and solvent having the following compositions were kneaded by an extruder, and then dispersed for 6 hours by a sand mill. Thus, a magnetic coating material was prepared.

### (Composition of Magnetic Coating Material)

| | |
|---|---|
| Fe Metal Ferromagnetic Powder (coercive force = 160 kA/m, amount of saturation magnetization = 145 Am²/kg, specific surface area = 51 m²/g, length of major axis = 0.08 µm and needle ratio = 3) | 100 parts by weight |
| Polyvinyl Chloride Resin (MR-110 manufactured by Japanese Geon) | 14 parts by weight |
| Polyester Polyurethane (MG-130 manufactured by Toyo Spinning) | 3 parts by weight |
| Additive (Al₂O₃) | 5 parts by weight |
| Lubricant (the following liquid crystal molecule 9) | 3 parts by weight |
| Methylethylketone | 150 parts by weight |
| Cyclohexanone | 150 parts by weight |

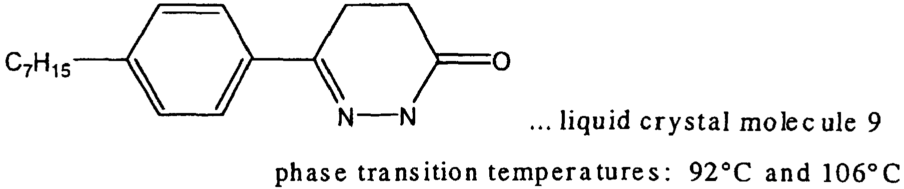

Then, 3 parts by weight of polyisocyanate were added to the obtained magnetic coating material. The coating material for making a magnetic layer was applied to the surface of polyethylene terephthalate (hereinafter called "PET") having a thickness of 7 µm so as to have a thickness of 6.5 µm. A solenoid coil was operated to perform an orienting process, and then a drying process, a calender process and a hardening process were performed. Thus, a magnetic layer was formed. Then, a back coating material having the following composition was applied to the surface of the PET film opposite to the surface on which the magnetic layer was formed. The PET film was cut to have a width of 8 mm so as to be tape shape. As a result, a coating type magnetic tape was manufactured.

### 〈Composition of Back Coating Material〉

| | |
|---|---|
| Carbon Black (#50 manufactured by Asahi Carbon) | 100 parts by weight |
| Polyester Polyurethane (trade name: Nipporan N-2304) | 100 parts by weight |
| Methylethylketone | 500 parts by weight |
| Toluene | 500 parts by weight |

### Examples 26 to 32

A similar process to that according to Example 25 was performed except for the following liquid crystal molecules 10 to 16 employed as the lubricant in place of the liquid crystal molecule 9 so that coating type magnetic tapes were manufactured.

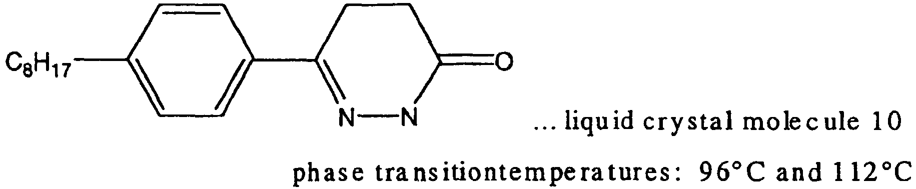

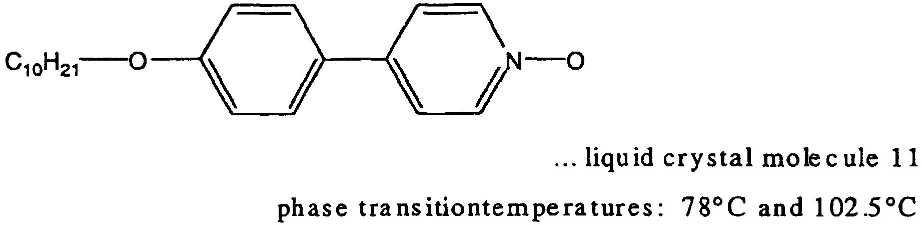

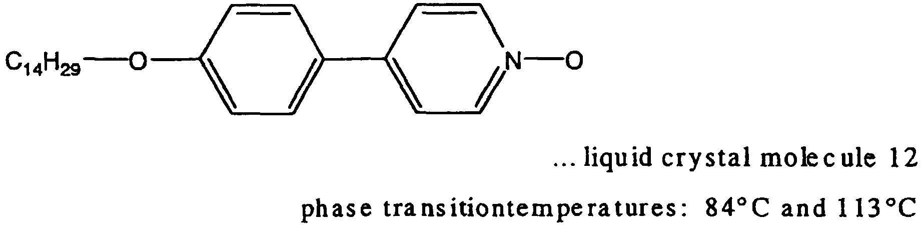

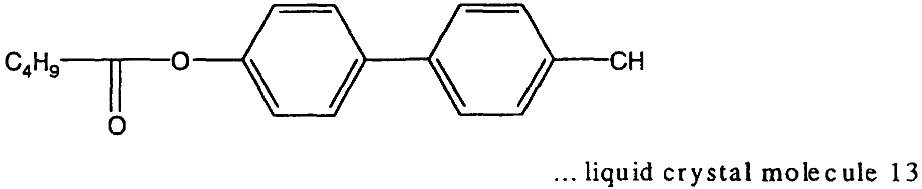

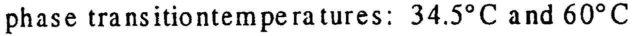

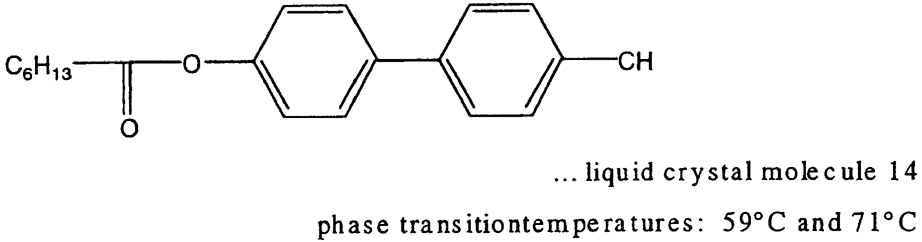

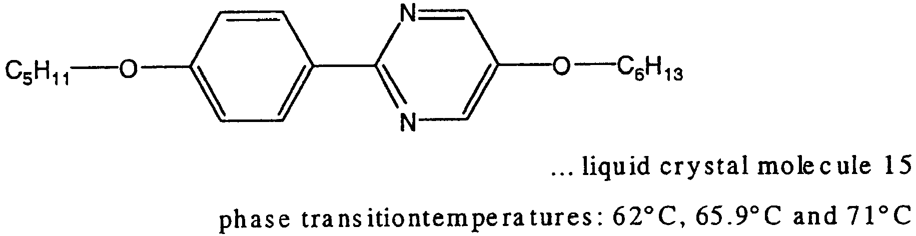

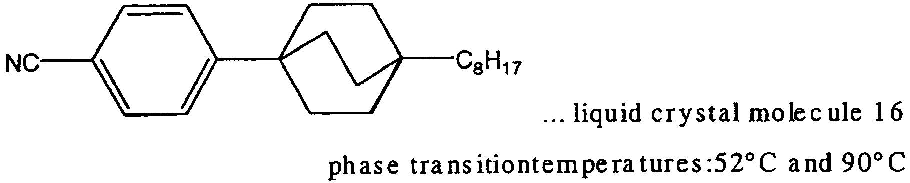

### Comparative Example 6

A process similar to that according to Example 25 was performed except for the lubricant which was stearic acid which was a usual lubricant employed in place of liquid crystal molecule 9 so that a coating type magnetic tape was manufactured.

### Comparative Example 7

A process similar to that according to Example 25 was performed except for the lubricant which was methyl stearate which was a usual lubricant employed in place of liquid crystal molecule 9 so that a coating type magnetic tape was manufactured.

### Comparative Example 8

A process similar to that according to Example 25 was performed except for the lubricant which was butyl stearate which was a usual lubricant employed in place of liquid crystal molecule 9 so that a coating type magnetic tape was manufactured.

### Evaluation of Characteristics

The magnetic tapes according to Examples 25 to 32 and Comparative Examples 6 to 8 were measured. The coefficient of friction and still durability were measured when the temperature was 25°C and the relative humidity was 60 %, the temperature was 40°C and the relative humidity was 80 % and the temperature was - 5°C. Results were shown in Tables 6 and 7.

The coefficient of friction was measured by using a usual shuttle under a load of 20 g at a tape speed of 5 mm/second. The value of the coefficient of friction was a value obtained after transporting the tape 100 times. In accordance with change in the tension, calculations were performed by using an Euler's formula.

The still durability was evaluated by measuring time taken to attenuation of an output in a pause state to - 3 dB. The longest measuring time was 150 minutes.

**[Table 6]**

| | | Lubricant | Conditions | Coefficient of Friction | Still Durability (Minutes) |
|---|---|---|---|---|---|
| Coating -Type Tape | Example 25 | Liquid Crystal Molecule 9 | 25°C 60% | 0.20 | > 150 |
| | | | -5°C | 0.22 | > 150 |
| | | | 40°C 80% | 0.21 | > 150 |
| | Example 26 | Liquid Crystal Molecule 10 | 25°C 60% | 0.19 | > 150 |
| | | | -5°C | 0.21 | > 150 |
| | | | 40°C 80% | 0.20 | > 150 |
| | Example 27 | Liquid Crystal Molecule 11 | 25°C 60% | 0.17 | > 150 |
| | | | -5°C | 0.19 | > 150 |
| | | | 40°C 80% | 0.18 | > 150 |
| | Example 28 | Liquid Crystal Molecule 12 | 25°C 60% | 0.17 | > 150 |
| | | | -5°C | 0.19 | > 150 |
| | | | 40°C 80% | 0.18 | > 150 |
| | Example 29 | Liquid Crystal Molecule 13 | 25°C 60% | 0.19 | > 150 |
| | | | -5°C | 0.21 | > 150 |
| | | | 40°C 80% | 0.20 | > 150 |
| | Example 30 | Liquid Crystal Molecule 14 | 25°C 60% | 0.17 | > 150 |
| | | | -5°C | 0.19 | > 150 |
| | | | 40°C 80% | 0.18 | > 150 |
| | Example 31 | Liquid Crystal Molecule 15 | 25°C 60% | 0.20 | > 150 |
| | | | -5°C | 0.22 | > 150 |
| | | | 40°C 80% | 0.21 | > 150 |
| | Example 32 | Liquid Crystal Molecule 16 | 25°C 60% | 0.17 | > 150 |
| | | | -5°C | 0.19 | > 150 |
| | | | 40°C 80% | 0.18 | > 150 |

**[Table 7]**

| | | Lubricant | Conditions | Coefficient of Friction | Still Durability (Minutes) |
|---|---|---|---|---|---|
| Coating -Type Tape | Comparative Example 6 | Stearic Acid | 25°C 60% | 0.22 | 90 |
| | | | -5°C | 0.24 | 10 |
| | | | 40°C 80% | 0.22 | 30 |
| | Comparative Example 7 | Methyl Stearate | 25°C 60% | 0.28 | 120 |
| | | | -5°C | 0.33 | 60 |
| | | | 40°C 80% | 0.36 | 90 |
| | Comparative Example 8 | Methyl Stearate | 25°C 60% | 0.26 | 120 |
| | | | -5°C | 0.35 | 10 |
| | | | 40°C 80% | 0.28 | 60 |

As can be understood from Tables 6 and 7, the coefficient of friction of each of the magnetic tapes containing liquid crystal molecules 9 to 16 each serving as the lubricant was reduced and the still characteristic of the same was excellent as compared with the comparative examples containing the stearic acid or methyl stearate which was the conventional lubricant. Thus, employment of the liquid crystal molecules as the lubricant enables excellent continuous sliding resistance and low viscosity to be obtained.

Then, the following liquid crystal molecule 17 (a cyanoalkylbiphenyl compound) or liquid crystal molecule 18 (a cyanoalkoxybiphenyl compound) was employed as the lubricant to detect a preferred amount of addition and the number of carbon atoms in a hydrophobic group (CH₂)ₙCH₃.

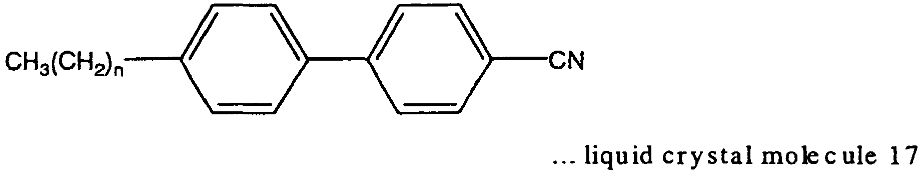

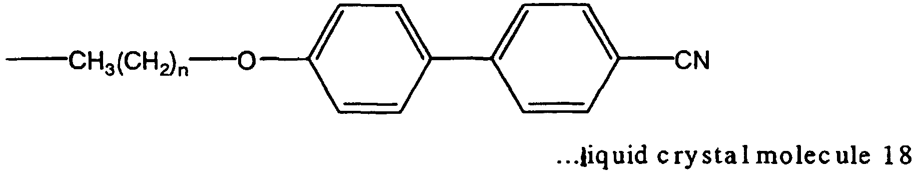

### Experiments 1 to 5

A process similar to that according to Example 25 was performed except for liquid crystal molecule 17 (the cyanoalkyl biphenyl compound) which was employed as the lubricant and n of the hydrophobic group - (CH₂)ₙCH₃ which was 7 and the amounts of addition which were 0, 1, 0, 5, 3, 7 and 15 so that coating-type magnetic tapes were manufactured.

### Experiments 6 to 8

A process similar to that according to Example 25 was performed except for liquid crystal molecule 17 (the cyanoalkyl biphenyl compound) which was employed as the lubricant and n of the hydrophobic group - (CH₂)ₙCH₃ which was 1, 5 and 12 so that coating-type magnetic tapes were manufactured.

### Experiments 9 to 13

A process similar to that according to Example 25 was performed except for liquid crystal molecule 18 (the cyanoalkoxy biphenyl compound) which was employed as the lubricant and n of the hydrophobic group - O (CH₂)ₙCH₃ which was 7 and the amounts of addition which were 0, 1, 0, 5, 3, 7 and 15 so that coating-type magnetic tapes were manufactured.

### Experiments 14 to 16

A process similar to that according to Example 25 was performed except for liquid crystal molecule 18 (the cyanoalkoxy biphenyl compound) which was employed as the lubricant and n of the hydrophobic group - O (CH₂)ₙCH₃ which was 1, 5 and 12 so that coating-type magnetic tapes were manufactured.

### Evaluation of Characteristics

The coating-type magnetic tapes according to Experiments 1 to 16 were measured. The coefficient of friction and still durability were measured similarly to Example 25 when the temperature was 25°C and the relative humidity was 60 %, the temperature was - 5°C and the temperature was 40°C and the relative humidity was 80 % and Results were shown in Tables 8 and 9.

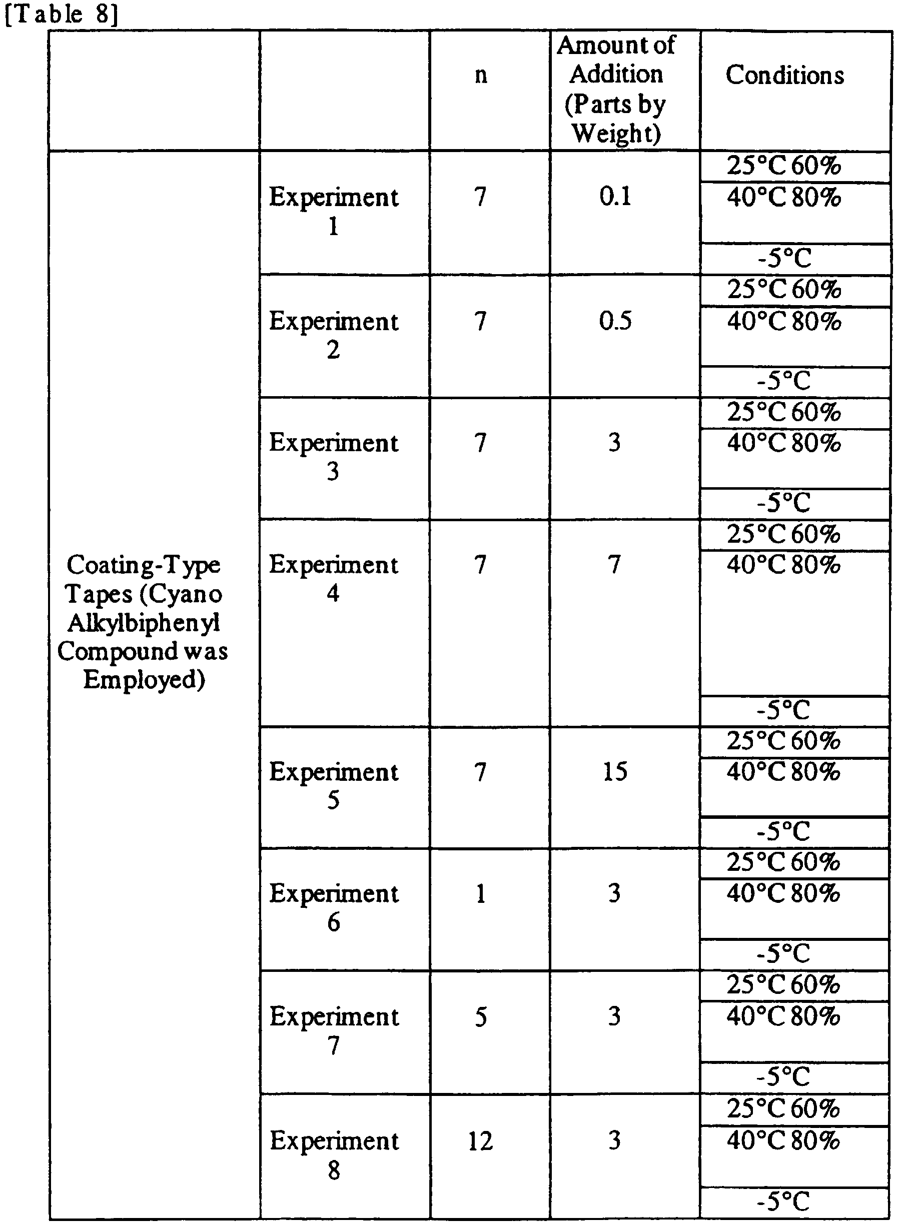

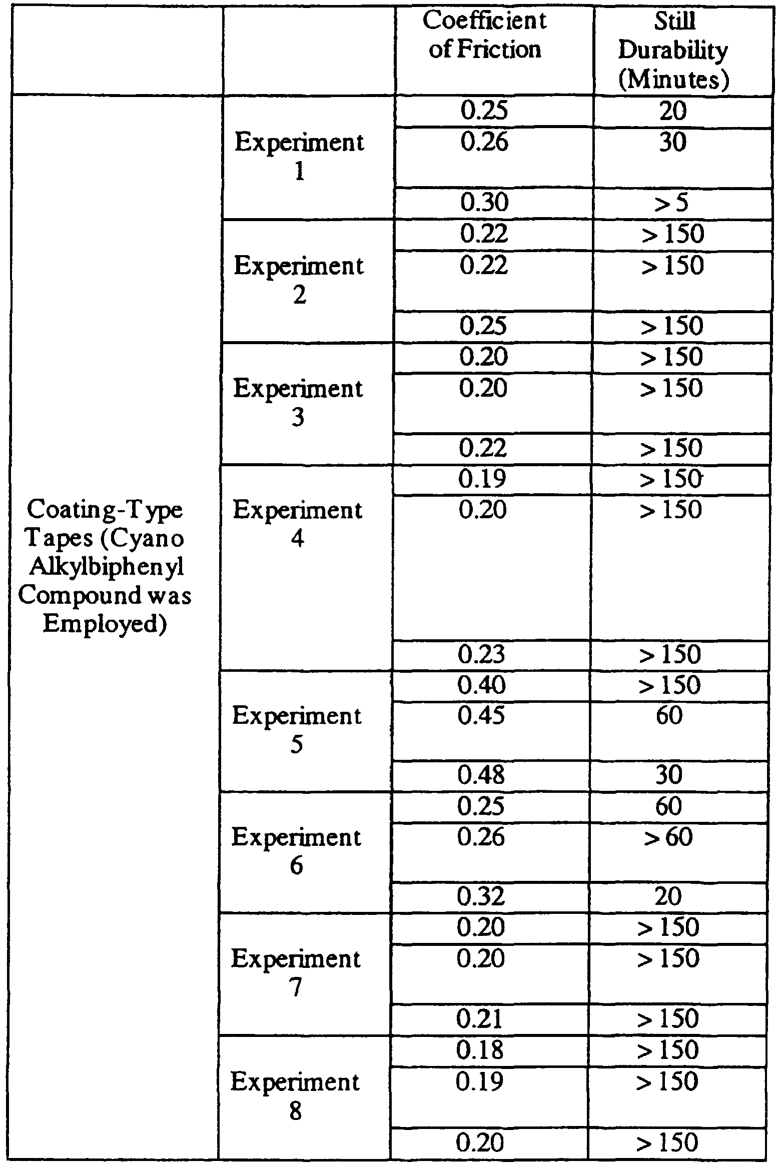

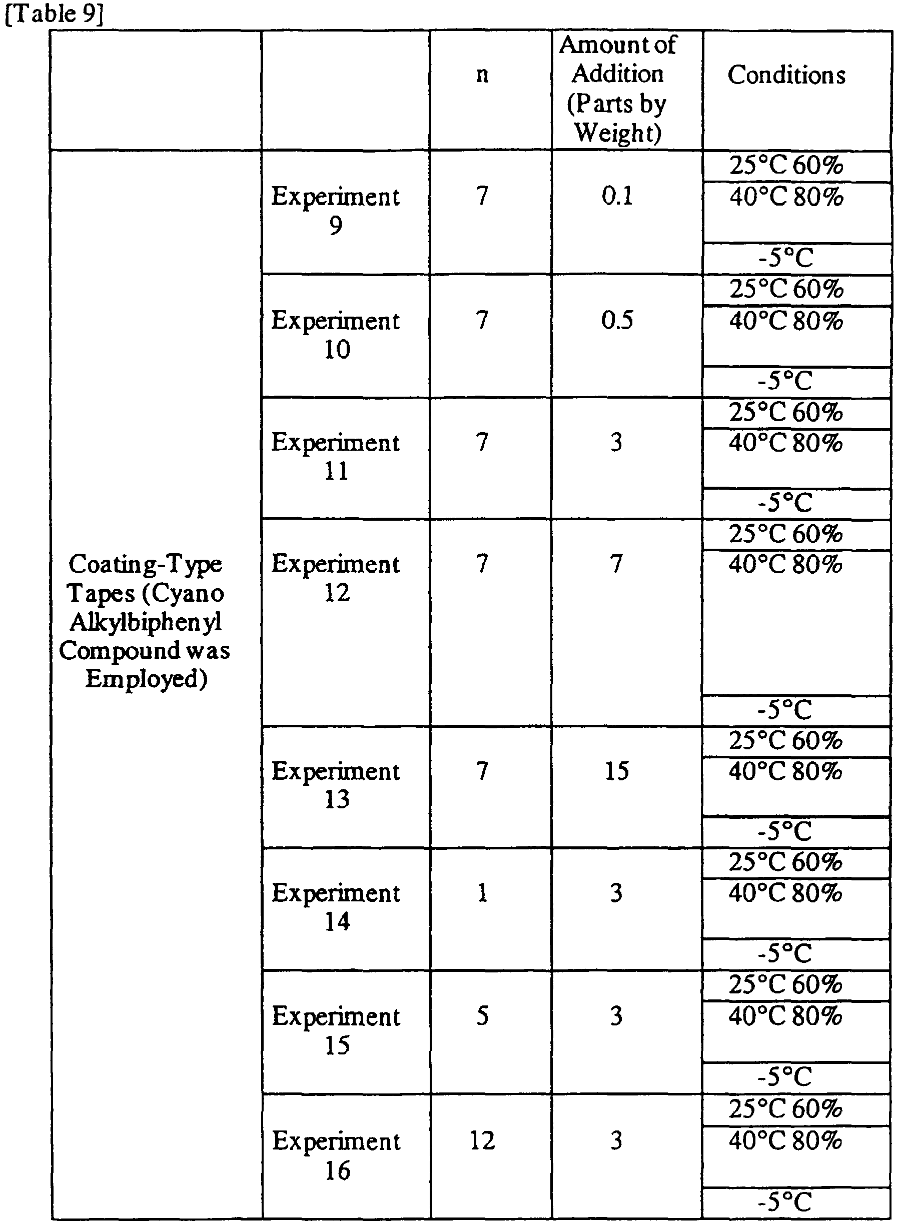

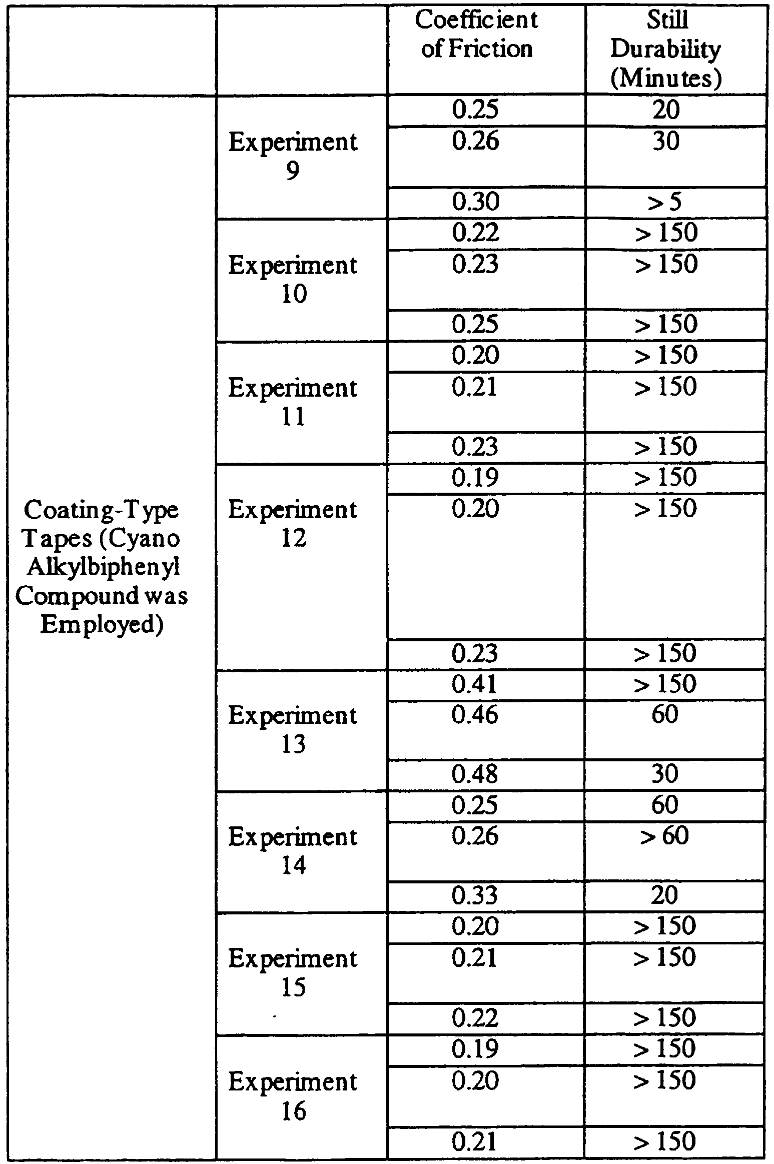

As can be understood from results shown in Tables 8 and 9, it is preferable that the amount of addition of the liquid crystal molecules is 0.5 part by weight to 10 parts by weight with respect to 100 parts by weight of ferromagnetic powder. In general, the friction and still characteristics can be improved in proportion to the amount of addition of the liquid crystal molecules. An optimum amount exists in the foregoing amount of addition. If the amount of the added liquid crystal molecules is enlarged excessively, sticking easily occurs. Thus, the coefficient of friction is undesirably raised and the still characteristic deteriorates.

Moreover, it is preferable that the number of carbon atoms in the hydrophobic group of each of the liquid crystal molecules 17 and 18 is 3 to 15. If the number of carbon atoms is 2 or smaller, the length of the hydrophobic group is too short to obtain satisfactory friction and still characteristics.

Then, the lubricant was not contained in the magnetic layer and the same was applied as a top coat on the surface of the magnetic layer to examine a suitable amount of coating.

### Experiments 17 to 23

Liquid crystal molecule 17 (the cyanoalkyl biphenyl compound) having the hydrophobic group - (CH₂)ₙCH₃ in which n was 7 and serving as the lubricant was not added to the magnetic layer. The surface of the magnetic layer was top-coated with the lubricant. The amounts of coating was 0, 3, 1, 5, 10, 35, 50 and 100, respectively. A similar process to that according to Example 25 was performed except for the foregoing arrangement so that a coating-type magnetic tape was manufactured.

### Experiments 24 to 30

Liquid crystal molecule 18 (the cyanoalkoxy biphenyl compound) having the hydrophobic group - O (CH₂)ₙCH₃ in which n was 7 and serving as the lubricant was not added to the magnetic layer. The surface of the magnetic layer was top-coated with the lubricant. The amounts of coating was 0, 3, 1, 5, 10, 35, 50 and 100, respectively. A similar process to that according to Example 25 was performed except for the foregoing arrangement so that a coating-type magnetic tape was manufactured.

### Evaluation of Characteristics

The coating-type magnetic tapes according to Experiments 17 to 30 were measured. The coefficient of friction and still durability were measured similarly to Example 25 when the temperature was 25°C and the relative humidity was 60 %, the temperature was - 5°C and the temperature was 40°C and the relative humidity was 80 %. Results were shown in Tables 10 and 11.

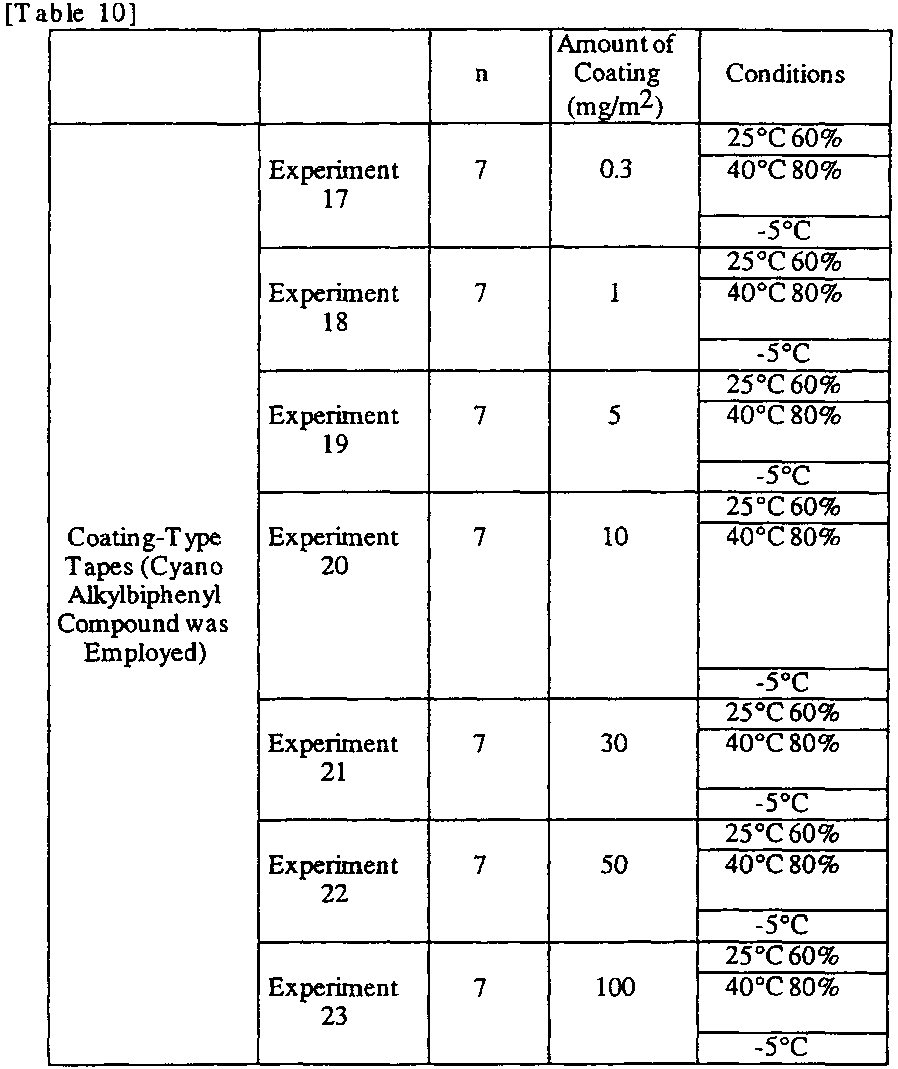

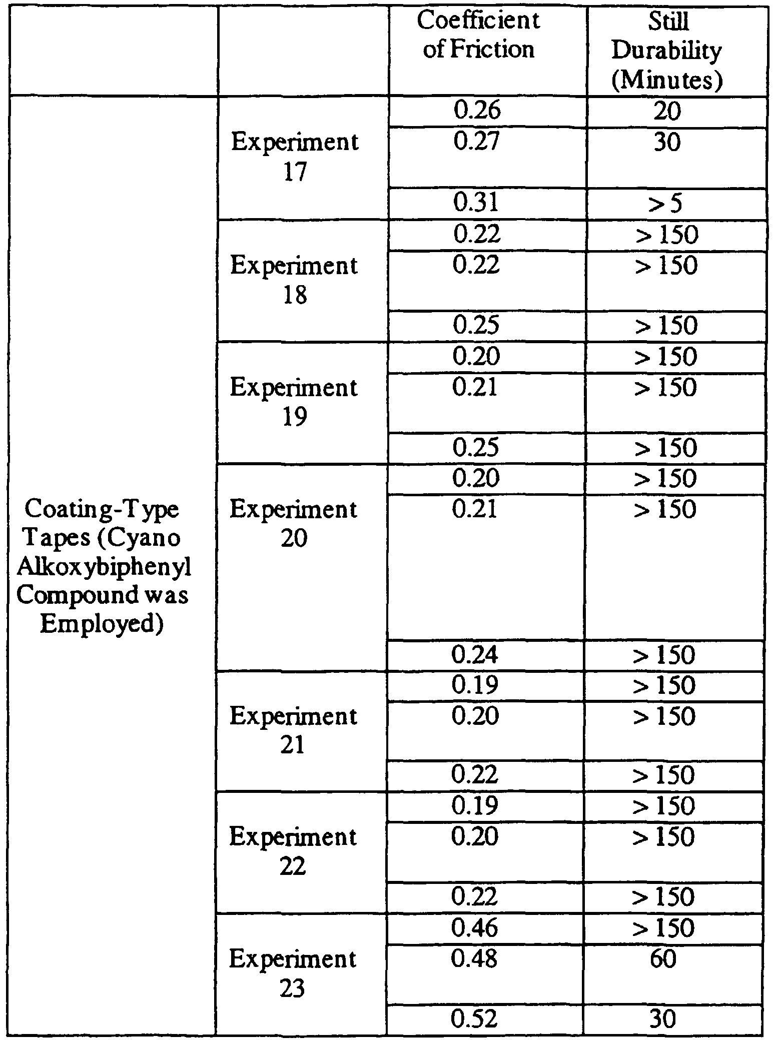

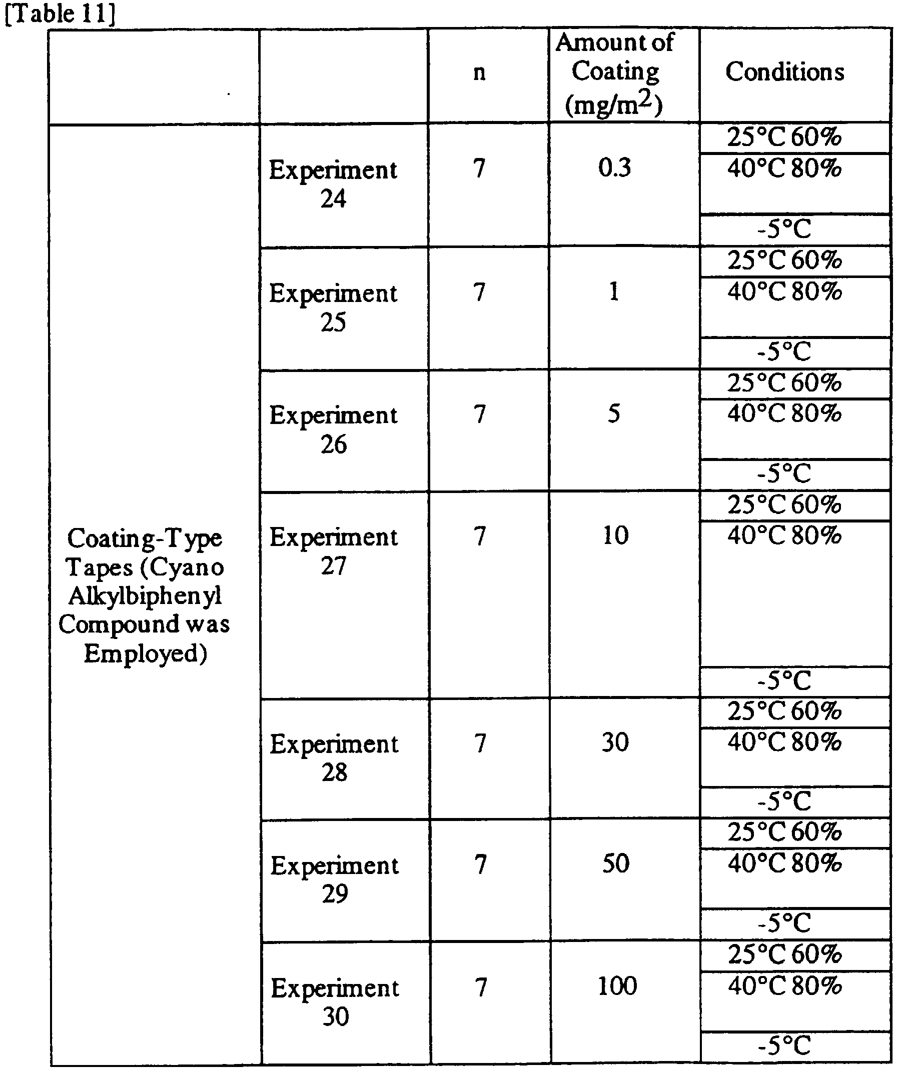

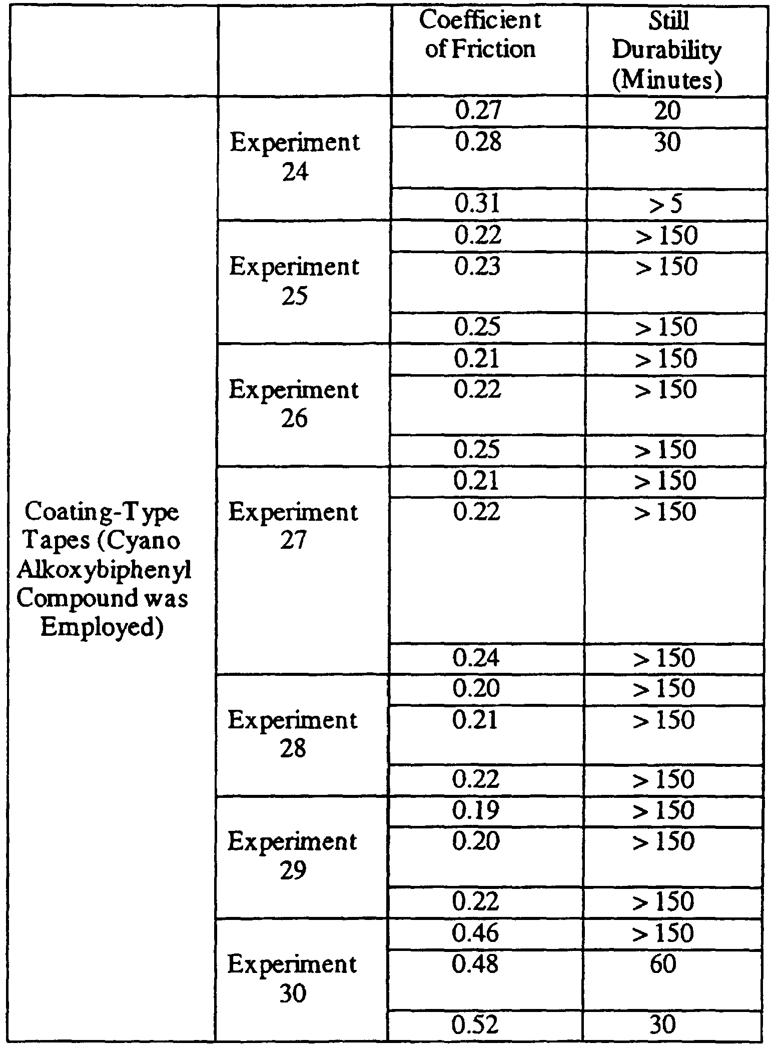

As can be understood from results shown in Tables 10 and 11, addition of the liquid crystal molecules to the inside portion of the magnetic layer as the lubricant and coating of the same to the surface of the magnetic layer enable an excellent result to be obtained.

It is preferable that the amount of coating of the liquid crystal molecules is 1 mg/m² to 50 mg/m². In general, the friction and still characteristics can be improved in proportion to the amount of addition of the liquid crystal molecules. An optimum amount exists in the foregoing amount of addition. If the amount of the added liquid crystal molecules is enlarged excessively, sticking easily occurs. Thus, the coefficient of friction is undesirably raised and the still characteristic deteriorates.

Then, the lubricant was not added to the inside portion of the magnetic layer and the same was added to the inside portion of the backcoat layer to examine a suitable amount of coating.

### Experiments 31 to 33

Liquid crystal molecule 17 (the cyanoalkyl biphenyl compound) having the hydrophobic group - (CH₂)ₙCH₃ in which n was 7 and serving as the lubricant was not added to the magnetic layer. The lubricant was added to the inside portion of the backcoat layer such that the amounts of coating was 5, 10 and 20, respectively. A similar process to that according to Example 25 was performed except for the foregoing arrangement so that a coating-type magnetic tape was manufactured.

### Experiments 34 to 36

Liquid crystal molecule 18 (the cyanoalkoxy biphenyl compound) having the hydrophobic group - O (CH₂)ₙCH₃ in which n was 7 and serving as the lubricant was not added to the magnetic layer. The lubricant was added to the inside portion of the backcoat layer such that the amounts of coating was 5, 10 and 20, respectively. A similar process to that according to Example 25 was performed except for the foregoing arrangement so that a coating-type magnetic tape was manufactured.

### Evaluation of Characteristics

The coating-type magnetic tapes according to Experiments 31 to 36 were measured. The coefficient of friction and still durability were measured similarly to Example 25 when the temperature was 25°C and the relative humidity was 60 %, the temperature was - 5°C and the temperature was 40°C and the relative humidity was 80 %. Results were shown in Tables 12 and 13.

**[Table 12]**

| | | n | Amount of Addition (Parts by Weight) | Conditions | Coefficient of Friction | Still Durability (Minutes) |
|---|---|---|---|---|---|---|
| Coating -Type Tape | Experiment 31 | 7 | 5 | 25°C 60% | 0.22 | > 150 |
| | | | | 40°C 80% | 0.21 | > 150 |
| | | | | -5°C | 0.25 | > 150 |
| | Experiment 32 | 7 | 10 | 25°C 60% | 0.19 | > 150 |
| | | | | 40°C 80% | 0.20 | > 150 |
| | | | | -5°C | 0.21 | > 150 |
| | Experiment 33 | 7 | 20 | 25°C 60% | 0.21 | > 150 |
| | | | | 40°C 80% | 0.21 | > 150 |
| | | | | -5°C | 0.22 | > 150 |

**[Table 13]**

| | | n | Amount of Addition (Parts by Weight) | Conditions | Coefficient of Friction | Still Durability (Minutes) |
|---|---|---|---|---|---|---|
| Coating -Type Tape | Experiment 34 | 7 | 5 | 25°C 60% | 0.22 | > 150 |
| | | | | 40°C 80% | 0.23 | > 150 |
| | | | | -5°C | 0.25 | > 150 |
| | Experiment 35 | 7 | 10 | 25°C 60% | 0.19 | > 150 |
| | | | | 40°C 80% | 0.20 | > 150 |
| | | | | -5°C | 0.22 | > 150 |
| | Experiment 36 | 7 | 20 | 25°C 60% | 0.21 | > 150 |
| | | | | 40°C 80% | 0.21 | > 150 |
| | | | | -5°C | 0.23 | > 150 |

As can be understood from results shown in Tables 12 and 13, addition of the liquid crystal molecules to the inside portion of the magnetic layer as the lubricant or addition of the same to the inside portion of the backcoat layer enable excellent results to be obtained.

It is preferable that the amount of addition of the liquid crystal molecules is 5 parts by weight to 20 parts by weight.

### (Manufacturing of Thin Metal-Magnetic-Film Type Magnetic Tape)

### Example 33

Initially, the surface of the PET film having a thickness of 10 µm was coated with Co-Ni alloy by a diagonal evaporation method so that a ferromagnetic thin metal film having a thickness of 100 nm was formed. Then, sputtering was performed so that a carbon protective film having a thickness of 10 nm was formed on the surface of the ferromagnetic thin metal film. Then, liquid crystal molecule 9 which was the lubricant was applied to the surface of the carbon protective film. The quantity of applied liquid crystal molecule 9 was 10 mg/m². The PET films were cut to have the width of 8 mm so that tapes were manufactured. Thus, thin metal magnetic tapes were manufactured.

### Examples 34 to 40

A process similar to that according to Example 33 was performed except for liquid crystal molecules 10 to 16 employed as the lubricants in place of liquid crystal molecule 9 so that thin metal magnetic tapes were manufactured.

### Comparative Example 9

A process similar to that according to Example 33 was performed except for stearic acid which was a usual lubricant and which was employed in place of liquid crystal molecule 9 so that thin metal magnetic tapes were manufactured.

### Comparative Example 10

A process similar to that according to Example 33 was performed except for methyl stearate which was a usual lubricant and which was employed in place of liquid crystal molecule 9 so that thin metal magnetic tapes were manufactured.

### Comparative Examples 11 to 15

A process similar to that according to Example 33 was performed except for the following higher fatty acids 1 to 5 which were employed in place of liquid crystal molecule 9 so that thin metal-magnetic-film type magnetic tapes were manufactured. Note that p in the chemical formula 85 was determined such that p = 10 in higher fatty acid 1, p = 2 in higher fatty acid 2, p = 15 in higher fatty acid 3, p = 17 in higher fatty acid 4 and p = 20 in higher fatty acid 5.

CH₃(CH₂)ₚCOOH

### Evaluation of Characteristics

The thin metal-magnetic-film type magnetic tapes according to Examples 33 to 40 and Comparative Examples 9 to 15 were measured. The coefficient of friction and still durability were measured similar to Example 25 when the temperature was 25°C and the relative humidity was 60 %, the temperature was - 5°C and the temperature was 40°C and the relative humidity was 80 %. Results were shown in Tables 14 and 16.

**[Table 14]**

| | | Lubricant | Conditions | Coefficient of Friction | Still Durability (Minutes) |
|---|---|---|---|---|---|
| Thin Film Type Tapes | Example 33 | Liquid Crystal Molecule 9 | 25°C 60% | 0.21 | > 150 |
| | | | -5°C | 0.23 | > 150 |
| | | | 40°C 80% | 0.23 | > 150 |
| | Example 34 | Liquid Crystal Molecule 10 | 25°C 60% | 0.18 | > 150 |
| | | | -5°C | 0.20 | > 150 |
| | | | 40°C 80% | 0.19 | > 150 |
| | Example 35 | Liquid Crystal Molecule 11 | 25°C 60% | 0.22 | > 150 |
| | | | -5°C | 0.24 | > 150 |
| | | | 40°C 80% | 0.23 | > 150 |
| | Example 36 | Liquid Crystal Molecule 12 | 25°C 60% | 0.21 | > 150 |
| | | | -5°C | 0.23 | > 150 |
| | | | 40°C 80% | 0.23 | > 150 |
| | Example 37 | Liquid Crystal Molecule 13 | 25°C 60% | 0.18 | > 150 |
| | | | -5°C | 0.20 | > 150 |
| | | | 40°C 80% | 0.19 | > 150 |
| | Example 38 | Liquid Crystal Molecule 14 | 25°C 60% | 0.22 | > 150 |
| | | | -5°C | 0.24 | > 150 |
| | | | 40°C 80% | 0.23 | > 150 |
| | Example 39 | Liquid Crystal Molecule 15 | 25°C 60% | 0.21 | > 150 |
| | | | -5°C | 0.23 | > 150 |
| | | | 40°C 80% | 0.23 | > 150 |
| | Example 40 | Liquid Crystal Molecule 16 | 25°C 60% | 0.21 | > 150 |
| | | | -5°C | 0.23 | > 150 |
| | | | 40°C 80% | 0.23 | > 150 |

**[Table 15]**

| | | Lubricant | Conditions | Coefficient of Friction | Still Durability (Minutes) |
|---|---|---|---|---|---|
| Thin Film Type Tapes | Comparative Example 9 | Stearic Acid | 25°C 60% | 0.22 | 60 |
| | | | -5°C | 0.25 | 5 |
| | | | 40°C 80% | 0.23 | 10 |
| | Comparative Example 10 | Methyl Stearate | 25°C 60% | 0.29 | 100 |
| | | | -5°C | 0.35 | 40 |
| | | | 40°C 80% | 0.38 | 60 |

**[Table 16]**

| | | p | Conditions | Coefficient of Friction | Still Durability (Minutes) |
|---|---|---|---|---|---|
| Thin Film Type Tapes | Comparative Example 11 | 10 | 25°C 60% | 0.25 | > 150 |
| | | | 40°C 80% | 0.28 | > 60 |
| | | | -5°C | 0.35 | 6 |
| | Comparative Example 12 | 12 | 25°C 60% | 0.25 | > 150 |
| | | | 40°C 80% | 0.28 | > 60 |
| | | | -5°C | 0.35 | 6 |
| | Comparative Example 13 | 15 | 25°C 60% | 0.25 | > 150 |
| | | | 40°C 80% | 0.28 | > 60 |
| | | | -5°C | 0.35 | 6 |
| | Comparative Example 14 | 17 | 25°C 60% | 0.25 | > 150 |
| | | | 40°C 80% | 0.28 | > 60 |
| | | | -5°C | 0.35 | 6 |
| | Comparative Example 15 | 20 | 25°C 60% | 0.25 | > 150 |
| | | | 40°C 80% | 0.28 | > 60 |
| | | | -5°C | 0.35 | 6 |

As can be understood from Tables 14 to 16, the coefficient of friction of each of the magnetic tapes containing liquid crystal molecules 9 to 16 each serving as the lubricant was reduced and the still characteristic of the same was excellent as compared with the comparative examples containing the stearic acid, methyl stearate or higher fatty acid which was the conventional lubricant. Thus, employment of the liquid crystal molecules as the lubricant enables excellent continuous sliding resistance and low viscosity to be obtained.

As can be understood from the results, an excellent lubricating effect can be obtained with the coating type magnetic tape and the thin metal-magnetic-film type magnetic tape.

Then, the above-mentioned liquid crystal molecule 17 (the cyanoalkylbiphenyl compound) was employed as the lubricant to detect a preferred amount of addition and the number of carbon atoms in a hydrophobic group (CH₂)ₙCH₃.

### Experiments 37 to 46

A process similar to that according to Example 33 was performed except for liquid crystal molecule 17 (the cyanoalkyl biphenyl compound) which was employed as the lubricant and n of the hydrophobic group - (CH₂)ₙCH₃ which was changed to 3 to 15 so that thin metal-magnetic-film type magnetic tapes were manufactured.

### Evaluation of Characteristics

The magnetic tapes according to Experiments 37 to 46 were measured. The coefficient of friction and still durability were measured similarly to Example 25 when the temperature was 25°C and the relative humidity was 60 %, the temperature was - 5°C and the temperature was 40°C and the relative humidity was 80 % and Results were shown in Tables 17 and 18.

**[Table 17]**

| | | n | Conditions | Coefficient of Friction | Still Durability (Minutes) |
|---|---|---|---|---|---|
| Thin Film Tapes (Cyano Alkylbiphenyl Compound was Employed) | Experiment 37 | 3 | 25°C 60% | 0.20 | > 150 |
| | | | 40°C 80% | 0.21 | > 150 |
| | | | -5°C | 0.25 | > 150 |
| | Experiment 38 | 4 | 25°C 60% | 0.19 | > 150 |
| | | | 40°C 80% | 0.21 | > 150 |
| | | | -5°C | 0.24 | > 150 |
| | Experiment 39 | 5 | 25°C 60% | 0.19 | > 150 |
| | | | 40°C 80% | 0.21 | > 150 |
| | | | -5°C | 0.24 | > 150 |
| | Experiment 40 | 6 | 25°C 60% | 0.18 | > 150 |
| | | | 40°C 80% | 0.20 | > 150 |
| | | | -5°C | 0.23 | > 150 |
| | Experiment 41 | 7 | 25°C 60% | 0.20 | > 150 |
| | | | 40°C 80% | 0.21 | > 150 |
| | | | -5°C | 0.23 | > 150 |

**[Table 18]**

| | | n | Conditions | Coefficient of Friction | Still Durability (Minutes) |
|---|---|---|---|---|---|
| Thin Film Type Tapes (Cyano Alkoxybiphenyl Compound was Employed) | Experiment 42 | 8 | 25°C 60% | 0.19 | > 150 |
| | | | 40°C 80% | 0.20 | > 150 |
| | | | -5°C | 0.21 | > 150 |
| | Experiment 43 | 9 | 25°C 60% | 0.18 | > 150 |
| | | | 40°C 80% | 0.20 | > 150 |
| | | | -5°C | 0.23 | > 150 |
| | Experiment 44 | 11 | 25°C 60% | 0.18 | > 150 |
| | | | 40°C 80% | 0.19 | > 150 |
| | | | -5°C | 0.21 | > 150 |
| | Experiment 45 | 13 | 25°C 60% | 0.18 | > 150 |
| | | | 40°C 80% | 0.20 | > 150 |
| | | | -5°C | 0.22 | > 150 |
| | Experiment 46 | 15 | 25°C 60% | 0.18 | > 150 |
| | | | 40°C 80% | 0.20 | > 150 |
| | | | -5°C | 0.22 | > 150 |

As can be understood from results shown in Tables 17 and 18, it is preferable that the number of carbon atoms in the hydrophobic group is 3 to 15. If the number of carbon atoms is 2 or smaller, the length of the hydrophobic group is too short to obtain satisfactory friction and still characteristics. If the number of carbon atoms is 16 or larger, the dissolving characteristic deteriorates when the lubricant is applied to the surface of the magnetic layer.

### (Manufacturing of Thin Metal-Magnetic-Film Type Magnetic Disc)

### Example 41

Initially, sputtering was performed so that a NIP base film having a thickness of 10 µm, a Cr intermediate layer having a thickness of 0.5 µm, a Co-Cr-Pt magnetic layer having a thickness of 60 nm and a carbon protective film having a thickness of 20 nm were sequentially formed on a mirror-polished surface of an aluminum alloy substrate and having a diameter of 3.5 inches. The roughness of the surface of the magnetic disc was 1.2 nm as average roughness (Ra) along the center line.

Then, lubricant was prepared in which liquid crystal molecule 9 was dissolved in chloroform at a concentration of 0.01 wt%. The foregoing magnetic disc was dipped in the lubricant so that liquid crystal molecule 9 was applied to the surface of the magnetic disc. The application was performed such that the duration in the lubricant was 180 seconds and raising speed from the lubricant was 0.25 mm/second. Then, the magnetic disc was dipped in pure chloroform so as to remove liquid crystal molecule 9 adhered excessively from the magnetic disc. Thus, a lubricating film having a total thickness of 2.5 nm (measured by an ellipsometer) and a quantity of application was 10 mg/m² was formed. As a result, a thin metal-magnetic-film type magnetic disc was manufactured.

### Examples 42 to 48

A process similar to that according Example 41 was performed except for liquid crystal molecules 10 to 16 which were employed as the lubricants in place of liquid crystal molecule 9 so that thin metal-magnetic-film type magnetic discs were manufactured.

### Comparative Example 16

A process similar to that according Example 41 was performed except for the following fluorine lubricant (having a molecular weight of 4000) which was employed as the lubricant in place of liquid crystal molecule 9 so that thin metal-magnetic-film type magnetic disc was manufactured.

HO-CH₂CF₂(OCF₂CF₂)ₘ(OCF₂)ₙCF₂CH₂-OH

### Evaluation of Characteristics

Each of the magnetic discs obtained as described above and according to Examples 41 to 48 and Comparative Example 16 was mounted on a hard disc apparatus to measure a maximum coefficient of static friction, a dynamic coefficient of friction and number of rounds at which a head crash took place. Results were shown in Table 19.

The maximum coefficient of static friction was measured such that the magnetic disc was rotated at low speed in a state in which the head slider and the magnetic disc were in contact with each other to measure frictional force produced immediately after the rotation. The measurement conditions were such that the pressing load of the head was 5 g and the number of revolutions of the disc was 1 rpm.

The dynamic coefficient of friction was measured such that the head slider was continuously slid 200,000 times in a state in which the head slider was in contact with the magnetic disc so as to measure generated maximum frictional force. Measurement conditions were such that the pressing load of the head was 5 g and the number of revolutions was 150 rpm. If head crash occurs after the disc was rotated 200,000 times or less, the maximum frictional force produced until the head crash took place was measured.

The head crash of the magnetic disc is a state in which the carbon protective film which is the base of the lubricating film is completely worn and the magnetic film is exploded outside. If the head crash occurs, visible slide scars are formed. At this time, the experiment was interrupted and the number of rotations was recorded. Note that the maximum number of rotations was 200,000 times.

**[Table 19]**

| | | Lubricant | Maximum Coefficient of Static Friction | Dynamic Coefficient of Friction | Number of Rotations when Crash Took Places |
|---|---|---|---|---|---|
| Thin Film Type Magnetic Disc | Example 41 | Liquid Crystal Molecule 9 | 0.20 | 0.21 | >200k |
| | Example 42 | Liquid Crystal Molecule 10 | 0.19 | 0.20 | >200k |
| | Example 43 | Liquid Crystal Molecule 11 | 0.21 | 0.21 | >200k |
| | Example 44 | Liquid Crystal Molecule 12 | 0.19 | 0.21 | >200k |
| | Example 45 | Liquid Crystal Molecule 13 | 0.20 | 0.21 | >200k |
| | Example 46 | Liquid Crystal Molecule 14 | 0.20 | 0.21 | >200k |
| | Example 47 | Liquid Crystal Molecule 15 | 0.21 | 0.22 | >200k |
| | Example 48 | Liquid Crystal Molecule 16 | 0.19 | 0.20 | >200k |
| | Comparative Example 16 | Fluorine Lubricant | 0.21 | 0.21 | 100k |

As can be understood from Table 19, the magnetic discs each incorporating the liquid crystal molecules as the lubricant resulted in the maximum coefficient of static friction and dynamic coefficient of friction similar to those of the magnetic discs according to the comparative examples. Moreover, the number of rotations performed until the head crash took place was enlarged. Thus, a fact can be understood that use of the liquid crystal molecules as the lubricant enables excellent continuous sliding resistance, low viscosity and large meniscus force to be obtained.

### (Manufacturing of Coating-Type Magnetic Tape)

### Example 49

Initially, ferromagnetic powder, a binder, additives, a lubricant and solvent having the following compositions were kneaded by an extruder, and then dispersed for 6 hours by a sand mill. Thus, a magnetic coating material was prepared.

### (Composition of Magnetic Coating Material)

| | |
|---|---|
| Fe Metal Ferromagnetic Powder (coercive force = 160 kA/m, amount of saturation magnetization = 145 Am²/kg, specific surface area = 51 m²/g, length of major axis = 0.08 µm and needle ratio = 3) | 100 parts by weight |
| Polyvinyl Chloride Resin (MR-110 manufactured by Japanese Geon) | 14 parts by weight |
| Polyester Polyurethane (MG-130 manufactured by Toyo Spinning) | 3 parts by weight |
| Additive (Al₂O₃) | 5 parts by weight |
| Lubricant (the following liquid crystal molecule 19) | 3 parts by weight |
| Methylethylketone | 150 parts by weight |
| Cyclohexanone | 150 parts by weight |

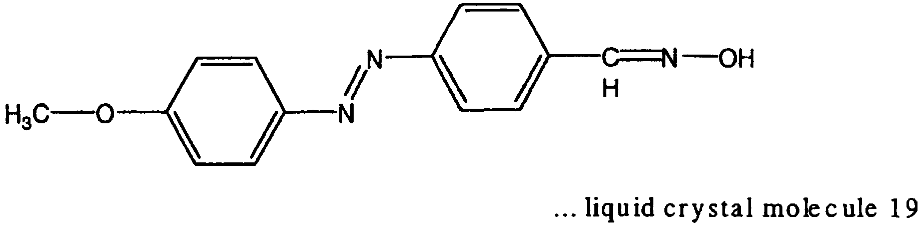

Then, 3 parts by weight of polyisocyanate were added to the obtained magnetic coating material. The coating material for making a magnetic layer was applied to the surface of polyethylene terephthalate (hereinafter called "PET") having a thickness of 7 µm so as to have a thickness of 6.5 µm. A solenoid coil was operated to perform an orienting process, and then a drying process, a calender process and a hardening process were performed. Thus, a magnetic layer was formed. Then, a back coating material having the following composition was applied to the surface of the PET film opposite to the surface on which the magnetic layer was formed. The PET film was cut to have a width of 8 mm so as to be tape shape. As a result, a coating type magnetic tape was manufactured.

### 〈Composition of Back Coating Material〉

| | |
|---|---|
| Carbon Black (#50 manufactured by Asahi Carbon) | 100 parts by weight |
| Polyester Polyurethane (trade name: Nipporan N -2304) | 100 parts by weight |
| Methylethylketone | 500 parts by weight |
| Toluene | 500 parts by weight |

### Examples 50 to 56

A similar process to that according to Example 49 was performed except for the following liquid crystal molecules 20 to 26 employed as the lubricant in place of the liquid crystal molecule 19 so that coating type magnetic tapes were manufactured.

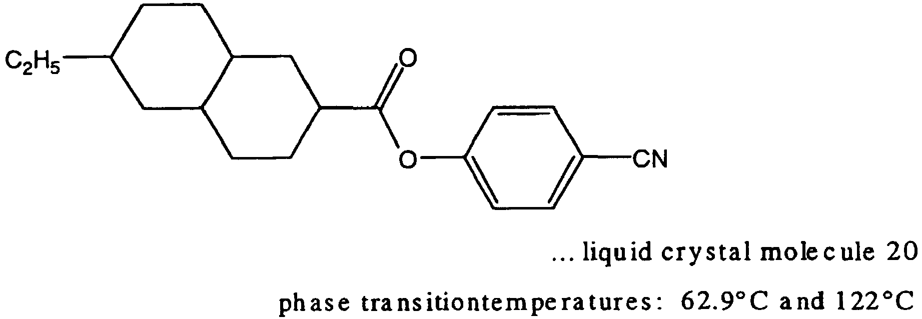

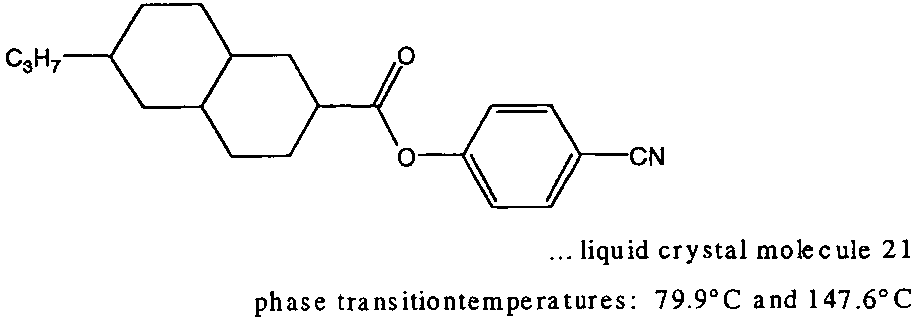

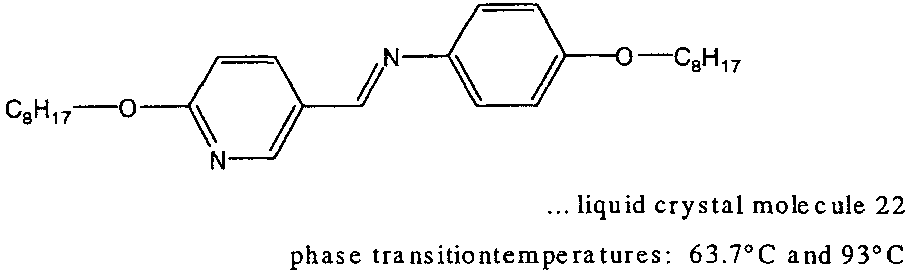

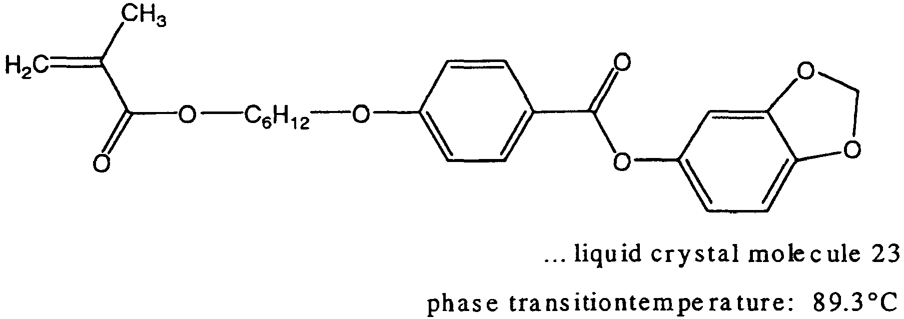

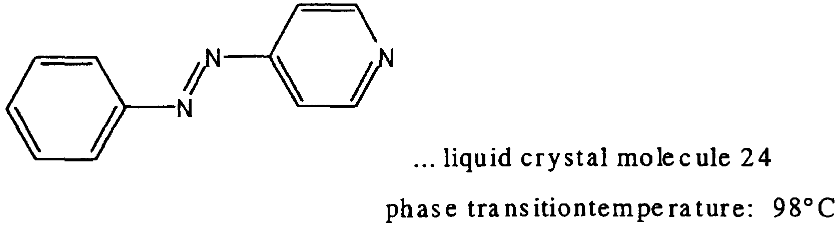

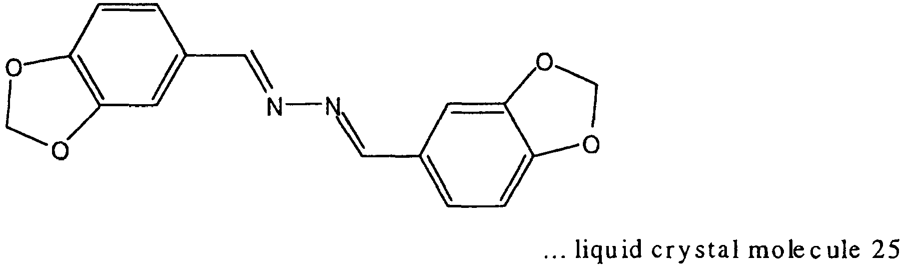

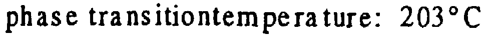

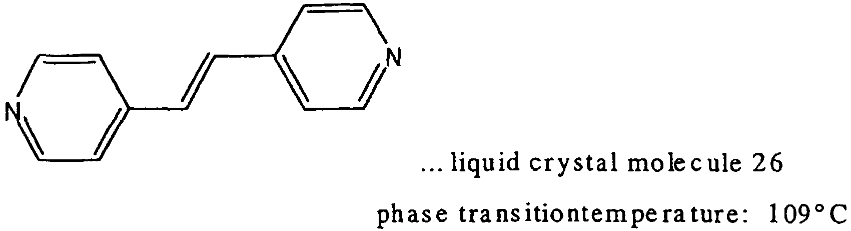

### Comparative Example 17

A process similar to that according to Example 49 was performed except for the lubricant which was stearic acid which was a usual lubricant employed in place of liquid crystal molecule 19 so that a coating type magnetic tape was manufactured.

### Comparative Example 18

A process similar to that according to Example 49 was performed except for the lubricant which was methyl stearate which was a usual lubricant employed in place of liquid crystal molecule 19 so that a coating type magnetic tape was manufactured.

### Evaluation of Characteristics

The magnetic tapes according to Examples 49 to 56 and Comparative Examples 17 and 18 were measured. The coefficient of friction and still durability were measured when the temperature was 25°C and the relative humidity was 60 %, the temperature was 40°C and the relative humidity was 80 % and the temperature was - 5°C. Results were shown in Tables 20 and 21.

The coefficient of friction was measured by using a usual shuttle under a load of 20 g at a tape speed of 5 mm/second. The value of the coefficient of friction was a value obtained after transporting the tape 100 times. In accordance with change in the tension, calculations were performed by using an Euler's formula.

The still durability was evaluated by measuring time taken to attenuation of an output in a pause state to - 3 dB. The longest measuring time was 150 minutes.

**[Table 20]**

| | Lubricant | Environmental Temperature | Coefficient of Friction | Still Durability (Minutes) |
|---|---|---|---|---|
| Example 49 | Liquid Crystal Molecule 19 | 25°C 60% | 0.17 | > 150 |
| | | -5°C | 0.19 | > 150 |
| | | 40°C 80% | 0.18 | > 150 |
| Example 50 | Liquid Crystal Molecule 20 | 25°C 60% | 0.17 | > 150 |
| | | -5°C | 0.19 | > 150 |
| | | 40°C 80% | 0.18 | > 150 |
| Example 51 | Liquid Crystal Molecule 21 | 25°C 60% | 0.20 | > 150 |
| | | -5°C | 0.22 | > 150 |
| | | 40°C 80% | 0.21 | > 150 |
| Example 52 | Liquid Crystal Molecule 22 | 25°C 60% | 0.19 | > 150 |
| | | -5°C | 0.21 | > 150 |
| | | 40°C 80% | 0.20 | > 150 |

**[Table 21]**

| | Lubricant | Environmental Temperature | Coefficient of Friction | Still Durability (Minutes) |
|---|---|---|---|---|
| Example 53 | Liquid Crystal Molecule 23 | 25°C 60% | 0.19 | > 150 |
| | | -5°C | 0.21 | > 150 |
| | | 40°C 80% | 0.20 | > 150 |
| Example 54 | Liquid Crystal Molecule 24 | 25°C 60% | 0.20 | > 150 |
| | | -5°C | 0.22 | > 150 |
| | | 40°C 80% | 0.21 | > 150 |
| Example 55 | Liquid Crystal Molecule 25 | 25°C 60% | 0.17 | > 150 |
| | | -5°C | 0.19 | > 150 |
| | | 40°C 80% | 0.18 | > 150 |
| Example 56 | Liquid Crystal Molecule 26 | 25°C 60% | 0.17 | > 150 |
| | | -5°C | 0.19 | > 150 |
| | | 40°C 80% | 0.18 | > 150 |
| Comparative Example 17 | Stearic Acid | 25°C 60% | 0.22 | 90 |
| | | -5°C | 0.24 | 10 |
| | | 40°C 80% | 0.22 | 30 |
| Comparative Example 18 | Methyl Stearate | 25°C 60% | 0.28 | 120 |
| | | -5°C | 0.33 | 60 |
| | | 40°C 80% | 0.36 | 90 |

As can be understood from Tables 20 and 21, the coefficient of friction of each of the magnetic tapes containing liquid crystal molecules 19 to 26 each serving as the lubricant was reduced and the still characteristic of the same was excellent as compared with the comparative examples containing the stearic acid or methyl stearate which was the conventional lubricant. Thus, employment of the liquid crystal molecules as the lubricant enables excellent continuous sliding resistance and low viscosity to be obtained.

### (Manufacturing of Thin Metal-Magnetic-Film Type Magnetic Tape)

### Example 57

Initially, the surface of the PET film having a thickness of 10 µm was coated with Co-Ni alloy by a diagonal evaporation method so that a ferromagnetic thin metal film having a thickness of 100 nm was formed. Then, sputtering was performed so that a carbon protective film having a thickness of 10 nm was formed on the surface of the ferromagnetic thin metal film. Then, liquid crystal molecule 19 which was the lubricant was applied to the carbon protective film. The quantity of applied liquid crystal molecule 19 was 10 mg/m². The PET films were cut to have the width of 8 mm so that tapes were manufactured. Thus, thin metal magnetic tapes were manufactured.

### Examples 58 to 64

A process similar to that according to Example 57 was performed except for liquid crystal molecules 20 to 26 employed as the lubricants in place of liquid crystal molecule 19 so that thin metal magnetic tapes were manufactured.

### Comparative Example 19

A process similar to that according to Example 57 was performed except for stearic acid which was a usual lubricant and which was employed in place of liquid crystal molecule 19 so that thin metal magnetic tapes were manufactured.

### Comparative Example 20

A process similar to that according to Example 57 was performed except for methyl stearate which was a usual lubricant and which was employed in place of liquid crystal molecule 19 so that thin metal magnetic tapes were manufactured.

### Evaluation of Characteristics

The magnetic tapes according to Examples 57 to 64 and Comparative Examples 19 and 20 were measured. The coefficient of friction and still durability were measured similar to Example 49 when the temperature was 25°C and the relative humidity was 60 %, the temperature was - 5°C and the temperature was 40°C and the relative humidity was 80 %. Results were shown in Tables 22 and 23.

**[Table 22]**

| | Lubricant | Environmental Temperature | Coefficient of Friction | Still Durability (Minutes) |
|---|---|---|---|---|
| Example 57 | Liquid Crystal Molecule 19 | 25°C 60% | 0.22 | > 150 |
| | | -5°C | 0.24 | > 150 |
| | | 40°C 80% | 0.23 | > 150 |
| Example 58 | Liquid Crystal Molecule 20 | 25°C 60% | 0.21 | > 150 |
| | | -5°C | 0.23 | > 150 |
| | | 40°C 80% | 0.23 | > 150 |
| Example 59 | Liquid Crystal Molecule 21 | 25°C 60% | 0.18 | > 150 |
| | | -5°C | 0.20 | > 150 |
| | | 40°C 80% | 0.19 | > 150 |
| Example 60 | Liquid Crystal Molecule 22 | 25°C 60% | 0.21 | > 150 |
| | | -5°C | 0.23 | > 150 |
| | | 40°C 80% | 0.23 | > 150 |

**[Table 23]**

| | Lubricant | Environmental Temperature | Coefficient of Friction | Still Durability (Minutes) |
|---|---|---|---|---|
| Example 61 | Liquid Crystal Molecule 23 | 25°C 60% | 0.22 | > 150 |
| | | -5°C | 0.24 | > 150 |
| | | 40°C 80% | 0.23 | > 150 |
| Example 62 | Liquid Crystal Molecule 24 | 25°C 60% | 0.18 | > 150 |
| | | -5°C | 0.20 | > 150 |
| | | 40°C 80% | 0.19 | > 150 |
| Example 63 | Liquid Crystal Molecule 25 | 25°C 60% | 0.21 | > 150 |
| | | -5°C | 0.23 | > 150 |
| | | 40°C 80% | 0.23 | > 150 |
| Example 64 | Liquid Crystal Molecule 26 | 25°C 60% | 0.21 | > 150 |
| | | -5°C | 0.23 | > 150 |
| | | 40°C 80% | 0.23 | > 150 |
| Comparative Example 19 | Stearic Acid | 25°C 60% | 0.22 | 60 |
| | | -5°C | 0.25 | 5 |
| | | 40°C 80% | 0.23 | 10 |
| Comparative Example 20 | Methyl Stearate | 25°C 60% | 0.29 | 100 |
| | | -5°C | 0.35 | 40 |
| | | 40°C 80% | 0.38 | 60 |

As can be understood from Tables 22 and 23, the coefficient of friction of each of the magnetic tapes containing liquid crystal molecules 19 to 26 each serving as the lubricant was reduced and the still characteristic of the same was excellent as compared with the comparative examples containing the stearic acid or methyl stearate which was the conventional lubricant. Thus, employment of the liquid crystal molecules as the lubricant enables excellent continuous sliding resistance and low viscosity to be obtained.

As can be understood from the results, an excellent lubricating effect can be obtained with the coating type magnetic tape and the thin metal magnetic tape. The lubricating film may be formed by the containing method employed for the coating type magnetic tape or the top coating method employed for the thin metal magnetic tape to obtain excellent characteristics.

### (Manufacturing of Thin Metal-Magnetic-Film Type Magnetic Disc)

### Example 65

Initially, sputtering was performed so that a NIP base film having a thickness of 10 µm, a Cr intermediate layer having a thickness of 0.5 µm, a Co-Cr-Pt magnetic layer having a thickness of 60 nm and a carbon protective film having a thickness of 20 nm were sequentially formed on a mirror-polished surface of an aluminum alloy substrate and having a diameter of 3.5 inches. The roughness of the surface of the magnetic disc was 1.2 nm as average roughness (Ra) along the center line.

Then, lubricant was prepared in which liquid crystal molecule 19 was dissolved in chloroform at a concentration of 0.01 wt%. The foregoing magnetic disc was dipped in the lubricant so that liquid crystal molecule 19 was applied to the surface of the magnetic disc. The application was performed such that the duration in the lubricant was 180 seconds and raising speed from the lubricant was 0.25 mm/second. Then, the magnetic disc was dipped in pure chloroform so as to remove liquid crystal molecule 19 adhered excessively from the magnetic disc. Thus, a lubricating film having a total thickness of 2.5 nm (measured by an ellipsometer) and a quantity of application was 10 mg/m² was formed. As a result, a thin metal-magnetic-film type magnetic disc was manufactured.

### Examples 66 to 72

A process similar to that according Example 65 was performed except for liquid crystal molecules 20 to 26 which were employed as the lubricants in place of liquid crystal molecule 19 so that thin metal-magnetic-film type magnetic discs were manufactured.

### Comparative Example 21

A process similar to that according Example 65 was performed except for the following fluorine lubricant (having a molecular weight of 4000) which was employed as the lubricant in place of liquid crystal molecule 19 so that thin metal-magnetic-film type magnetic disc was manufactured.

HO-CH₂CF₂(OCF₂CF₂)ₘ(OCF₂)ₙCF₂CH₂-OH

### Evaluation of Characteristics

Each of the magnetic discs obtained as described above and according to Examples 65 to 72 and Comparative Example 21 was mounted on a magnetic recording/reproducing apparatus to measure a maximum coefficient of static friction, a dynamic coefficient of friction and number of rounds at which a head crash took place. Results were shown in Table 24.

The maximum coefficient of static friction was measured such that the magnetic disc was rotated at low speed in a state in which the head slider and the magnetic disc were in contact with each other to measure frictional force produced immediately after the rotation. The measurement conditions were such that the pressing load of the head was 5 g and the number of revolutions of the disc was 1 rpm.

The dynamic coefficient of friction was measured such that the head slider was continuously slid 200,000 times in a state in which the head slider was in contact with the magnetic disc so as to measure generated maximum frictional force. Measurement conditions were such that the pressing load of the head was 5 g and the number of revolutions was 150 rpm. If head crash occurs after the disc was rotated 200,000 times or less, the maximum frictional force produced until the head crash took place was measured.

The head crash of the magnetic disc is a state in which the carbon protective film which is the base of the lubricating film is completely worn and the magnetic film is exploded outside. If the head crash occurs, visible slide scars are formed. At this time, the experiment was interrupted and the number of rotations was recorded. Note that the maximum number of rotations was 200,000 times.

**[Table 24]**

| | Lubricant | Maximum Coefficient of Static Friction | Dynamic Coefficient of Friction | Number of Rotations when Crash Took Places |
|---|---|---|---|---|
| Example 65 | Liquid Crystal Molecule 1 | 0.20 | 0.21 | >200k |
| Example 66 | Liquid Crystal Molecule 2 | 0.22 | 0.23 | >200k |
| Example 67 | Liquid Crystal Molecule 3 | 0.23 | 0.24 | >200k |
| Example 68 | Liquid Crystal Molecule 4 | 0.22 | 0.22 | >200k |
| Example 69 | Liquid Crystal Molecule 5 | 0.19 | 0.21 | >200k |
| Example 70 | Liquid Crystal Molecule 6 | 0.20 | 0.21 | >200k |
| Example 71 | Liquid Crystal Molecule 7 | 0.21 | 0.21 | >200k |
| Example 72 | Liquid Crystal Molecule 8 | 0.21 | 0.22 | >200k |
| Comparative Example 21 | Fluorine Lubricant | 0.21 | 0.21 | 100k |

As can be understood from Table 24, the magnetic discs each incorporating the liquid crystal molecules as the lubricant resulted in the maximum coefficient of static friction and dynamic coefficient of friction similar to those of the magnetic discs according to the comparative examples. Moreover, the number of rotations performed until the head crash took place was enlarged. Thus, a fact can be understood that use of the liquid crystal molecules as the lubricant enables excellent continuous sliding resistance, low viscosity and large meniscus force to be obtained.

### (Manufacturing of Coating-Type Magnetic Tape)

### Example 73

Initially, ferromagnetic powder, a binder, additives, a lubricant and solvent having the following compositions were kneaded by an extruder, and then dispersed for 6 hours by a sand mill. Thus, a magnetic coating material was prepared.

### (Composition of Magnetic Coating Material)

| | |
|---|---|
| Fe Metal Ferromagnetic Powder (coercive force = 160 kA/m, amount of saturation magnetization = 145 Am²/kg, specific surface area = 51 m²/g, length of major axis = 0.08 µm and needle ratio = 3) | 100 parts by weight |
| Polyvinyl Chloride Resin (MR-110 manufactured by Japanese Geon) | 14 parts by weight |
| Polyester Polyurethane (MG-130 manufactured by Toyo Spinning) | 3 parts by weight |
| Additive (Al₂O₃) | 5 parts by weight |
| Lubricant (the following liquid crystal molecule 27) | 3 parts by weight |
| Methylethylketone | 150 parts by weight |
| Cyclohexanone | 150 parts by weight |

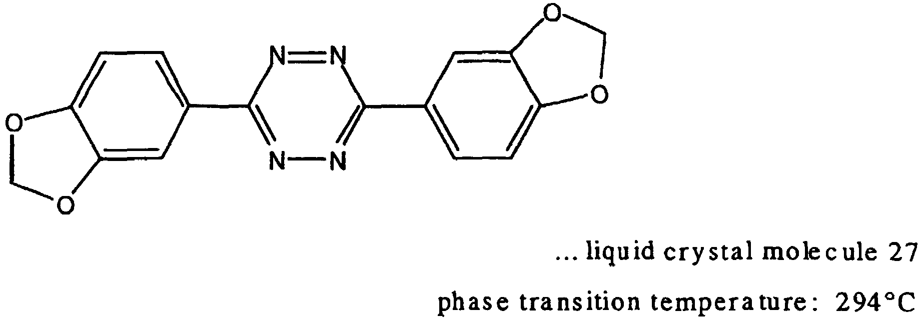

Then, 3 parts by weight of polyisocyanate were added to the obtained magnetic coating material. The coating material for making a magnetic layer was applied to the surface of polyethylene terephthalate (hereinafter called "PET") having a thickness of 7 µm so as to have a thickness of 6.5 µm. A solenoid coil was operated to perform an orienting process, and then a drying process, a calender process and a hardening process were performed. Thus, a magnetic layer was formed. Then, a back coating material having the following composition was applied to the surface of the PET film opposite to the surface on which the magnetic layer was formed. The PET film was cutto have a width of 8 mm so as to be tape shape. As a result, a coating type magnetic tape was manufactured.

### (Composition of Back Coating Material)

| | |
|---|---|
| Carbon Black (#50 manufactured by Asahi Carbon) | 100 parts by weight |
| Polyester Polyurethane (trade name: Nipporan N-2304) | 100 parts by weight |
| Methylethylketone | 500 parts by weight |
| Toluene | 500 parts by weight |

### Examples 74 to 80

A similar process to that according to Example 73 was performed except for the following liquid crystal molecules 28 to 34 employed as the lubricant in place of the liquid crystal molecule 27 so that coating type magnetic tapes were manufactured.

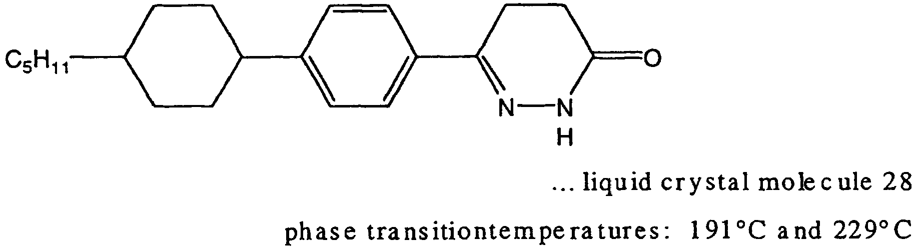

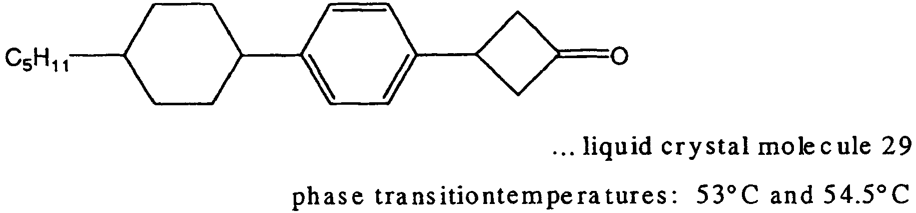

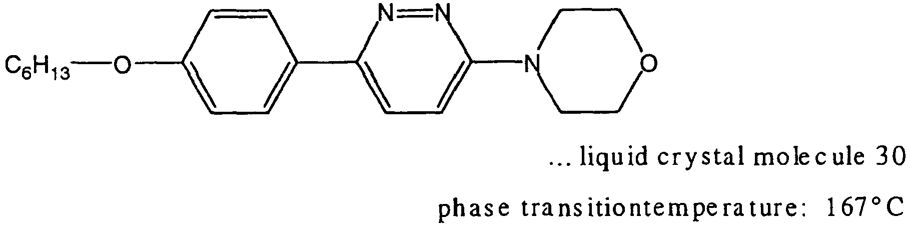

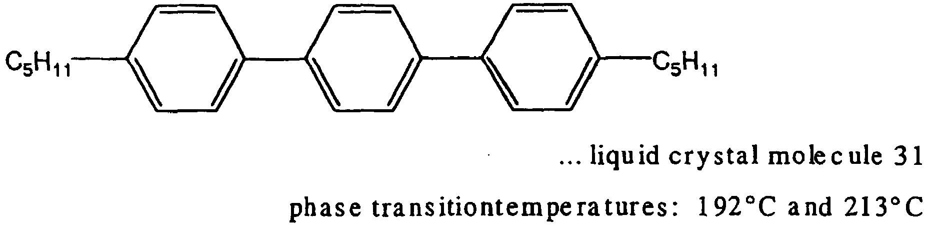

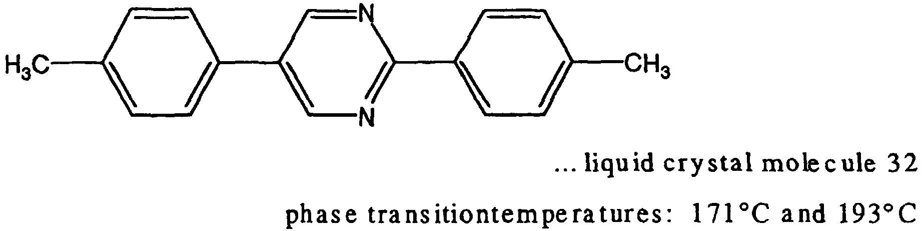

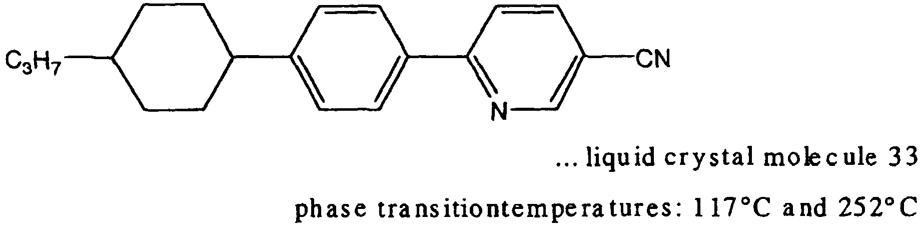

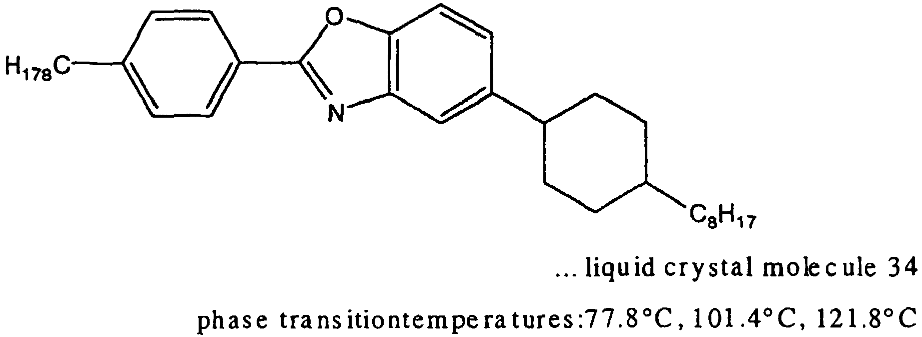

### Comparative Example 22

A process similar to that according to Example 73 was performed except for the lubricant which was stearic acid which was a usual lubricant employed in place of liquid crystal molecule 27 so that a coating type magnetic tape was manufactured.

### Comparative Example 23

A process similar to that according to Example 73 was performed except for the lubricant which was methyl stearate which was a usual lubricant employed in place of liquid crystal molecule 27 so that a coating type magnetic tape was manufactured.

### Evaluation of Characteristics

The magnetic tapes according to Examples 73 to 80 and Comparative Examples 22 and 23 were measured. The coefficient of friction and still durability were measured when the temperature was 25°C and the relative humidity was 60 %, the temperature was 40°C and the relative humidity was 80 % and the temperature was - 5°C. Results were shown in Tables 25 and 27.

The coefficient of friction was measured by using a usual shuttle under a load of 20 g at a tape speed of 5 mm/second. The value of the coefficient of friction was a value obtained after transporting the tape 100 times. In accordance with change in the tension, calculations were performed by using an Euler's formula.

The still durability was evaluated by measuring time taken to attenuation of an output in a pause state to - 3 dB. The longest measuring time was 150 minutes.

**[Table 25]**

| | | Lubricant | Conditions | Coefficient of Friction | Still Durability (Minutes) |
|---|---|---|---|---|---|
| Coating-Type Tape | Example 73 | Liquid Crystal Molecule 27 | 25°C 60% | 0.19 | > 150 |
| | | | -5°C | 0.22 | > 150 |
| | | | 40°C 80% | 0.21 | > 150 |
| | Example 74 | Liquid Crystal Molecule 28 | 25°C 60% | 0.19 | > 150 |
| | | | -5°C | 0.21 | > 150 |
| | | | 40°C 80% | 0.20 | > 150 |
| | Example 75 | Liquid Crystal Molecule 29 | 25°C 60% | 0.18 | > 150 |
| | | | -5°C | 0.19 | > 150 |
| | | | 40°C 80% | 0.18 | > 150 |
| | Example 76 | Liquid Crystal Molecule 30 | 25°C 60% | 0.17 | > 150 |
| | | | -5°C | 0.20 | > 150 |
| | | | 40°C 80% | 0.18 | > 150 |

**[Table 26]**

| | | Lubricant | Conditions | Coefficient of Friction | Still Durability (Minutes) |
|---|---|---|---|---|---|
| Coating-Type Tape | Example 77 | Liquid Crystal Molecule 31 | 25°C 60% | 0.17 | > 150 |
| | | | -5°C | 0.19 | > 150 |
| | | | 40°C 80% | 0.18 | > 150 |
| | Example 78 | Liquid Crystal Molecule 32 | 25°C 60% | 0.20 | > 150 |
| | | | -5°C | 0.22 | > 150 |
| | | | 40°C 80% | 0.21 | > 150 |
| | Example 79 | Liquid Crystal Molecule 33 | 25°C 60% | 0.19 | > 150 |
| | | | -5°C | 0.21 | > 150 |
| | | | 40°C 80% | 0.20 | > 150 |
| | Example 80 | Liquid Crystal Molecule 34 | 25°C 60% | 0.17 | > 150 |
| | | | -5°C | 0.19 | > 150 |
| | | | 40°C 80% | 0.18 | > 150 |

**[Table 27]**

| | | Lubricant | Conditions | Coefficient of Friction | Still Durability (Minutes) |
|---|---|---|---|---|---|
| Coating -Type Tape | Comparative Example 22 | Stearic Acid | 25°C 60% | 0.22 | 90 |
| | | | -5°C | 0.24 | 10 |
| | | | 40°C 80% | 0.22 | 30 |
| | Comparative Example 23 | Methyl Stearate | 25°C 60% | 0.28 | 120 |
| | | | -5°C | 0.33 | 60 |
| | | | 40°C 80% | 0.36 | 90 |

As can be understood from Tables 25 to 27, the coefficient of friction of each of the magnetic tapes containing liquid crystal molecules 27 to 34 each serving as the lubricant was reduced and the still characteristic of the same was excellent as compared with the comparative examples containing the stearic acid or methyl stearate which was the conventional lubricant. Thus, employment of the liquid crystal molecules as the lubricant enables excellent continuous sliding resistance and low viscosity to be obtained.

### (Manufacturing of Thin Metal-Magnetic-Film Type Magnetic Tape)

### Example 81

Initially, the surface of the PET film having a thickness of 10 µm was coated with Co-Ni alloy by a diagonal evaporation method so that a ferromagnetic thin metal film having a thickness of 100 nm was formed. Then, sputtering was performed so that a carbon protective film having a thickness of 10 nm was formed on the surface of the ferromagnetic thin metal film. Then, liquid crystal molecule 27 which was the lubricant was applied to the carbon protective film. The quantity of applied liquid crystal molecule 27 was 10 mg/m². The PET films were cut to have the width of 8 mm so that tapes were manufactured. Thus, thin metal magnetic tapes were manufactured.

### Examples 82 to 88

A process similar to that according to Example 81 was performed except for liquid crystal molecules 28 to 34 employed as the lubricants in place of liquid crystal molecule 27 so that thin metal magnetic tapes were manufactured.

### Comparative Example 24

A process similar to that according to Example 81 was performed except for stearic acid which was a usual lubricant and which was employed in place of liquid crystal molecule 27 so that thin metal magnetic tapes were manufactured.

### Comparative Example 25

A process similar to that according to Example 81 was performed except for methyl stearate which was a usual lubricant and which was employed in place of liquid crystal molecule 27 so that thin metal magnetic tapes were manufactured.

### Evaluation of Characteristics

The magnetic tapes according to Examples 81 to 88 and Comparative Examples 24 and 25 were measured. The coefficient of friction and still durability were measured similar to Example 73 when the temperature was 25°C and the relative humidity was 60 %, the temperature was - 5°C and the temperature was 40°C and the relative humidity was 80 %. Results were shown in Tables 28 to 30.

**[Table 28]**

| | | Lubricant | Conditions | Coefficient of Friction | Still Durability (Minutes) |
|---|---|---|---|---|---|
| Thin Film Type Tape | Example 81 | Liquid Crystal Molecule 27 | 25°C 60% | 0.22 | > 150 |
| | | | -5°C | 0.23 | > 150 |
| | | | 40°C 80% | 0.23 | > 150 |
| | Example 82 | Liquid Crystal Molecule 28 | 25°C 60% | 0.21 | > 150 |
| | | | -5°C | 0.24 | > 150 |
| | | | 40°C 80% | 0.23 | > 150 |
| | Example 83 | Liquid Crystal Molecule 29 | 25°C 60% | 0.17 | > 150 |
| | | | -5°C | 0.21 | > 150 |
| | | | 40°C 80% | 0.19 | > 150 |
| | Example 84 | Liquid Crystal Molecule 30 | 25°C 60% | 0.21 | > 150 |
| | | | -5°C | 0.23 | > 150 |
| | | | 40°C 80% | 0.22 | > 150 |

**[Table 29]**

| | | Lubricant | Conditions | Coefficient of Friction | Still Durability (Minutes) |
|---|---|---|---|---|---|
| Thin Film Type Tape | Example 85 | Liquid Crystal Molecule 31 | 25°C 60% | 0.22 | > 150 |
| | | | -5°C | 0.24 | > 150 |
| | | | 40°C 80% | 0.23 | > 150 |
| | Example 86 | Liquid Crystal Molecule 32 | 25°C 60% | 0.21 | > 150 |
| | | | -5°C | 0.23 | > 150 |
| | | | 40°C 80% | 0.23 | > 150 |
| | Example 87 | Liquid Crystal Molecule 33 | 25°C 60% | 0.21 | > 150 |
| | | | -5°C | 0.23 | > 150 |
| | | | 40°C 80% | 0.23 | > 150 |
| | Example 88 | Liquid Crystal Molecule 34 | 25°C 60% | 0.18 | > 150 |
| | | | -5°C | 0.20 | > 150 |
| | | | 40°C 80% | 0.19 | > 150 |

**[Table 30]**

| | | Lubricant | Conditions | Coefficient of Friction | Still Durability (Minutes) |
|---|---|---|---|---|---|
| Thin Film Type Tape | Comparative Example 24 | Stearic Acid | 25°C 60% | 0.22 | 60 |
| | | | -5°C | 0.25 | 5 |
| | | | 40°C 80% | 0.23 | 10 |
| | Comparative Example 25 | Methyl Stearate | 25°C 60% | 0.29 | 100 |
| | | | -5°C | 0.35 | 40 |
| | | | 40°C 80% | 0.38 | 60 |

As can be understood from Tables 28 to 30, the coefficient of friction of each of the magnetic tapes containing liquid crystal molecules 27 to 34 each serving as the lubricant was reduced and the still characteristic of the same was excellent as compared with the comparative examples containing the stearic acid or methyl stearate which was the conventional lubricant. Thus, employment of the liquid crystal molecules as the lubricant enables excellent continuous sliding resistance and low viscosity to be obtained.

As can be understood from the results, an excellent lubricating effect can be obtained with the coating type magnetic tape and the thin metal magnetic tape. The lubricating film may be formed by the containing method employed for the coating type magnetic tape or the top coating method employed for the thin metal magnetic tape to obtain excellent characteristics.

### (Manufacturing of Thin Metal-Magnetic-Film Type Magnetic Disc)

### Example 89

Initially, sputtering was performed so that a NIP base film having a thickness of 10 µm, a Cr intermediate layer having a thickness of 0.5 µm, a Co-Cr-Pt magnetic layer having a thickness of 60 nm and a carbon protective film having a thickness of 20 nm were sequentially formed on a mirror-polished surface of an aluminum alloy substrate and having a diameter of 3.5 inches. The roughness of the surface of the magnetic disc was 1.2 nm as average roughness (Ra) along the center line.

Then, lubricant was prepared in which liquid crystal molecule 27 was dissolved in chloroform at a concentration of 0.01 wt%. The foregoing magnetic disc was dipped in the lubricant so that liquid crystal molecule 27 was applied to the surface of the magnetic disc. The application was performed such that the duration in the lubricant was 180 seconds and raising speed from the lubricant was 0.25 mm/second. Then, the magnetic disc was dipped in pure chloroform so as to remove liquid crystal molecule 27 adhered excessively from the magnetic disc. Thus, a lubricating film having a total thickness of 2.5 nm (measured by an ellipsometer) and a quantity of application was 10 mg/m² was formed. As a result, a thin metal-magnetic-film type magnetic disc was manufactured.

### Examples 90 to 96

A process similar to that according Example 89 was performed except for liquid crystal molecules 28 to 34 which were employed as the lubricants in place of liquid crystal molecule 27 so that thin metal-magnetic-film type magnetic discs were manufactured.

### Comparative Example 26

A process similar to that according Example 89 was performed except for the following fluorine lubricant (having a molecular weight of 4000) which was employed as the lubricant in place of liquid crystal molecule 27 so that thin metal-magnetic-film type magnetic disc was manufactured.

HO-CH₂CF₂(OCF₂CF₂)ₘ(OCF₂)ₙCF₂CH₂-OH

### Evaluation of Characteristics

Each of the magnetic discs obtained as described above and according to Examples 89 to 96 and Comparative Example 26 was mounted on a magnetic recording/reproducing apparatus to measure a maximum coefficient of static friction, a dynamic coefficient of friction and number of rounds at which a head crash took place. Results were shown in Tables 31 and 32.

The maximum coefficient of static friction was measured such that the magnetic disc was rotated at low speed in a state in which the head slider and the magnetic disc were in contact with each other to measure frictional force produced immediately after the rotation. The measurement conditions were such that the pressing load of the head was 5 g and the number of revolutions of the disc was 1 rpm.

The dynamic coefficient of friction was measured such that the head slider was continuously slid 200,000 times in a state in which the head slider was in contact with the magnetic disc so as to measure generated maximum frictional force. Measurement conditions were such that the pressing load of the head was 5 g and the number of revolutions was 150 rpm. If head crash occurs after the disc was rotated 200,000 times or less, the maximum frictional force produced until the head crash took place was measured.

The head crash of the magnetic disc is a state in which the carbon protective film which is the base of the lubricating film is completely worn and the magnetic film is exploded outside. If the head crash occurs, visible slide scars are formed. At this time, the experiment was interrupted and the number of rotations was recorded. Note that the maximum number of rotations was 200,000 times.

**[Table 31]**

| | | Lubricant | Maximum Coefficient of Static Friction | Dynamic Coefficient of Friction | Number of Rotations when Crash Took Places |
|---|---|---|---|---|---|
| Thin Film Type Magnetic Disc | Example 89 | Liquid Crystal Molecule 27 | 0.21 | 0.21 | >200k |
| | Example 90 | Liquid Crystal Molecule 28 | 0.20 | 0.22 | >200k |
| | Example 91 | Liquid Crystal Molecule 29 | 0.21 | 0.23 | >200k |
| | Example 92 | Liquid Crystal Molecule 30 | 0.20 | 0.21 | >200k |

**[Table 32]**

| | | Lubricant | Maximum Coefficient of Static Friction | Dynamic Coefficient of Friction | Number of Rotations when Crash Took Places |
|---|---|---|---|---|---|
| Thin Film Type Magnetic Disc | Example 93 | Liquid Crystal Molecule 31 | 0.18 | 0.19 | >200k |
| | Example 94 | Liquid Crystal Molecule 32 | 0.21 | 0.22 | >200k |
| | Example 95 | Liquid Crystal Molecule 33 | 0.20 | 0.21 | >200k |
| | Example 96 | Liquid Crystal Molecule 34 | 0.22 | 0.23 | >200k |
| | Comparative Example 26 | Fluorine Lubricant | 0.21 | 0.21 | 100k |

As can be understood from Tables 31 and 32, the magnetic discs each incorporating the liquid crystal molecules as the lubricant resulted in the maximum coefficient of static friction and dynamic coefficient of friction similar to those of the magnetic discs according to the comparative examples. Moreover, the number of rotations performed until the head crash took place was enlarged. Thus, a fact can be understood that use of the liquid crystal molecules as the lubricant enables excellent continuous sliding resistance, low viscosity and large meniscus force to be obtained.

## Claims

1. A magnetic recording medium comprising a non-magnetic support member on which at least a magnetic layer is formed, wherein a lubricant containing a monocyclic liquid crystal molecule expressed by the following general formula (A) or general formula (A') is held in the outermost layer thereof:
L-X¹-R general formula (A)
where X¹ is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group and a hydroxyimino group, or an aryl group, an alkyl group, an oxycarboxyl group, a carboxyl group, a carbonyl group, an ether group, an amide group or an amino group replaced by any one of the foregoing groups;
L-X² general formula (A')
where X² is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups.

2. A magnetic recording medium according to claim 1, wherein X¹ in general formula (A) is selected from cyclic structures expressed by the following general formula (X¹-1) to (X¹-18): 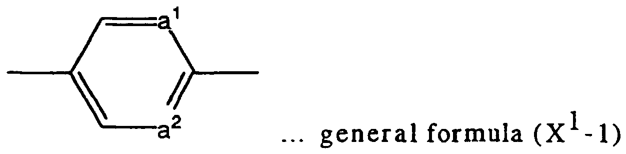 where each of a¹ and a² is a carbon atom or a nitrogen atom and the bond constituting the ring is a single bond or a double bond; 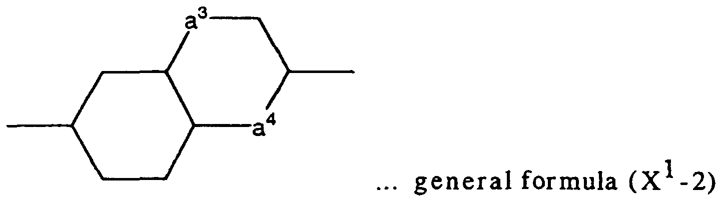 where each of a³ and a⁴ is a carbon atom, a nitrogen atom or an oxygen atom and the bond constituting the ring is a single bond or a double bond; 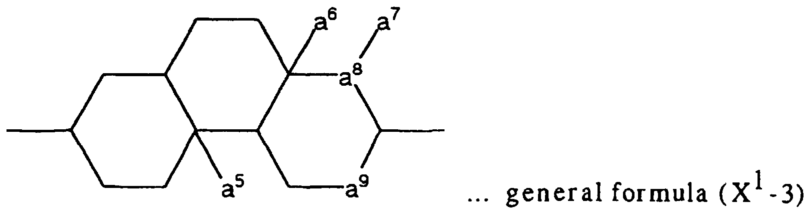 where a⁵ is hydrogen or a methyl group, a⁶ is hydrogen, a methyl group or a cyano group, each of a⁸ and a⁹ is an oxygen atom or a carbon atom, a⁷ is an oxygen atom or the same may be omitted and a bond constituting the ring is a single bond or a double bond; 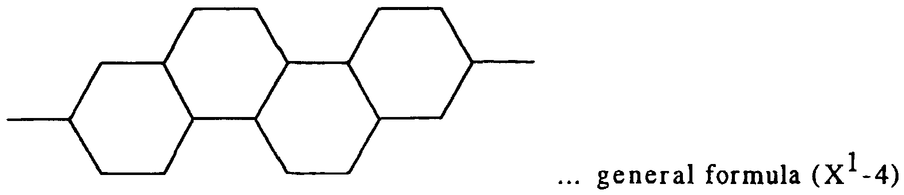 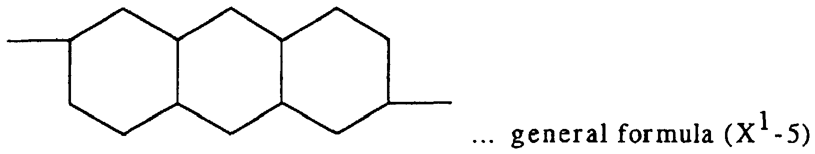 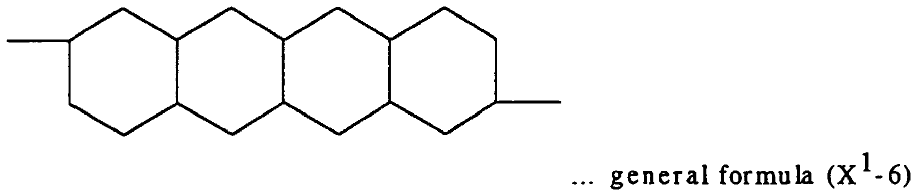 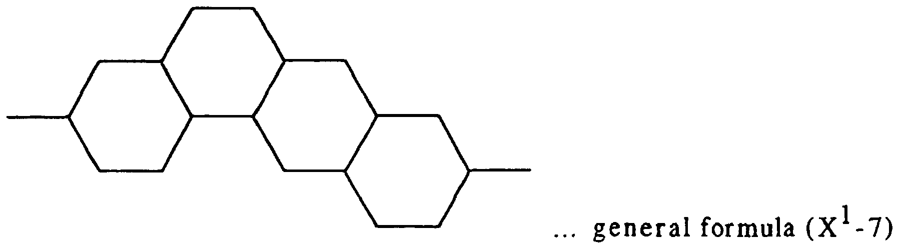 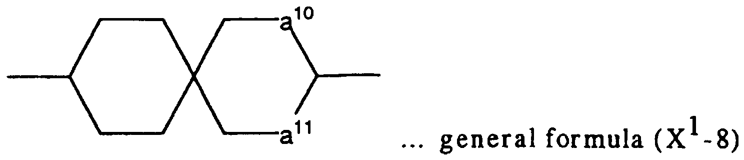 where each of a¹⁰ and a¹¹ is an oxygen atom or a sulfur atom; 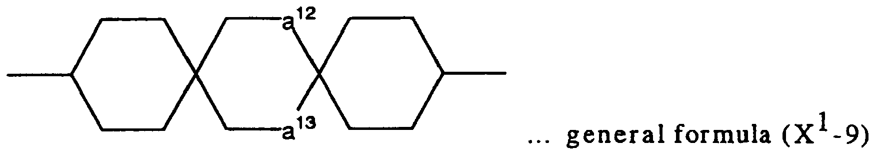 where each of a¹² and a¹³ is an oxygen atom or a sulfur atom; 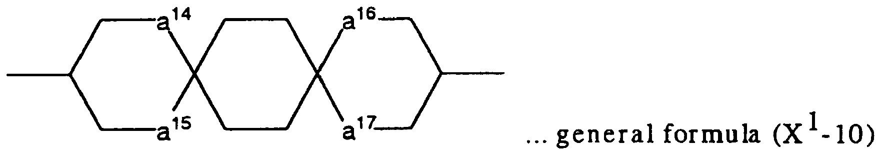 where each of a¹⁴, a¹⁵, a¹⁶ and a¹⁷ is an oxygen atom or a sulfur atom; 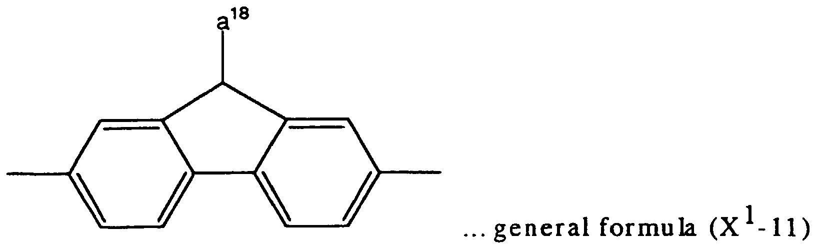 where a¹⁸ is any one of a hydrogen group, a bromine group, a methyl group, an amino group and an alkylamino group;

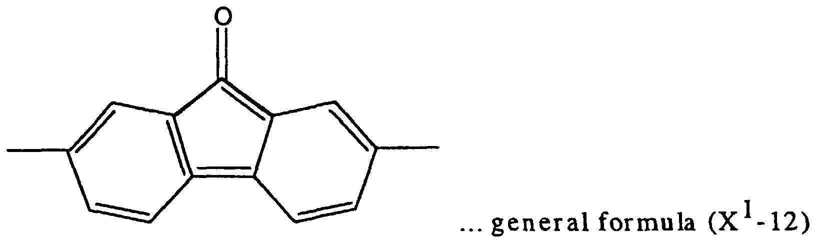

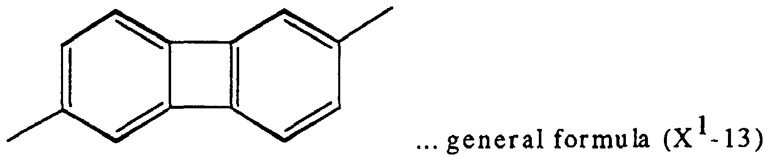

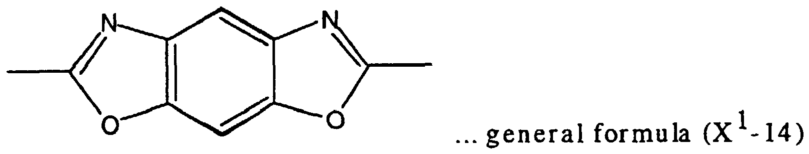

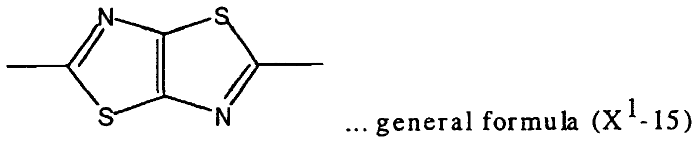

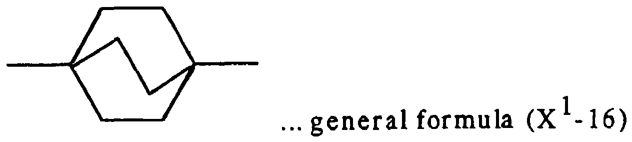

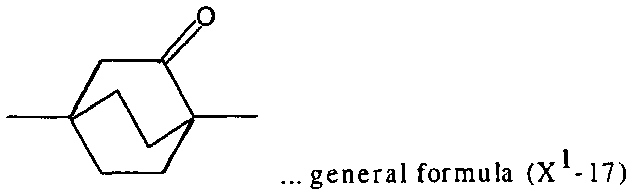

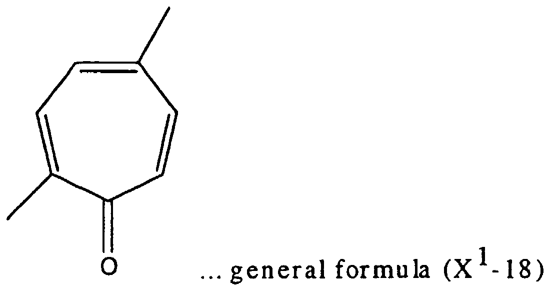

3. A magnetic recording medium according to claim 1, wherein X² in general formula (A') is selected from cyclic structures expressed by the following general formula (X²-1) or (X²-2):

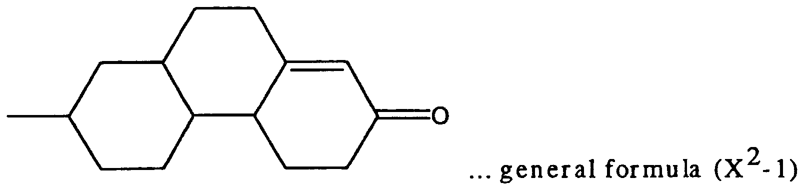

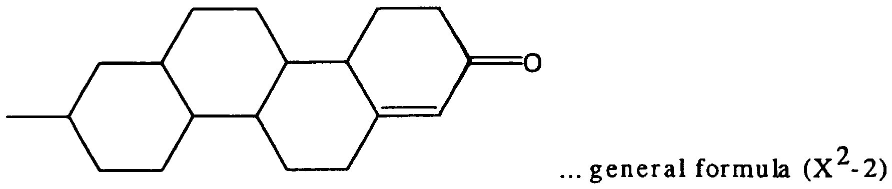

4. A magnetic recording medium comprising a non-magnetic support member on which at least a magnetic layer is formed, wherein a lubricant containing a bicyclic liquid crystal molecule expressed by the following general formula (B) or general formula (B') is held in the outermost layer thereof:
L-X-Y¹ general formula (B)
where each of X and Y¹ is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups;
-L-X-Y²-R general formula (B')<
where each of X and Y² is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups.

5. A magnetic recording medium according to claim 4, wherein X in general formula (B) or general formula (B') is a six-membered ring structure expressed by the following general formula (X-1) or a condensed ring structure expressed by the following general formula (X-2): 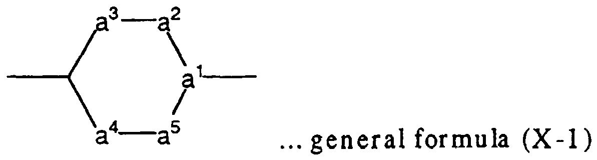 where a¹ is a carbon atom or a nitrogen atom, each of a², a³, a⁴ and a⁵ is a carbon atom or an oxygen atom and the bond constituting the ring is a single bond or a double bond; 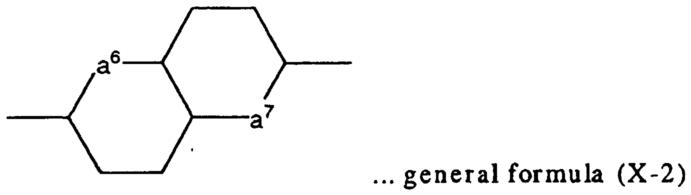 where a⁶ is a carbon atom or an oxygen atom and a⁴ is a carbon atom or a nitrogen atom.

6. A magnetic recording medium according to claim 4, wherein Y¹ in general formula (B) is selected from cyclic structures expressed by the following general formulas (Y-1) to (Y-6): 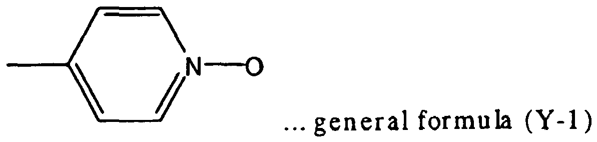 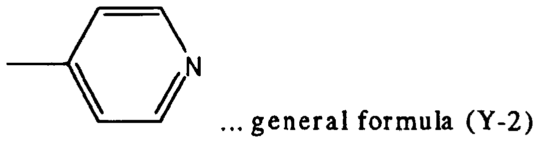 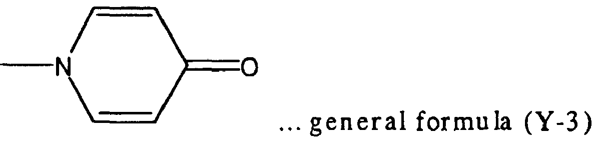 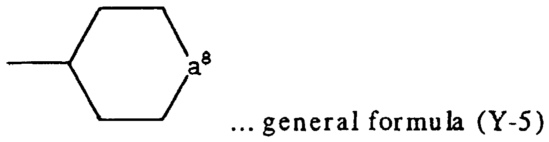 where a⁸ is any one of O, S, SO and SO₂;

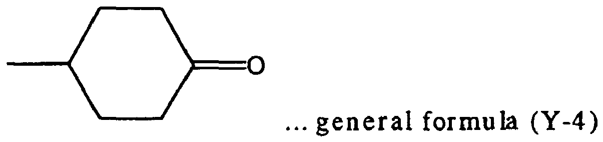

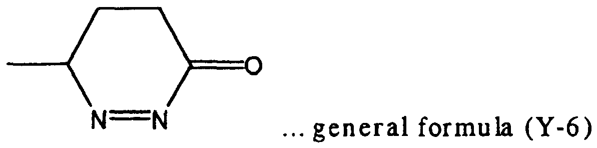

7. A magnetic recording medium according to claim 4, wherein Y² in general formula (B') is selected from cyclic structures expressed by general formulas (Y-7) to (Y-31): 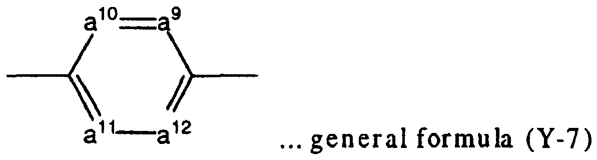 where each of a⁹, a¹⁰, a¹¹ and a¹² is a carbon atom or a nitrogen atom and N oxide may be formed in a case of the nitrogen atom; 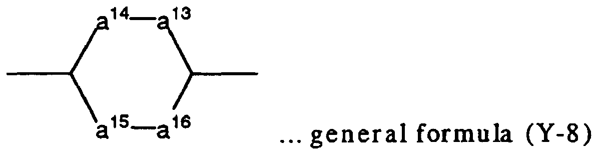 where arbitrary two atoms which are included in a¹³, a¹⁴, a¹⁵ and a¹⁶ and which are not adjacent to each other may be replaced by oxygen or sulfur atoms; 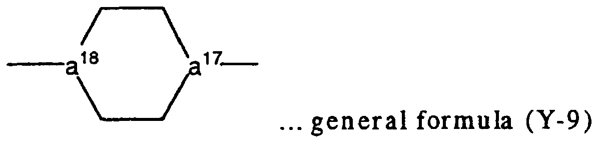 where at least either of a¹⁷ or a¹⁸ is replaced by a nitrogen atom; 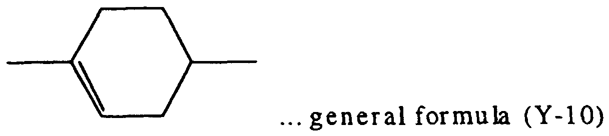 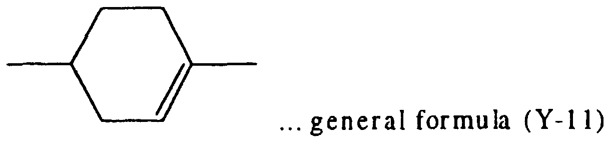 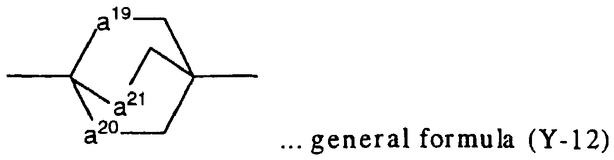 where each of a¹⁹, a²⁰ and a²¹ is a carbon atom or an oxygen atom; 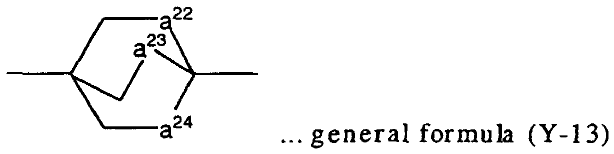 where each of a²², a²³ and a²⁴ is a carbon atom or an oxygen atom; 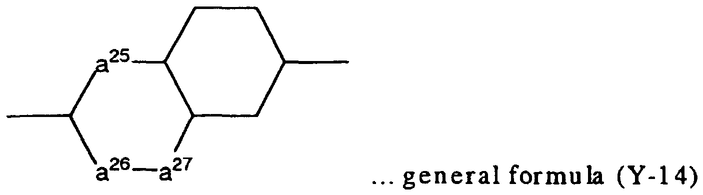 where each of a²⁵, a²⁶ and a²⁷ is a carbon atom, a nitrogen atom or an oxygen atom and the bond constituting the ring is a single bond or a double bond; 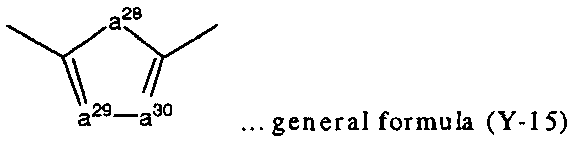 where a²⁸ is any one of a carbon atom, a nitrogen atom and a sulfur atom and each of a²⁹ and a³⁰ is a carbon atom or a nitrogen atom; 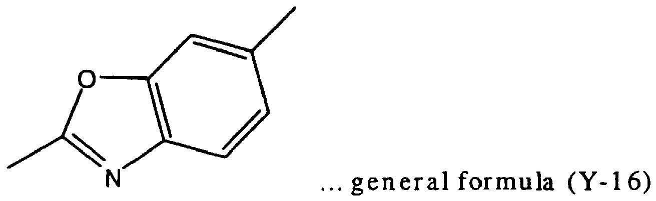 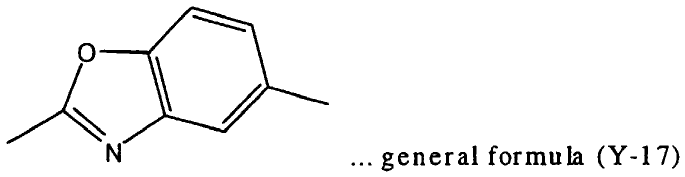 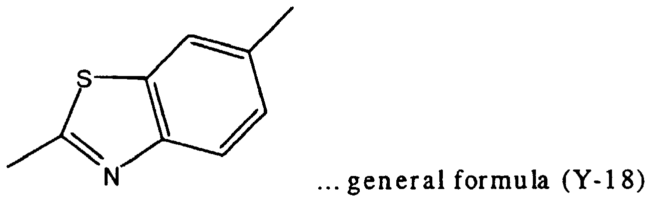 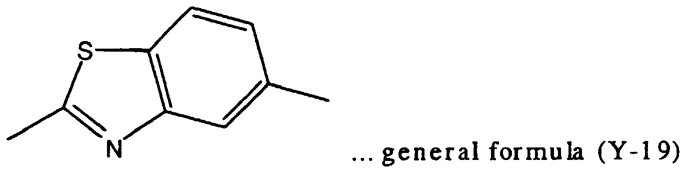 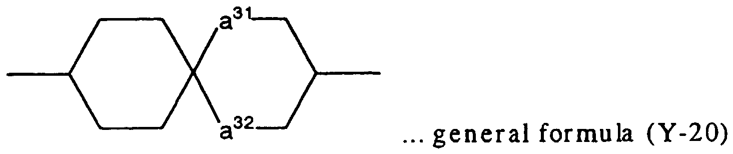 where each of a³¹ and a³² is an oxygen atom or a sulfur atom; 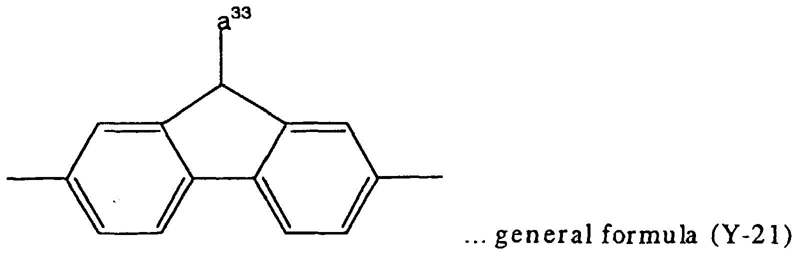 where a³³ is any one of a hydrogen atom, a methyl group, a bromine atom or an alkylamino group;

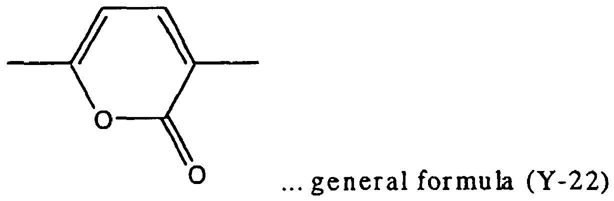

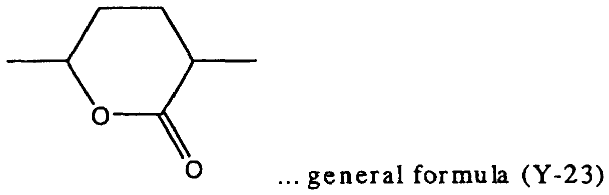

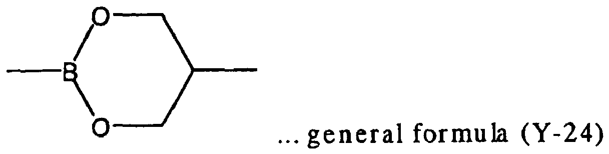

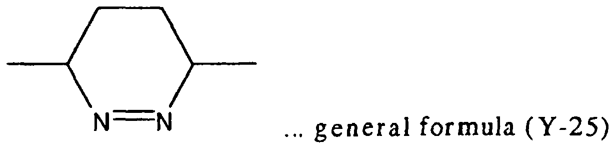

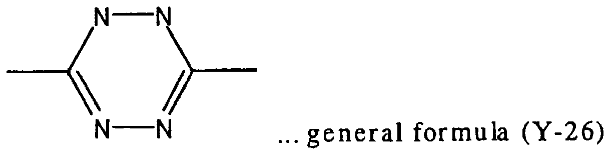

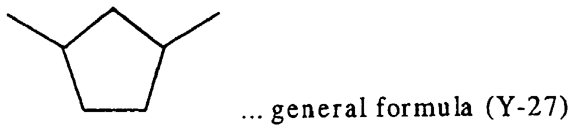

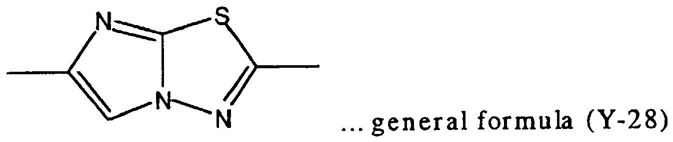

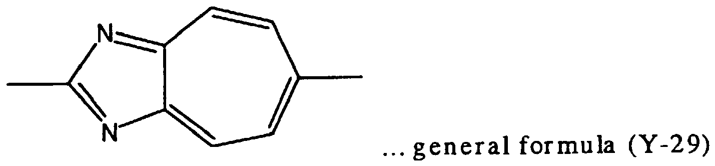

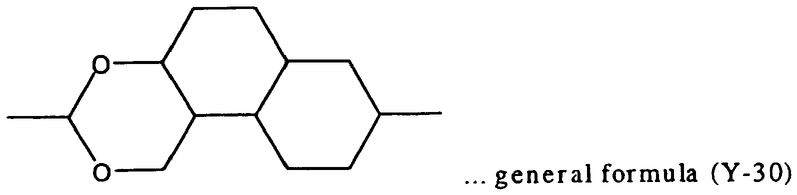

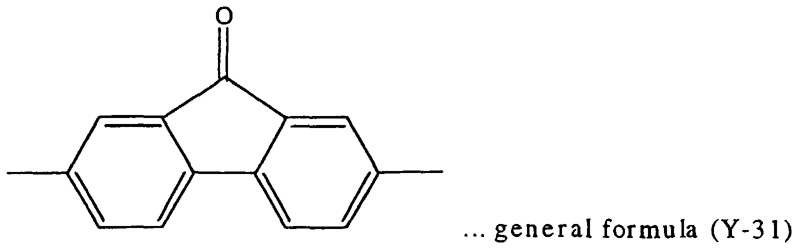

8. A magnetic recording medium comprising a non-magnetic support member on which at least a magnetic layer is formed, wherein a lubricant containing a bicyclic liquid crystal molecule expressed by any one of the following general formulas (C), (C') and (C") is held in the outermost layer thereof: 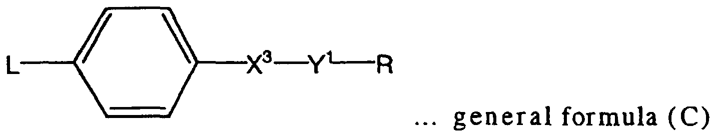 where X³ is an atomic group having a chain structure, Y¹ is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group and a hydroxyimino group, or an aryl group, an alkyl group, an oxycarboxyl group, a carboxyl group, a carbonyl group, an ether group, an amide group or an amino group replaced by any one of the foregoing groups; 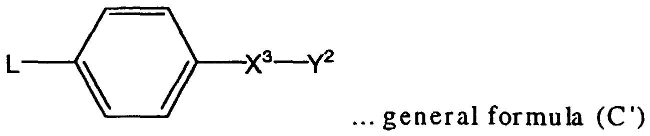 where X³ is an atomic group having a chain structure, Y² is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group and a hydroxyimino group, or an aryl group, an alkyl group, an oxycarboxyl group, a carboxyl group, a carbonyl group, an ether group, an amide group or an amino group replaced by any one of the foregoing groups;
Y³-X³-Y⁴ general formula (C")
where X³ is an atomic group having a chain structure and each of Y³ and Y⁴ is an atomic group having a cyclic structure.

9. A magnetic recording medium according to claim 8, wherein X³ in general formula (C), (C') and (C") is selected from chain structures expressed by any one of the following general formulas (X³-1) to (X³-23): 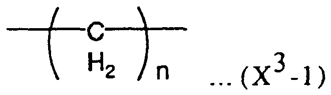 where n is 1 or 2; 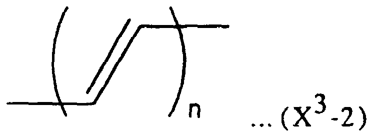 where n is 1 or 2; 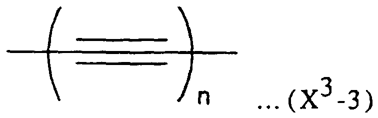 where n is 1 or 2; 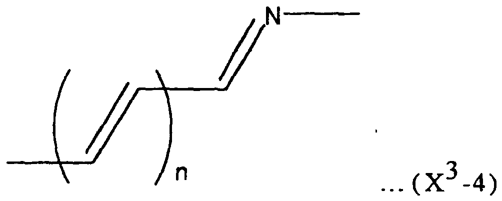 where n is 0, 1, 2 or 3; 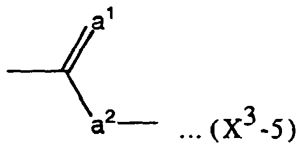 where a¹ is O or S and a² is any one of O, S, CH₂, Se, Te and NH; 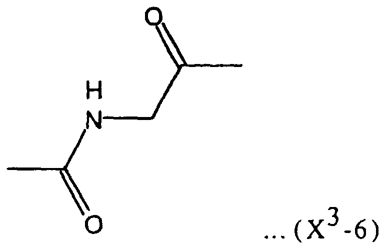 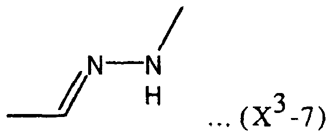 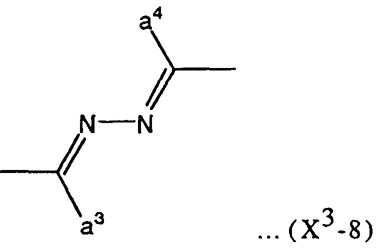 where a³ is H or CH₃ and a⁴ is H or CH₃; 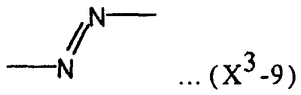 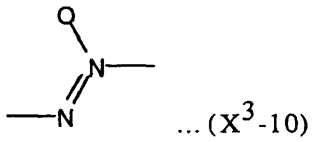 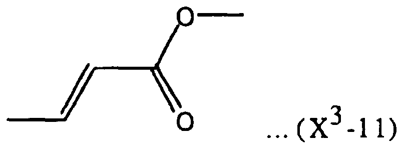 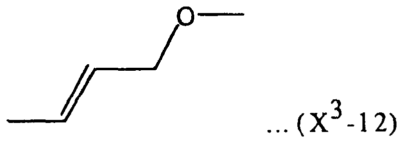 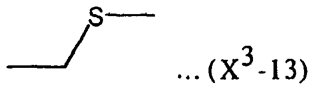 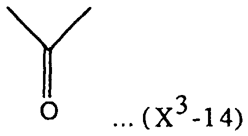 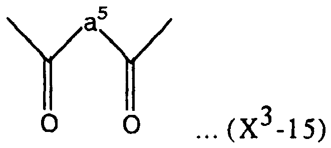 where a⁵ is any one of CH₂, O, O-O, S-S and NH-NH; 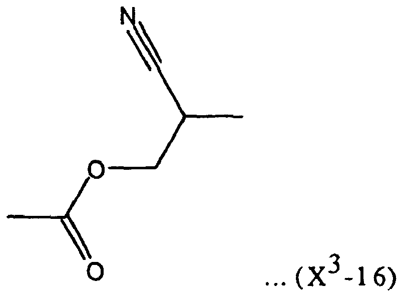 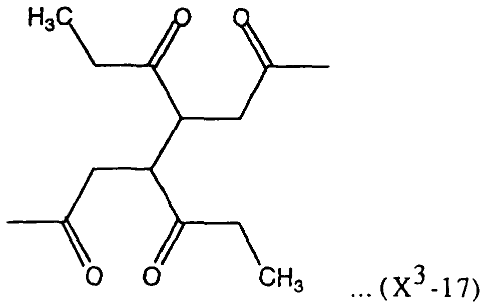 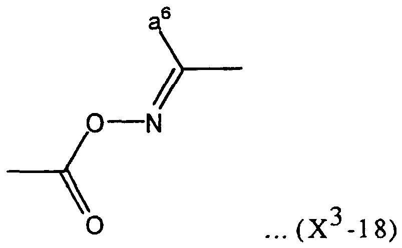 where a⁶ is any one of H, a methyl group, an ethyl group and CN ; 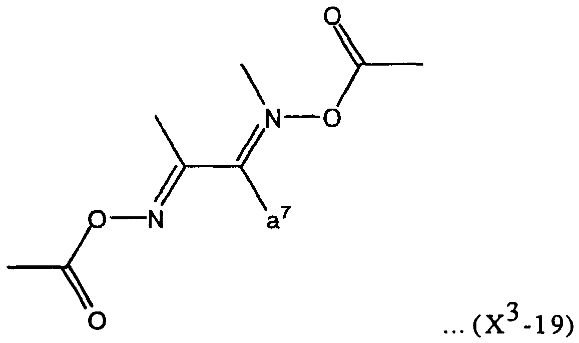 where a⁷ is an alkyl group;

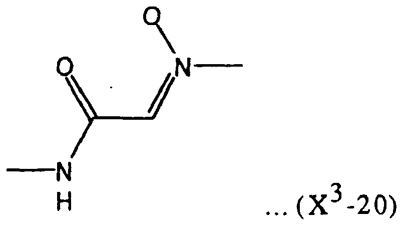

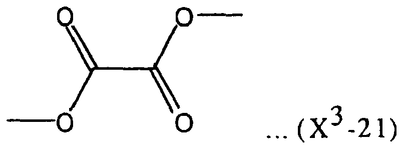

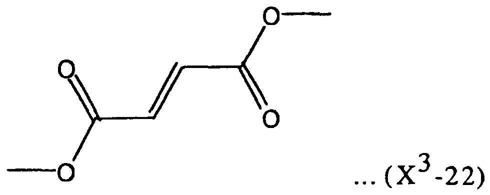

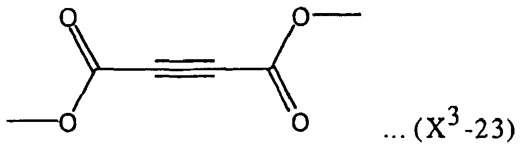

10. A magnetic recording medium according to claim 9, wherein Y¹ in general formula (C) is selected from cyclic structures expressed by the following general formulas (Y¹-1) to (Y¹-32): 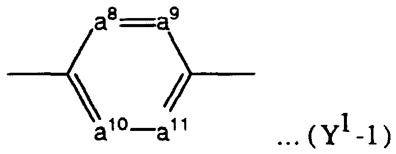 where each of a⁸, a⁹, a¹⁰ and a¹¹ is a carbon atom or a nitrogen atom; 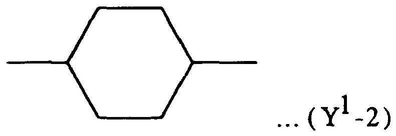 where either of bonds constituting the ring may be a double bond; 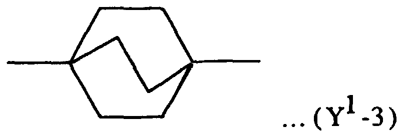 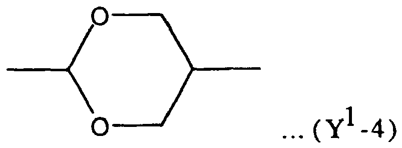 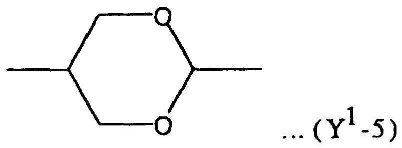 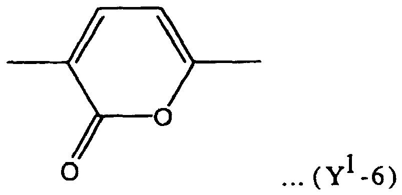 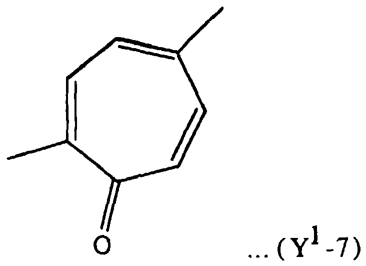 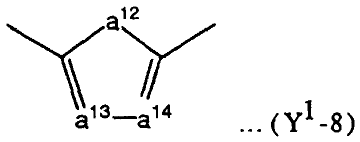 where a¹² is an oxygen atom or a sulfur atom and a¹³ and a¹⁴ are a carbon atom and a nitrogen atom, respectively; 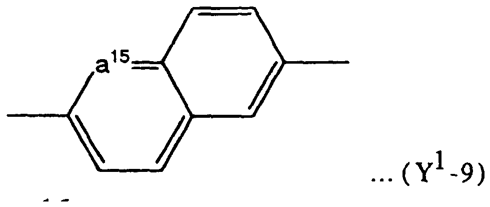 where a¹⁵ is a carbon atom or a nitrogen atom; 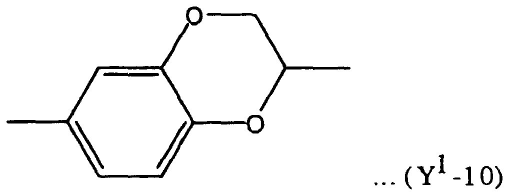 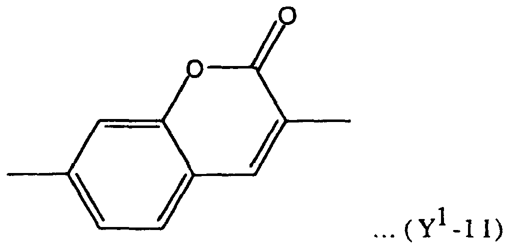 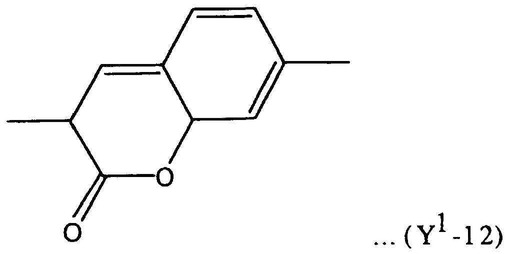 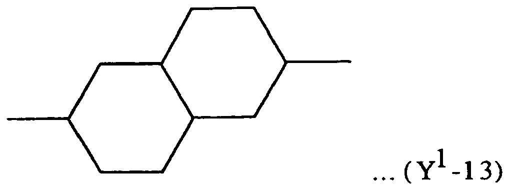 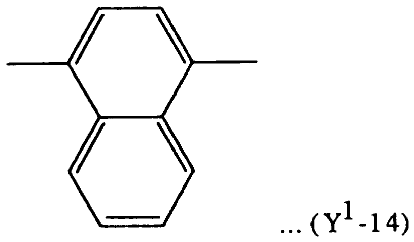 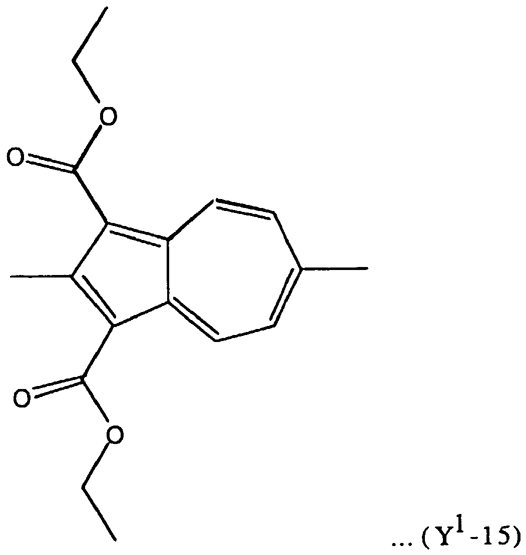 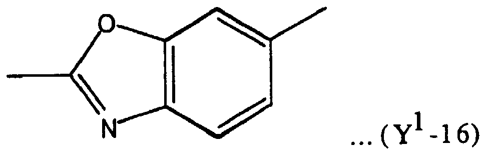 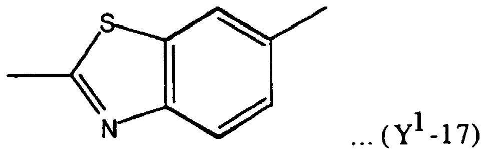 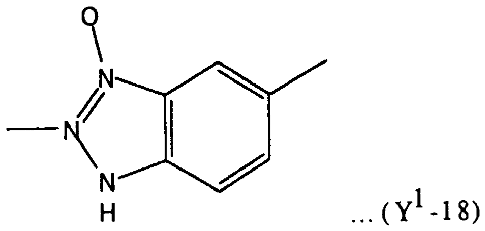 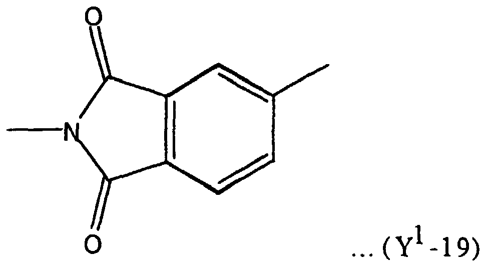 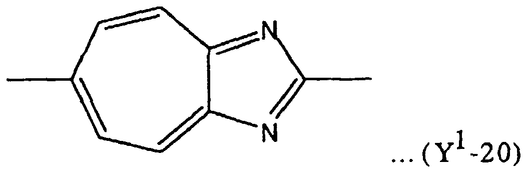 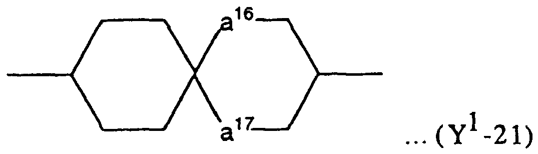 where each of a¹⁶ and a¹⁷ is any one of CH2, an oxygen atom or a sulfur atom; 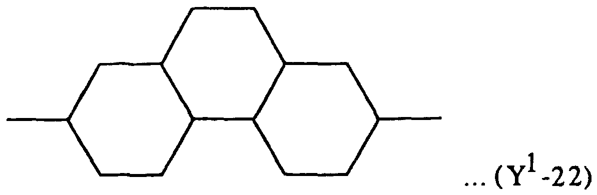 where the bond constituting the ring is a single bond or a double bond; 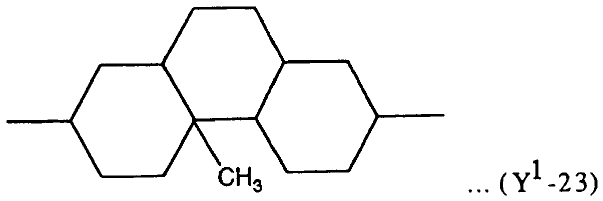 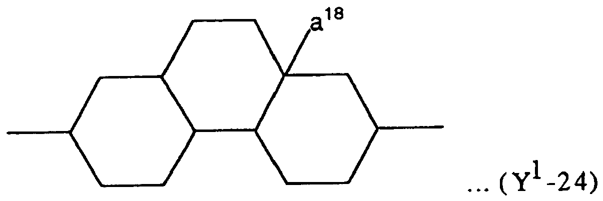 where a¹⁸ is a methyl group or a cyano group; 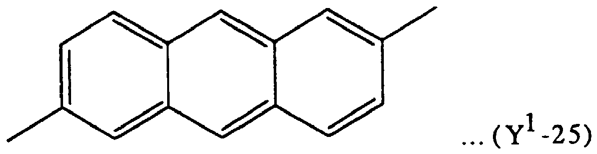 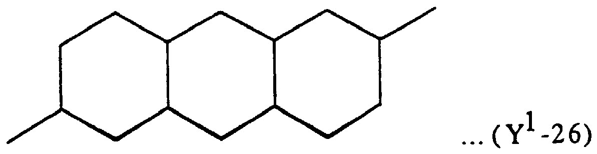 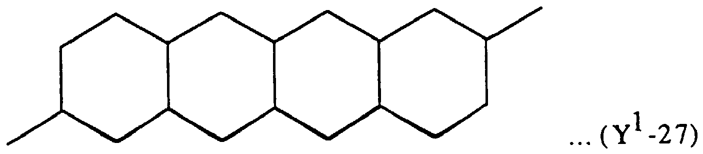 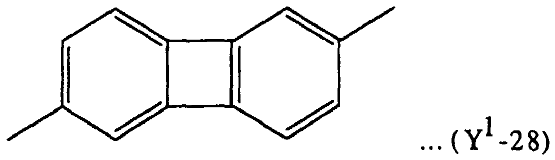 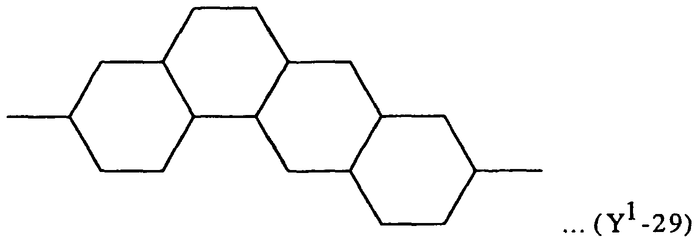 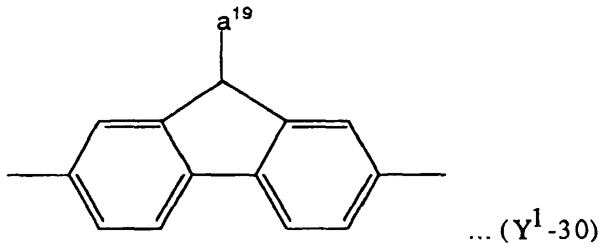 where a¹⁹ is any one of H, Br, CH3, NHR and NRR' and each of R and R' is an organic functional group; 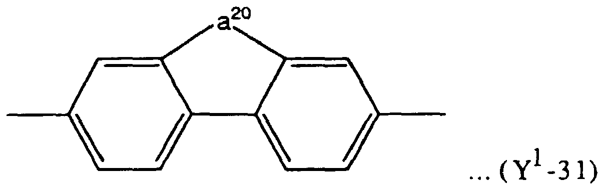 where a²⁰ is an oxygen atom or a sulfur atom;

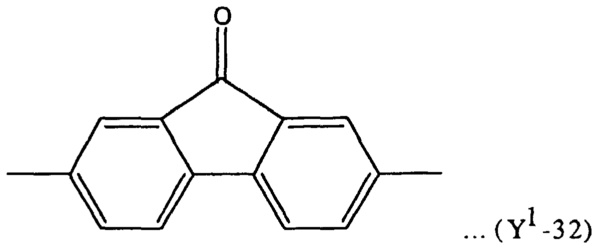

11. A magnetic recording medium according to claim 9, wherein Y² in general formula (C') is selected from cyclic structures expressed by any one of the following general formulas (Y²-1) to (Y²-3):

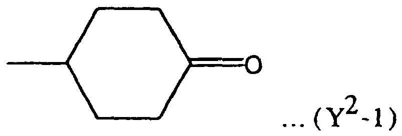

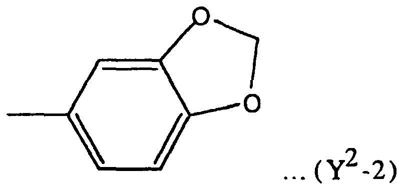

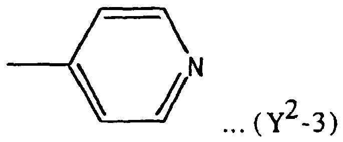

12. A magnetic recording medium according to claim 9, wherein Y³ or Y⁴ in general formula (C") is selected from cyclic structures expressed by any one of the following general formulas (Y³⁴-1) to (Y³⁴-3):

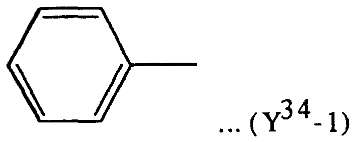

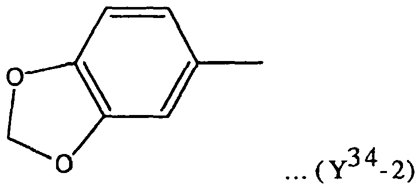

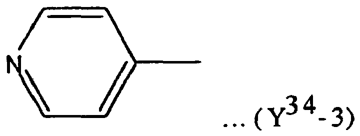

13. A magnetic recording medium comprising a non-magnetic support member on which at least a magnetic layer is formed, wherein
a lubricant containing a tricyclic liquid crystal molecule expressed by the following general formula (D) or general formula (D') is held in the outermost layer thereof:
L-W-X⁴-Y⁵ general formula (D)
where each of W, X⁴ and Y⁵ is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group and a hydroxyimino group, or an aryl group, an alkyl group, an oxycarboxyl group, a carboxyl group, a carbonyl group, an ether group, an amide group or an amino group replaced by any one of the foregoing groups;
L-W-X⁴-Y⁶-R general formula (D')
where each of W, X⁴ and Y⁶ is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group and a hydroxyimino group, or an aryl group, an alkyl group, an oxycarboxyl group, a carboxyl group, a carbonyl group, an ether group, an amide group or an amino group replaced by any one of the foregoing groups.

14. A magnetic recording medium according to claim 13, wherein W in general formula (D) or general formula (D') is selected from cyclic structures expressed by the following general formulas (W-1) to (W-7): 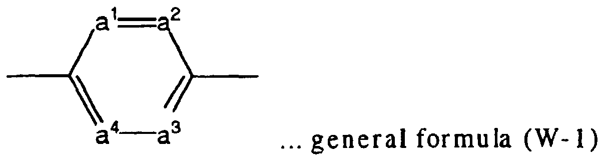 where each of a¹, a², a³ and a⁴ is a carbon atom or a nitrogen atom and the bond constituting the ring is a single bond or a double bond 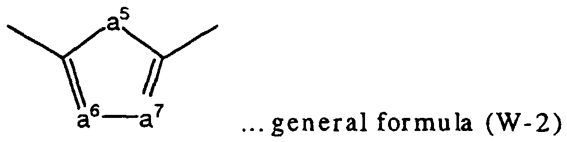 where a⁵ is an oxygen atom or a sulfur atom and each of a⁶ and a⁷ is a carbon atom or a nitrogen atom;

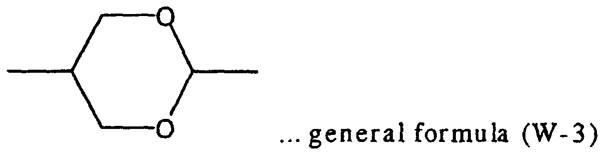

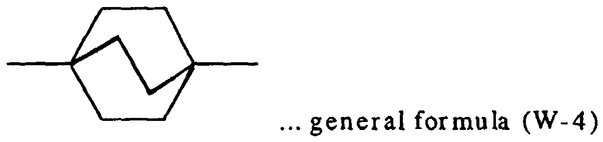

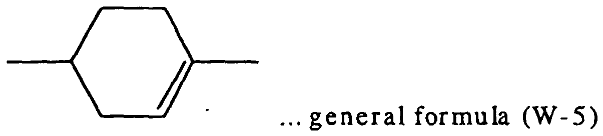

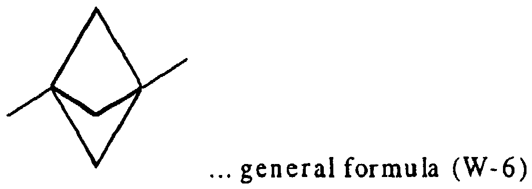

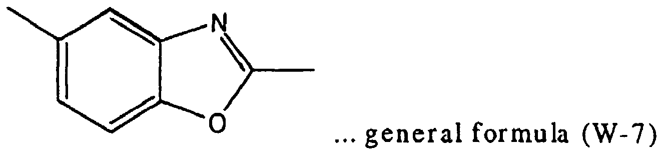

15. A magnetic recording medium according to claim 13, wherein X⁴ in general formula (D) or (D') is selected from cyclic structures expressed by the following general formulas (X⁴-1) to (X⁴-23): 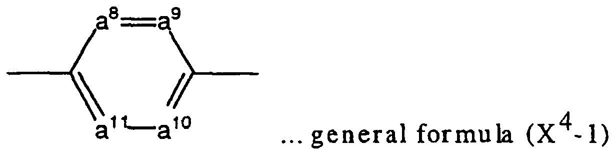 where each of a⁸, a⁹, a¹⁰ and a¹¹ is a carbon atom or a nitrogen atom; 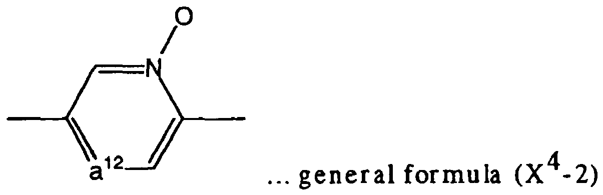 where a¹² is a carbon atom or a nitrogen atom; 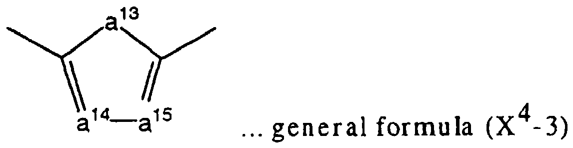 where a¹³ is any one of O, S, Se, Te or NH and each of a¹⁴ and a¹⁵ is a carbon atom or a nitrogen atom; 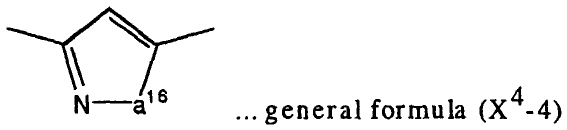 where a¹⁶ is O or NH; 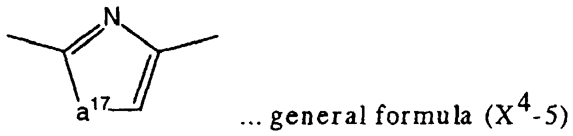 where a¹⁷ is an oxygen atom or a sulfur atom; 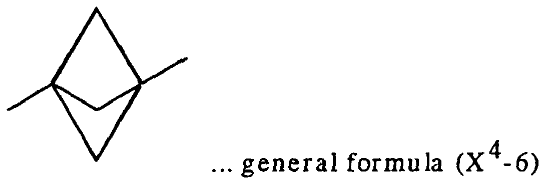 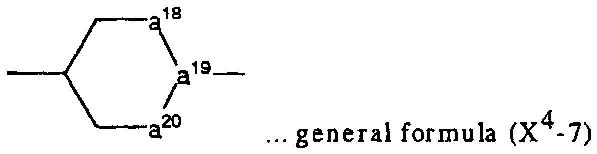 where each of a¹⁸ and a²⁰ is an oxygen atom or a sulfur atom and a¹⁹ is a carbon atom or a boron atom; 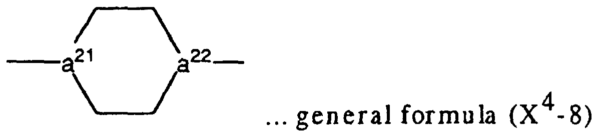 where each of a²¹ and a²² is a carbon atom or a nitrogen atom; 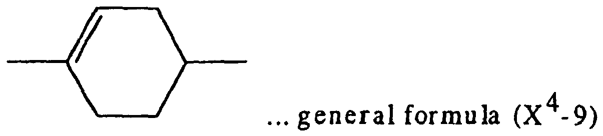 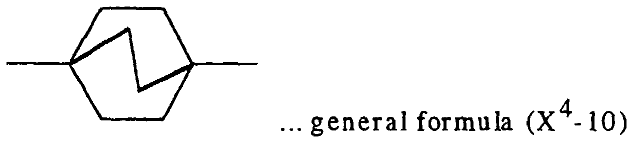 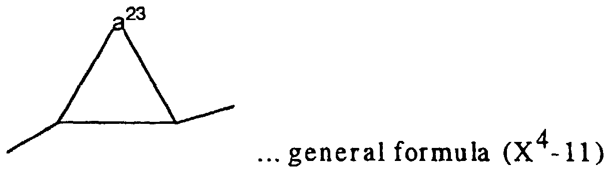 where a²³ is CH₂ or O; 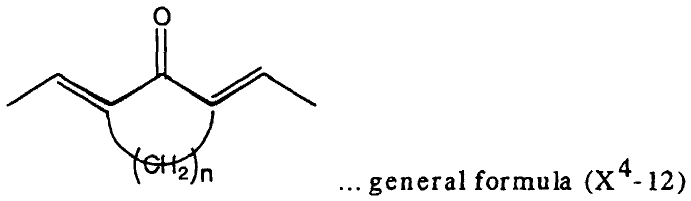 where n is any one of 2, 3 and 4; 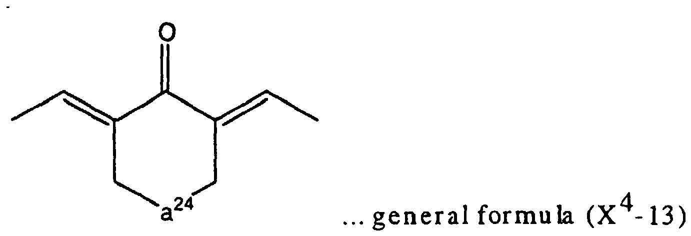 where a²⁴ is any one of O, S, NR and CHR (where R is an alkyl group);

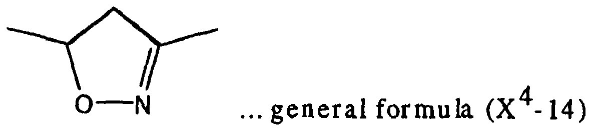

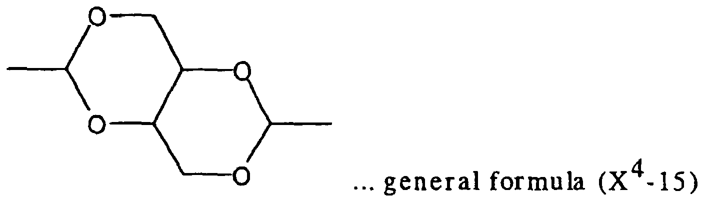

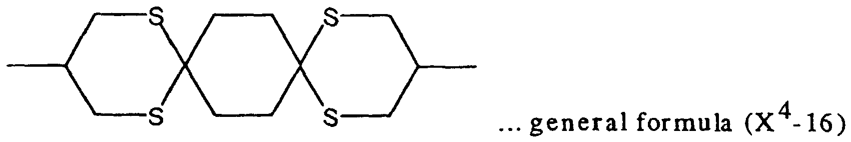

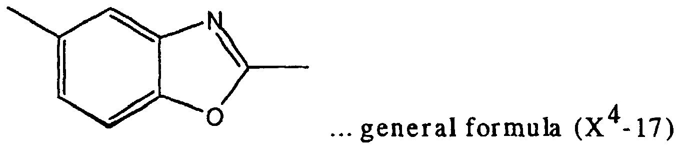

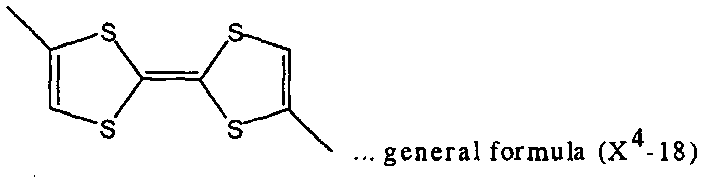

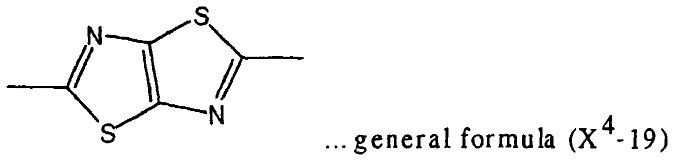

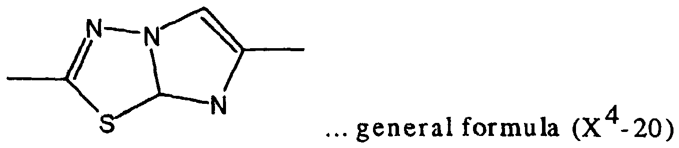

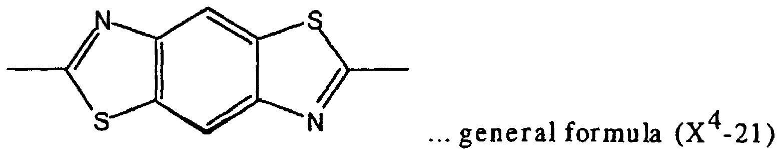

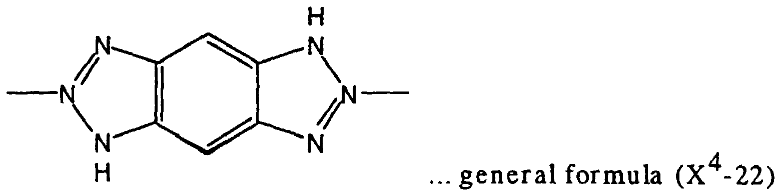

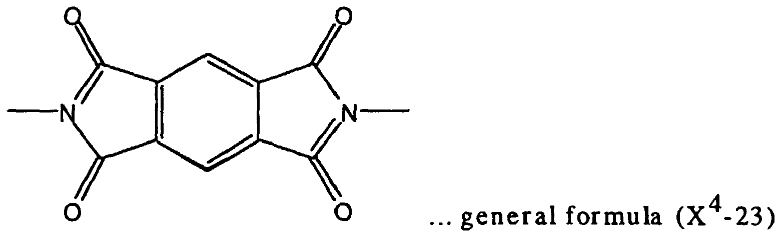

16. A magnetic recording medium according to claim 13, wherein Y⁵ in general formula (D) is selected from cyclic structures expressed by the following general formulas (Y⁵-1) to (Y⁵-5): 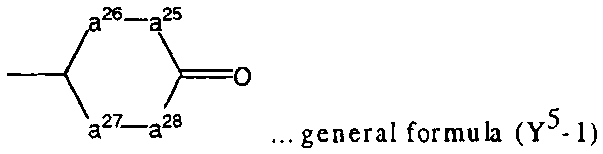 where each of a²⁵, a²⁶, a²⁷ and a²⁸ is a carbon atom or a nitrogen atom the bond constituting the ring is a single bond or a double bond;

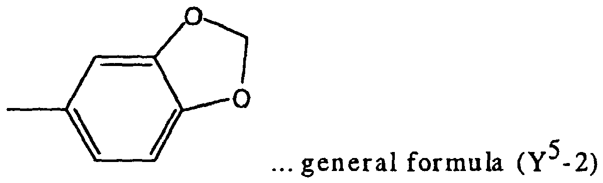

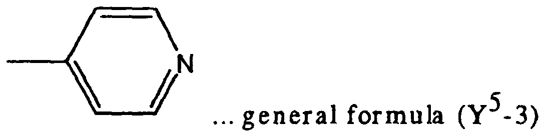

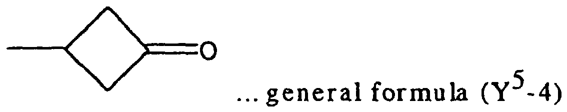

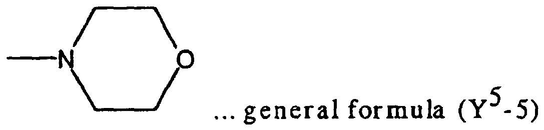

17. A magnetic recording medium according to claim 13, wherein Y⁶ in general formula (D') is selected from cyclic structures expressed by the following general formulas (Y⁶-1) to (Y⁶-32): 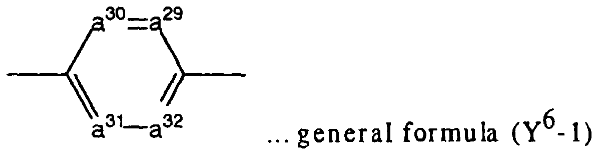 where each of a²⁹, a³⁰, a³¹ and a³² is a carbon atom or a nitrogen atom; 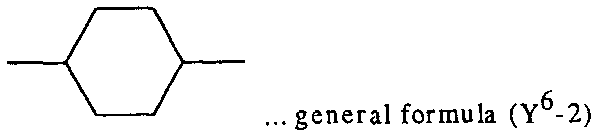 where an arbitrary one of the bonds constituting the ring may be a double bond; 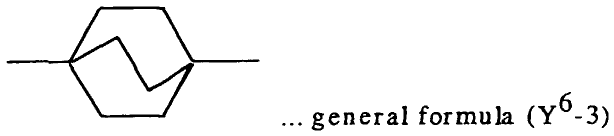 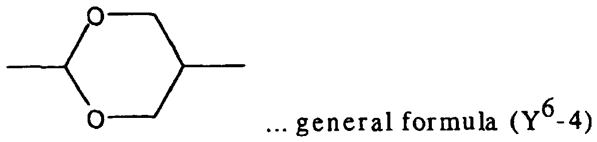 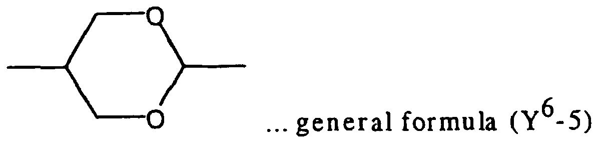 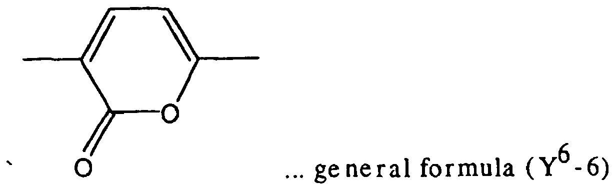 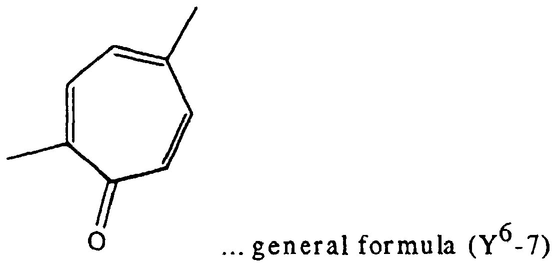 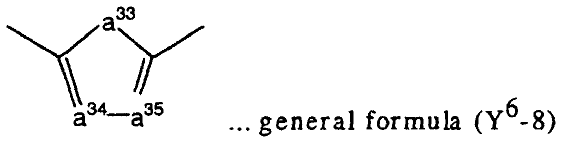 where a³³ is an oxygen atom or a sulfur atom and each of a³⁴ and a³⁵ is a carbon atom or a nitrogen atom; 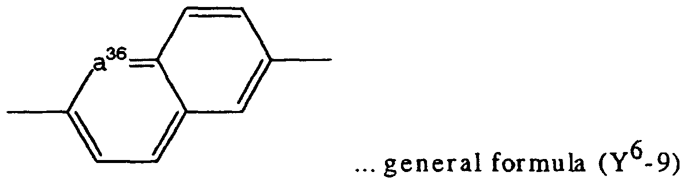 where a³⁶ is a carbon atom or a nitrogen atom; 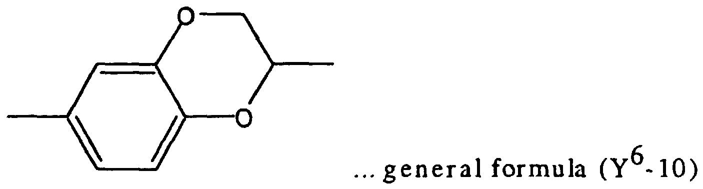 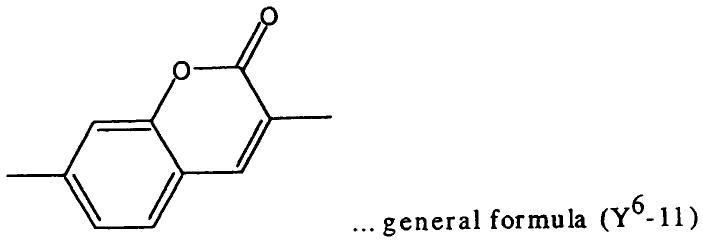 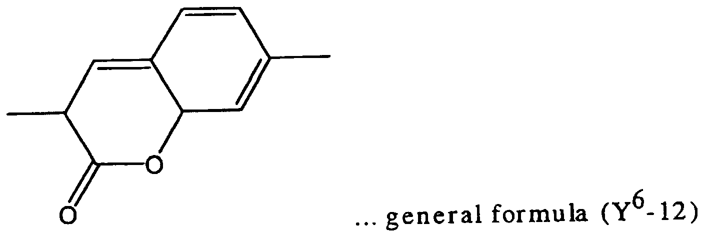 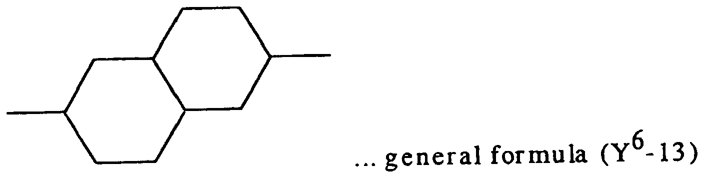 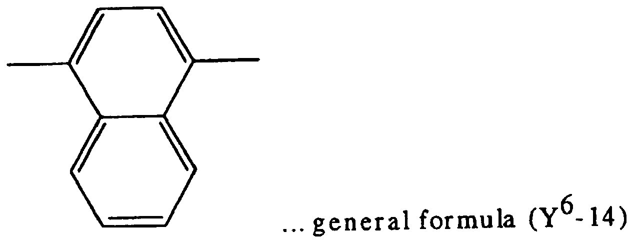 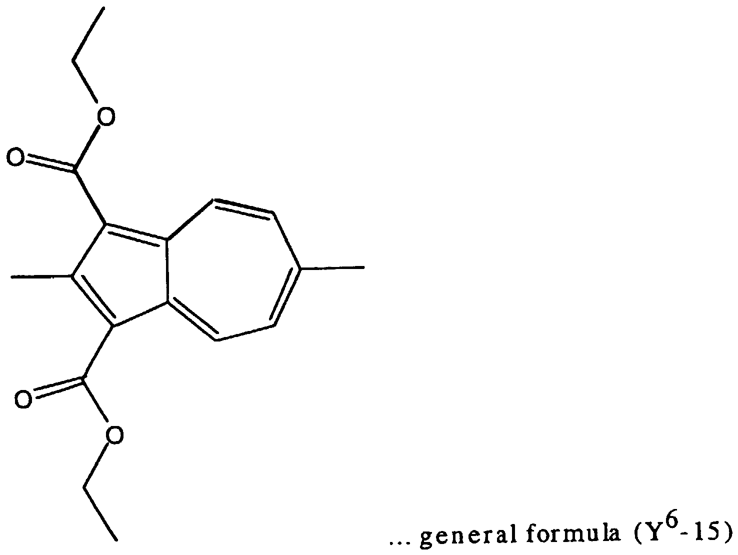 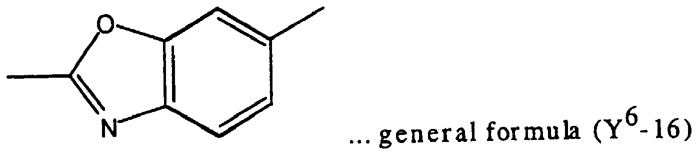 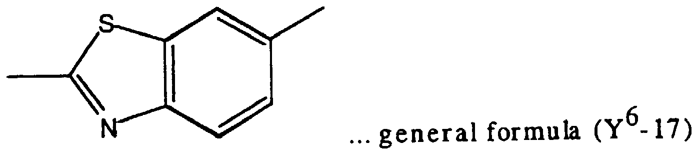 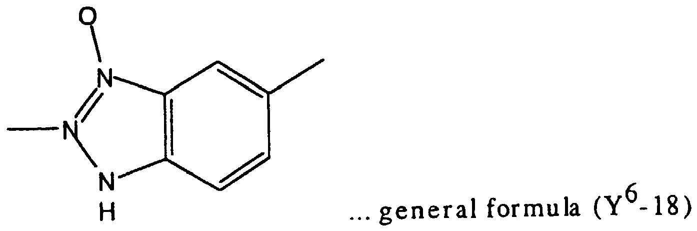 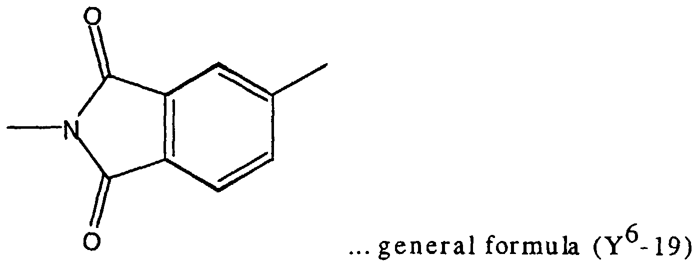 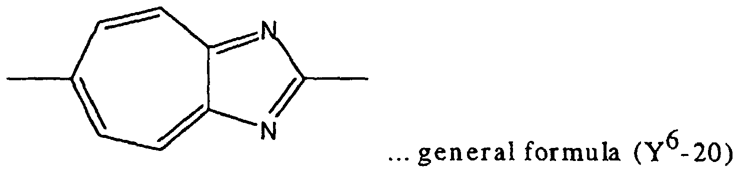 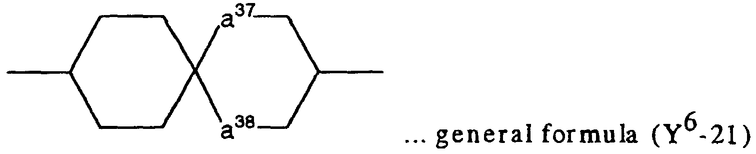 where each of a³⁷ and a³⁸ is any one of CH₂, O and S ; 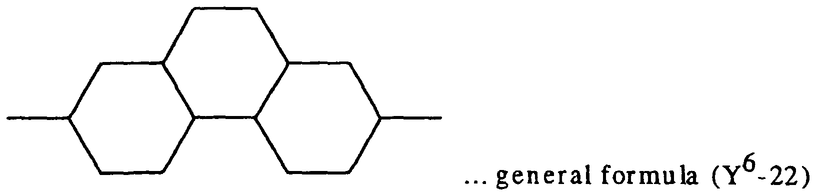 where the bond is a single bond or a double bond; 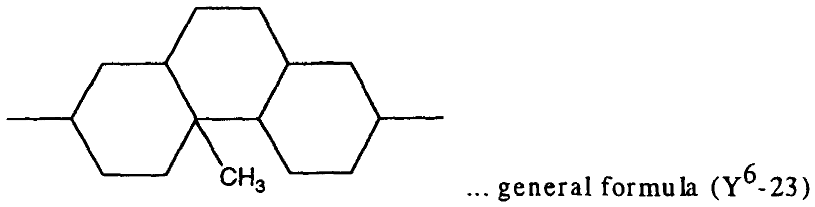 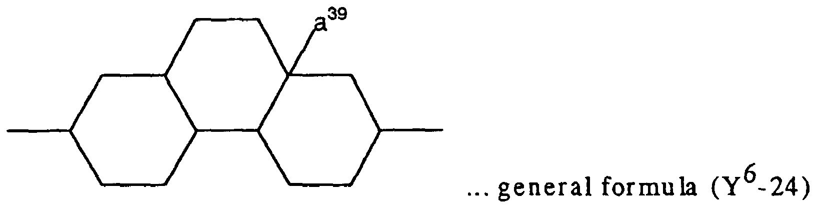 where a³⁹ is a methyl group or a cyano group; 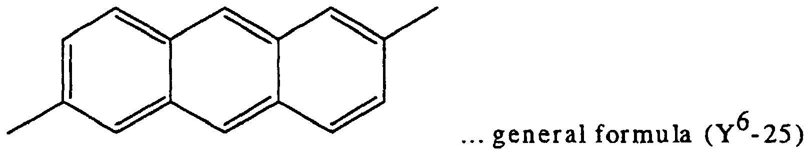 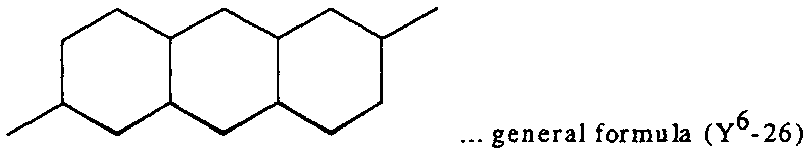 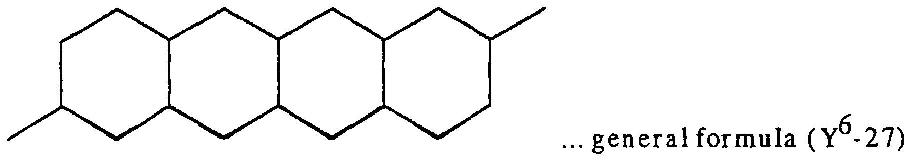 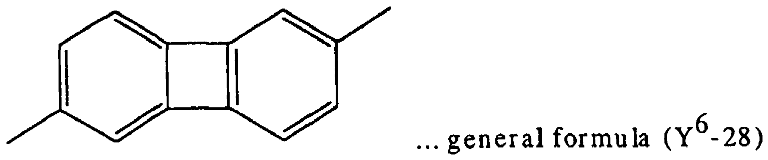 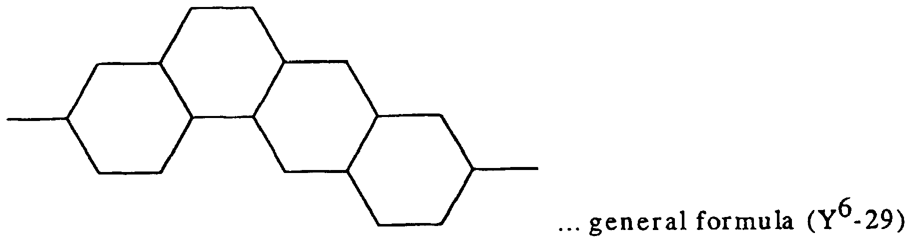 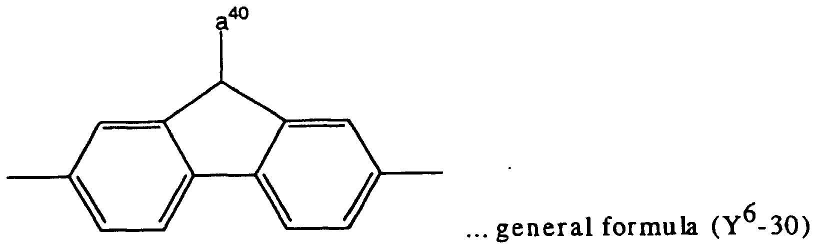 where a⁴⁰ is any one of H, Br, CH₃, NH₂, NHR and NRR'; 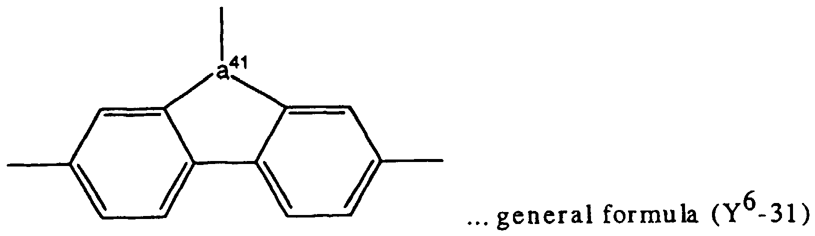 where a⁴¹ is an oxygen atom or a sulfur atom;

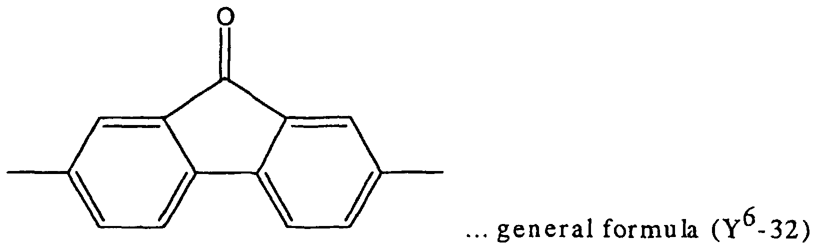

18. A magnetic recording medium according to any one of claims 1 to 17, wherein said lubricant is applied to the surface of said magnetic layer or added to the inside portion of said magnetic layer.

19. A magnetic recording medium according to any one of claims 1 to 17, wherein said magnetic layer is a thin metal magnetic film, a protective film is formed on said thin metal magnetic film, and
said lubricant is applied to the surface of said protective film.

20. A magnetic recording medium according to any one of claims 1 to 17, wherein
a backcoat layer is formed on the surface of said non-magnetic support member opposite to the surface on which said magnetic layer is formed, and
said lubricant is applied to the surface of said backcoat layer or added to the inside portion of said backcoat layer.

21. A magnetic recording medium according to any one of claims 1 to 17, wherein a non-magnetic layer is formed between said non-magnetic support member and said magnetic layer, and
said lubricant is added to the inside portion of said non-magnetic layer.

22. A magnetic recording/reproducing apparatus comprising a magnetic recording medium on which information is recorded and a magnetic head for recording and/or reproducing information to and from said magnetic recording medium and having a structure that a minimum distance between a geometric average surface of the surface of said magnetic recording medium and that of said magnetic head is 50 nm or smaller, wherein
said magnetic recording medium has an outermost layer disposed opposite to said magnetic head and holding a lubricant which contains a monocyclic liquid crystal molecule expressed by the following general formula (A) or general formula (A'):
L-X¹-R general formula (A)
where X¹ is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group and a hydroxyimino group, or an aryl group, an alkyl group, an oxycarboxyl group, a carboxyl group, a carbonyl group, an ether group, an amide group or an amino group replaced by any one of the foregoing groups;
L-X² general formula (A')
where X² is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups.

23. A magnetic recording/reproducing apparatus comprising a magnetic recording medium on which information is recorded and a magnetic head for recording and/or reproducing information to and from said magnetic recording medium and having a structure that a minimum distance between a geometric average surface of the surface of said magnetic recording medium and that of said magnetic head is 50 nm or smaller, wherein
said magnetic recording medium has an outermost layer disposed opposite to said magnetic head and holding a lubricant which contains a bicyclic liquid crystal molecule expressed by the following general formula (B) or general formula (B'):
L-X-Y¹ general formula (B)
where each of X and Y¹ is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups;
-L-X-Y²-R general formula (B')
where each of X and Y² is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups.

24. A magnetic recording/reproducing apparatus comprising a magnetic recording medium on which information is recorded and a magnetic head for recording and/or reproducing information to and from said magnetic recording medium and having a structure that a minimum distance between a geometric average surface of the surface of said magnetic recording medium and that of said magnetic head is 50 nm or smaller, wherein
said magnetic recording medium has an outermost layer disposed opposite to said magnetic head and holding a lubricant which contains a bicyclic liquid crystal molecule expressed by any one of the following general formulas (C), (C') and (C"): 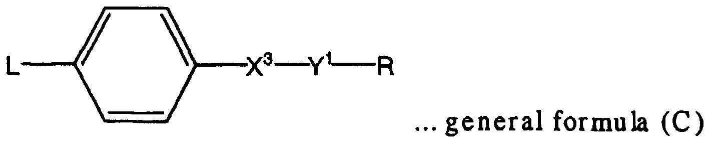 where X³ is an atomic group having a cyclic structure, Y¹ is an atomic group having a cyclic structure, and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups; 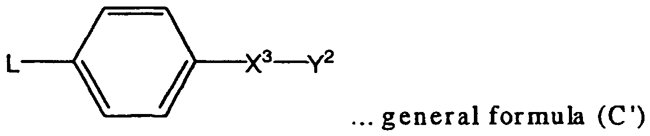 where X³ is an atomic group having a cyclic structure, Y² is an atomic group having a cyclic structure, and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups;
Y³-X³-Y⁴ general formula (C")
where X³ is an atomic group having a cyclic structure and each of Y³ and Y⁴ is an atomic group having a cyclic structure.

25. A magnetic recording/reproducing apparatus comprising a magnetic recording medium on which information is recorded and a magnetic head for recording and/or reproducing information to and from said magnetic recording medium and having a structure that a minimum distance between a geometric average surface of the surface of said magnetic recording medium and that of said magnetic head is 50 nm or smaller, wherein
said magnetic recording medium has an outermost layer disposed opposite to said magnetic head and holding a lubricant which contains a tricyclic liquid crystal molecule expressed by the following general formulas (D) or general formula (D'):
L-W-X⁴-Y⁵ general formula (D)
where each of W, X⁴ and Y⁵ is an atomic group having a cyclic structure and L is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups;
L-W-X⁴-Y⁶-R general formula (D')
where each of W, X⁴ and Y⁶ is an atomic group having a cyclic structure and each of L and R is any one of a cyano group, a nitro group, an aldehyde group, a hydroxy group, an amino group, an amide group, an ether group, a carbonyl group, a carboxyl group, an oxycarboxyl group, a halogen group, an alkyl group, an aryl group, a hydroxyimino group, or an aryl group, an alkyl group, an oxycarboxyl group, a carboxyl group, a carbonyl group, an ether group, an amide group or an amino group replaced by any one of the foregoing groups.
